(19) Europäisches Patentamt

European Patent Office

Office européen des brevets

(11) **EP 1 600 972 A1**

(12) **EUROPEAN PATENT APPLICATION**

(43) Date of publication:
**30.11.2005 Bulletin 2005/48**

(51) Int Cl.⁷: **G11B 27/10**

(21) Application number: **05104096.2**

(22) Date of filing: **17.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.05.2004 JP 2004152167**

(71) Applicant: **KABUSHIKI KAISHA TOSHIBA
Tokyo (JP)**

(72) Inventors:
• **Tsumagari, Yasufumi
  Minato-ku Tokyo, 105-8001 (JP)**
• **Mimura, Hideki
  Minato-ku Tokyo, 105-8001 (JP)**
• **Taira, Kazuhiko
  Minato-ku Tokyo, 105-8001 (JP)**
• **Yamagata, Yoichiro
  Minato-ku Tokyo, 105-8001 (JP)**

(74) Representative: **Henkel, Feiler & Hänzel
Möhlstrasse 37
81675 München (DE)**

(54) **Information recording medium, methods of recording/playback information onto/from recording medium**

(57)     An information playback method includes playing back a playback sequence from an information recording medium (1) having a data area (12) including a management area (30) storing management information and an object area (40) storing an object managed by the management information, and a file information area (11) which stores file information corresponding to a recording content of the data area, the object area (40) storing a first object whose playback is managed in logical units as a program chain and a second object whose playback is managed separately from the first object, and the management area (30) storing a playback sequence defining a playback condition of the second object, and playing back at least one of the first and second objects in accordance with the playback sequence.

FIG. 1

**Description**

The present invention relates to an information recording medium such as an optical disk and methods of recording/playback information onto/from the information recording medium.

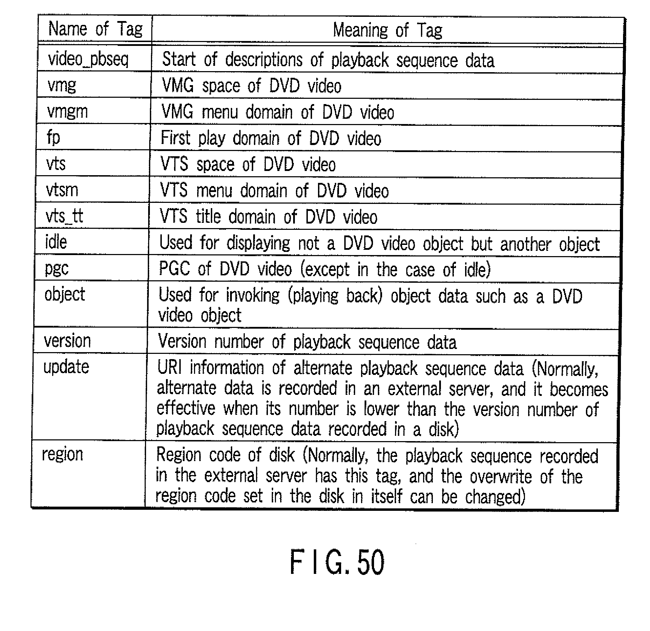

In recent years, DVD-Video disks providing high image quality and advanced functions, and video players that play back such disks have prevailed, and the range of choice for peripheral devices and the like used to play back multi-channel audio so provided has broadened. An environment that allows users to personally implement a home theater and freely enjoy movies, animations, and the like with high image quality and high sound quality at home has become available. As described in Jpn. Pat. Appln. KOKAI Publication No. 10-50036 (p. 18 to 20, FIGS. 50 to 57), a playback apparatus which can superimpose various menus by changing, e.g., text colors for playback of video pictures from a disk has been proposed.

However, in recent years, along with the improvement of image compression techniques, a demand has arisen for realization of higher image quality from both users and content providers. In addition to realization of higher image quality, the content providers require an environment that can provide more attractive contents to users by upgrading and expanding the contents (e.g., more colorful menus, improvement of interactiveness, and the like) in contents such as menu windows, bonus video pictures, and the like as well as the title itself. Furthermore, some users require to freely enjoy contents by playing back still image data sensed by the user, subtitle text data acquired via the Internet, and the like by freely designating their playback positions, playback regions, or playback times.

To meet such requirements, it is desired to provide a technique that can implement colorful expressions which display buttons with still pictures or small animations at arbitrary positions and arbitrary sizes on the screen together with background audio playback, and highlight such buttons, and can form attractive contents.

According to one aspect of the present invention, there is provided an information recording medium for use in playback information recorded thereon, characterized by comprising a data area including a management area storing management information and an object area storing an object managed by the management information; a file information area which stores file information corresponding to a recording content of the data area; the object area storing a first object whose playback is managed in logical units as a program chain and a second object whose playback is managed separately from the first object; and the management area storing a playback sequence defining a playback condition of the second object.

According to another aspect of the present invention, there is provided an information playback method, comprising playing back a playback sequence from an information recording medium having a data area including a management area storing management information and an object area storing an object managed by the management information, and a file information area which stores file information corresponding to a recording content of the data area, the object area storing a first object whose playback is managed in logical units as a program chain and a second object whose playback is managed separately from the first object, and the management area storing a playback sequence defining a playback condition of the second object; and playing back at least one of the first and second objects in accordance with the playback sequence.

According to still another aspect of the present invention, there is provided an information recording method, comprising an information recording method applied to an information recording medium having a data area including a management area storing management information and an object area storing an object managed by the management information, and a file information area which stores file information corresponding to a recording content of the data area, the method characterized by comprising recording on the object area, a first object whose playback is managed in logical units as a program chain and a second object whose playback is managed separately from the first object; and recording on the management area, a playback sequence defining a playback condition of the second object.

This summary of the invention does not necessarily describe all necessary features so that the invention may also be a sub-combination of these described features.

The invention can be more fully understood from the following detailed description when taken in conjunction with the accompanying drawings, in which:

FIG. 1 shows an example of the data structure of recording information on an information recording medium according to an embodiment of the present invention;
FIG. 2 shows an example of the file/directory structure according to the embodiment of the present invention;
FIG. 3 shows an example of the detailed data structure of a video manager information area indicated by symbol e in FIG. 1;
FIG. 4 shows an example of the detailed data structure of a video title set information area indicated by symbol f in FIG. 1;
FIG. 5 shows an example of the data structure in a video title set program chain information table shown in FIG. 4;
FIG. 6 shows an example of the data structure in program chain information of VMGM_PGCI stored in video manager menu PCGI unit table information shown in FIG. 3 or of VTS_PGCI stored in the video title set program chain information table shown in FIG. 4;

FIG. 7 shows a sequel to the data structure in the program chain information shown in FIG. 6;

FIG. 8 is a block diagram showing an example of a system of a reference profile;

FIG. 9 shows an example of a contents image of an expanded profile as a matrix;

FIG. 10 is a block diagram showing an example of a system of the expanded profile;

FIG. 11 is a block diagram showing an example of details of some system blocks shown in FIG. 10;

FIG. 12 shows an example of a playback image to be played back by a playback apparatus according to the embodiment of the present invention;

FIG. 13 shows another example of a playback image to be played back by the playback apparatus according to the embodiment of the present invention;

FIG. 14 shows still another example of a playback image to be played back by the playback apparatus according to the embodiment of the present invention;

FIG. 15 shows yet another example of a playback image to be played back by the playback apparatus according to the embodiment of the present invention;

FIG. 16 shows an example of the screen configuration in the reference profile;

FIG. 17 shows an example of the screen configuration in the expanded profile;

FIG. 18 shows a description example of a playback sequence file;

FIG. 19 shows a configuration example of a screen on which a graphics object is appended to DVD-Video contents;

FIG. 20 shows a configuration example of a screen on which an audio object is appended to the designated DVD-Video contents;

FIG. 21 shows a configuration example of a screen on which a Vclick object is appended to the designated DVD-Video contents;

FIG. 22 shows a configuration example of a screen on which a Vclick object is appended to the designated DVD-Video contents;

FIG. 23 shows the relationship between additional objects and the DVD-Video contents described in the description example of the playback sequence shown in FIG. 18;

FIG. 24 shows other description examples different from that of the playback sequence file shown in FIG. 18;

FIG. 25 shows a configuration example of a screen by a description associated with PGC#3 shown in FIG. 24;

FIG. 26 shows a configuration example of a screen by a description associated with PGC#4 shown in FIG. 24;

FIG. 27 shows a configuration example of a screen by a description associated with PGC#4 shown in FIG. 24;

FIG. 28 shows a configuration example of a screen by a description associated with PGC#5 shown in FIG. 24;

FIG. 29 shows a configuration example of a screen by a description associated with PGC#5 shown in FIG. 24;

FIG. 30 shows a configuration example of a screen by a description associated with PGC#6 shown in FIG. 24;

FIG. 31 shows a configuration example of a screen by a description associated with PGC#6 shown in FIG. 24;

FIG. 32 shows a configuration example of a screen by a description associated with PGC#7 shown in FIG. 24;

FIG. 33 shows a configuration example of a screen by a description associated with PGC#7 shown in FIG. 24;

FIG. 34 shows a configuration example of a screen by a description associated with PGC#7 shown in FIG. 24;

FIG. 35 shows PGCs of the DVD-Video contents and flash objects appended in correspondence with their attributes;

FIG. 36 is a flowchart for explaining a startup processing sequence according to the embodiment of the present invention;

FIG. 37 shows an example of a layout image in the reference profile;

FIG. 38 shows another example of a layout image in the reference profile;

FIG. 39 is a schematic block diagram showing the arrangement of a streaming apparatus (network compatible disk player) according to the embodiment of the present invention.

FIG. 40 is a view for explaining the relationship between an object region and object region data according to the embodiment of the present invention;

FIG. 41 is a view for explaining an example of the data structure of an access unit of object meta data according to the embodiment of the present invention;

FIG. 42 is a view for explaining an example of the data structure of an access unit of object meta data according to another embodiment of the present invention;

FIG. 43 is a view for explaining an example of the data structure of an access unit of object meta data according to still another embodiment of the present invention;

FIG. 44 is a view for explaining an example of the configuration of a Vclick access table according to an embodiment of the present invention;

FIG. 45 is a view for explaining an example of the structure of an enhanced DVD video disc according to an embodiment of the present invention;

FIG. 46 is a view for explaining an example of the directory structure in the enhanced DVD video disc according to an embodiment of the present invention;

FIG. 47 is a view for explaining a configuration example of Vclick information according to an embodiment of the present invention;

FIG. 48 is a view for explaining another configuration example of Vclick information according to an embodiment of the present invention;

FIG. 49 is a flowchart illustrating an example of an information recording method using the information recording medium shown in FIG. 1;

FIG. 50 is a list of tags usable in the embodiment of the present invention; and

FIGS. 51A and 51B are lists of attributes usable in the embodiment of the present invention.

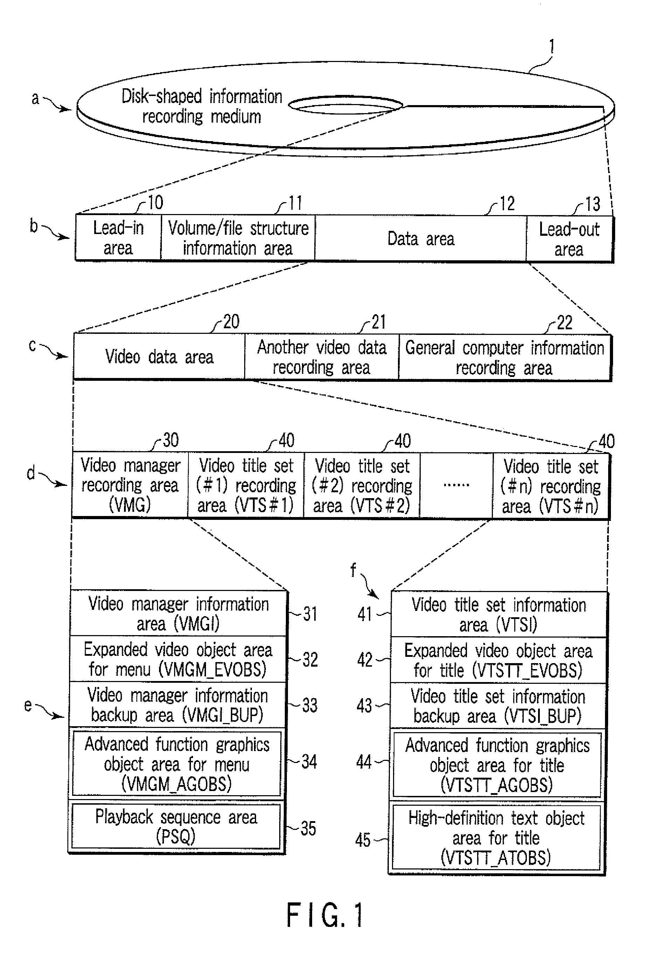

An information recording medium and its playback apparatus according to an embodiment of the present invention will be described hereinafter with reference to the accompanying drawings. FIG. 1 shows an example of the data structure of recording information on an information recording medium according to an embodiment of the present invention. Symbol a in FIG. 1 denotes a disk-shaped information recording medium (optical disk complying with the existing or a future DVD standard) 1. Details of information recorded on this disk 1 are indicated by reference symbols b to f in FIG. 1.

Information recorded on the disk 1 occupies a lead-in area 10, volume/file structure information area 11, data area 12, and lead-out area 13 from the inner periphery side, as indicated by symbol b in FIG. 1. The information recording medium of this embodiment adopts the ISO9660 and UDF bridge structures as a file system, and has the volume/file structure information area 11 in a part of the data area 12. The data area 12 allows mixed allocation of a video data recording area 20, another video data recording area 21, and general computer information recording area 22, as indicated by symbol c in FIG. 1.

The video data recording area includes a video manager recording area (Video Manager (VMG)) 30 that records management information associated with the entire DVD-Video contents recorded in the video recording area 20, and a video title set recording areas (Video Title Set (VTS)) 40 which are arranged for respective titles, and record management information and video information (video objects) for respective titles together, as indicated by symbol d in FIG. 1.

The video manager recording area (VMG) 30 includes a video manager information area (Video Manager Information (VMGI)) 31 that indicates management information associated with the overall video data recording area 20, an expanded video object area (VMGM_EVOBS) 32 for a menu, and a video manager information backup area (VMGI_BUP) 33 that records the same information as in the video manager information area (VMGI) 31 as a backup of the video manager information area (VMGI) 31, as indicated by symbol e in FIG. 1.

In addition to the above areas, the video manager recording area (VMG) 30 includes an advanced function graphics object area (VMGM_AGOBS) 34 for a menu, which allows playback of button layout, button highlight indication, background audio, effect sound, moving picture, and animation, and a playback sequence (PSQ) area 35 which specifies playback control of objects other than expanded video objects (EVOBs).

One video title set recording area (VTS) 40 that records management information and video information (video objects) together for each title includes a video title set information area (VTSI) 41 which records management information for all contents in the video title set recording area (VTS) 40, an expanded video object area (VTSTT_EVOBS) 42 for a title, which records video object data (video information of a title) in this video title set, and a video title set information backup area (VTSI_BUP) 43 which records the same information as in the video title set information area (VTSI) 41 as backup data of the video title set information area (VTSI) 41, as indicated by symbol f in FIG. 1.

Furthermore, each video title set recording area 40 includes an advanced function graphics object area (VTSTT_AGOBS) 44 for a title that allows playback of button layout, button highlight indication, background audio, effect sound, moving picture, and animation, and a high definition text object (VTSTT_ATOBS) 45 which can be played back as a subtitle.

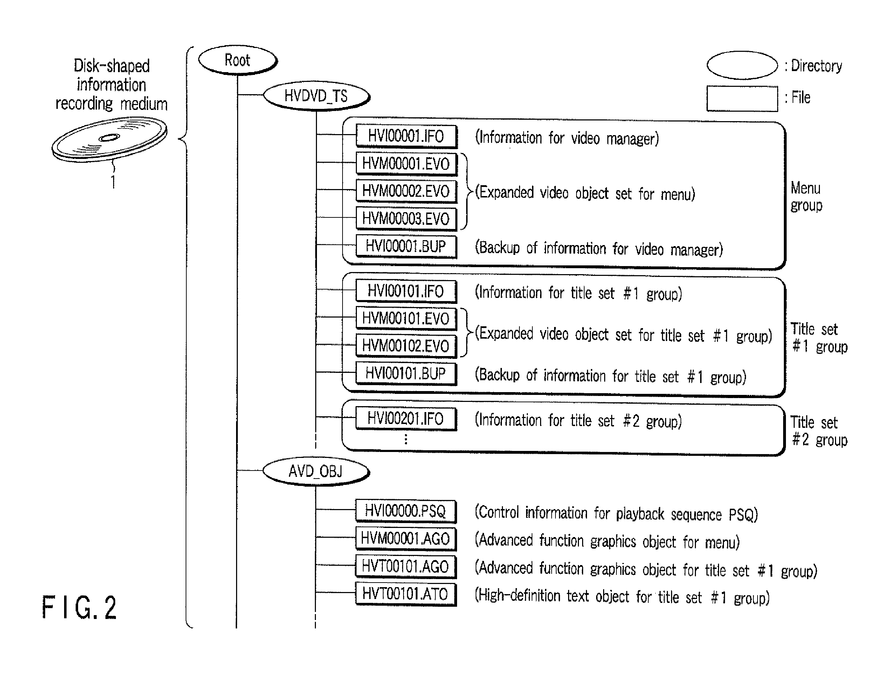

FIG. 2 shows an example of the file/directory structure according to this embodiment. As shown in FIG. 2, files stored on the disk as the information recording medium 1 are managed by the file system such as ISO9660, UDF, or the like. An HVDVD_TS directory for storing information files that handle high-definition video data, and an ADV_OBJ directory for storing information files that handle advanced object data are allocated under a root directory.

The HVDVD_TS directory basically includes a group of files which belong to a menu group used for a menu, and groups of files which belong to title set groups used for titles. As the group of files that belong to the menu group, an information file (HVI00001.IFO) for a video manager, its backup file (HVI00001.BUP), and playback data files (HVM00001.EVO to HVM00003.EVO) of expanded video object sets for a menu used as background frames of a menu are stored.

Furthermore, as the group of files that belong to a title set #n group, an information file (HVIxxx01.IFO: xxx = 001 to 999) for a video title set having information used to manage a title set #n, its backup file (HVIxxx01.BUP: xxx = 001 to 999), playback data files (HVTxxxyy.EVO: xxx = 001 to 999, yy = 01 to 99) of expanded video object sets for the title set #n used as a title are stored.

The ADV_OBJ directory stores control information files (HVI....PSQ) for the playback sequence PSQ, advanced function graphics object files (HVM....AGO) for a menu (this object can be formed using a technique such as Macromedia Flash(R) or the like, which forms contents by combining audio data and vector graphics animation data), advanced function graphics object files (HVT....AGO) for respective title set (#1 to #n) groups (this object can also be formed using Macromedia Flash(R) or the like), and advanced function text object files (HVT....ATO) for respective title set (#1 to #n) groups (this object can be formed using Open Type fonts, True Type fonts, and the like).

Note that the playback data file (e.g., HVM00001.AGO) of the advanced function graphics object for a menu can be mixed to the playback data files (HVM00001.EVO to HVM00003.EVO), which belong to the menu group in the HVDVD_TS directory, by $\alpha$ blend. This mixing allows button layout and button highlight indication on the screen, and also allows playback of a small animation with background audio.

Note that the $\alpha$ blend mixes RGB data with a transparency $\alpha$, and can superimpose an image on another image so that a lower image can be seen. "$\alpha$" in this case indicates the contrast of an upper image to be superimposed on a lower image to the lower image. For example, when $\alpha$ = 100%, the upper image is displayed to completely cover the lower image; when $\alpha$ = 0%, the upper image to be superimposed disappears. For example, when $\alpha$ is around 50%, the upper image to be superimposed is displayed as a translucent image on the lower image.

Each playback data file (HVTxxxyy.AGO: xxx = 001 to 999, yy = 01 to 99) of the advanced graphics object can be mixed to the playback data files (HVTxxxyy.EVO: xxx = 001 to 999, yy = 01 to 99), which belong to the title set #n group in the HVDVO_TS directory, by $\alpha$ blend. This mixing allows button layout and button highlight indication on the screen and also allows playback of small animation with background audio together with title contents.

Each playback data file (HVTxxxyy.ATO: xxx = 001 to 999, yy = 01 to 99) of the high-definition text object can be played back in place of sub-picture data which is recorded in the expanded video object set for the title set #n and is used as a subtitle (or together with sub-picture data as needed). By playing back this high-definition text object, a high-definition subtitle can be superimposed on the lower image (main picture) (since the high-definition subtitle can be displayed, not only fine subtitle characters can be displayed, but also many characters can be displayed within a limited display space).

Each control information file (HVI00000.PSQ) for the playback sequence PSQ, which defines the playback sequence in advance, describes the playback conditions (timings, positions, sizes, and the like) and/or user action conditions (operation regulations, valid period, and the like) of advanced function graphics objects (.AGO extension) and high-definition text objects (.ATO extension), which can be played back together with the expanded video object sets (.EVO extension). This description can use a language such as extended markup language (XML), Java(R), and the like.

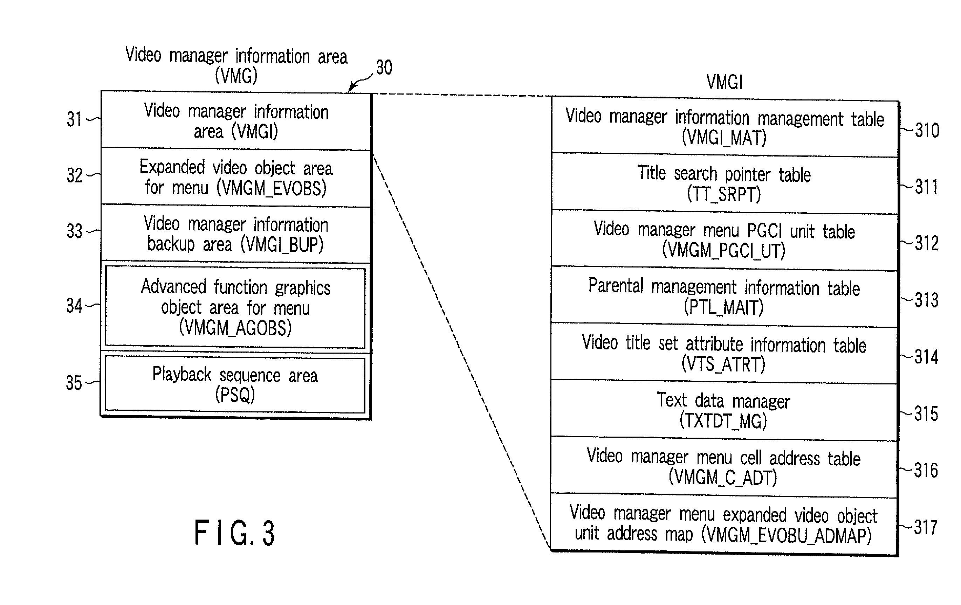

FIG. 3 shows the detailed data structure in the video manager information area (VMGI) 31 indicated by symbol e in FIG. 1. As shown in FIG. 3, the video manager information area (VMGI) 31 has video manager information management table (VMGI_MAT) information 310 that records management information common to data recorded in the video data recording area 20 and to the entire DVD-Video contents together, title search pointer table (TT_SRPT) information 311 that records information helpful to search for (to detect the start positions of) titles present in the DVD-Video contents, video manager menu PGCI unit table (VMGM_PGCI_UT) information 312 that records management information of a menu screen, which is separately allocated for each menu description language code used to display a menu, parental management information table (PTL_MAIT) information 313 that records information for managing pictures fit or unfit for children to see as parental information, video title set attribute information table (VTS_ATRT) information 314 that records attributes of title sets together, text data manager (TXTDT_MG) information 315 that records text information to be displayed for the user together, video manager menu cell address table (VMGM_C_ADT) information 316 that records information helpful to search for the start address of a cell that forms the menu screen, and video manager menu expended video object unit address map (VMGM_EVOBU_ADMAP) information 317 that records address information of VOBU which indicates a minimum unit of video objects that form the menu screen.

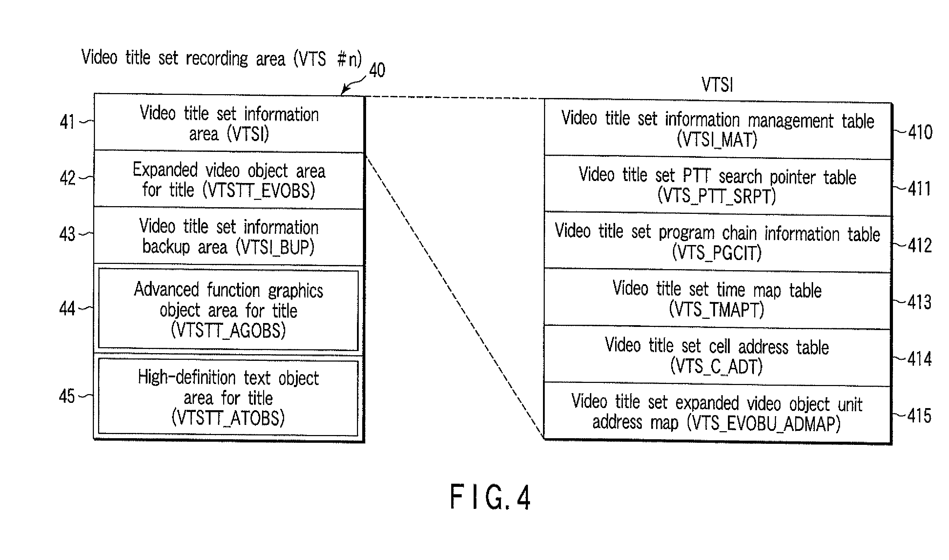

FIG. 4 shows the detailed data structure in the video title set information area (VTSI) 41 indicated by symbol f in FIG. 1. As shown in FIG. 4, the video title set information area (VTSI) 41 is divided into respective areas (management information groups): a video title set information management table (VTSI_MAT) 410, video title set PTT search pointer table (VTS_PTT_SRPT) 411, video title set program chain information table (VTS_PGCIT) 412, video title set time map table (VTS_TMAPT) 413, video title set cell address table (VTS_C_ADT) 414, and video title set expanded video object unit address map (VTS_VOBU_ADMAP) 415.

The video title set information management table (VTSI_MAT) 410 records management information common to a video title set of interest. Since this common management information is allocated in the first area (management information in the video title set information area (VTSI) 41, the common management information in the video title set can be immediately loaded, the playback control process of the information playback apparatus can be simplified, and its control processing time can be shortened.

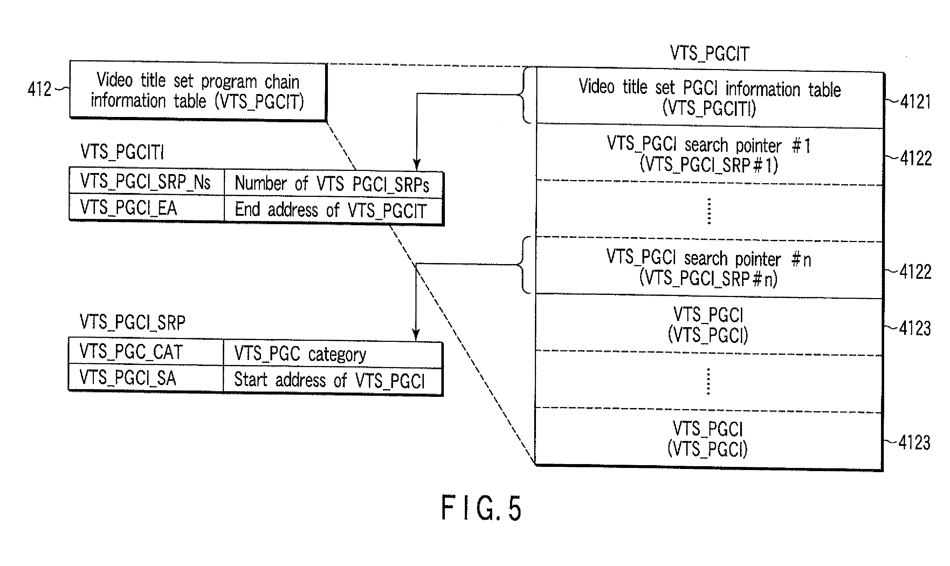

FIG. 5 shows the data structure in the video title set program chain information table (VTS_PGCIT) 412 shown in FIG. 4. As shown in FIG. 5, the video title set program chain information table (VTS_PGCIT) 412 records information of a video title set PGCI information table (VTS_PGCITI) 4121 that includes the number (VTS_PGCI_SRP_Ns) of VTS_PGCI_SRPs, and information of the end address (VTS_PGCIT_EA) of VTS_PGCIT. Also, a VTS_PGCI search pointer (VTS_PGCI_SRP) 4122 records the start address (VTS_PGCI_SA) of a video title set program chain (VTS_PGCI) 4123 (a program chain will be described later) together with a VTS_PGC category (VTS_PGC_CAT).

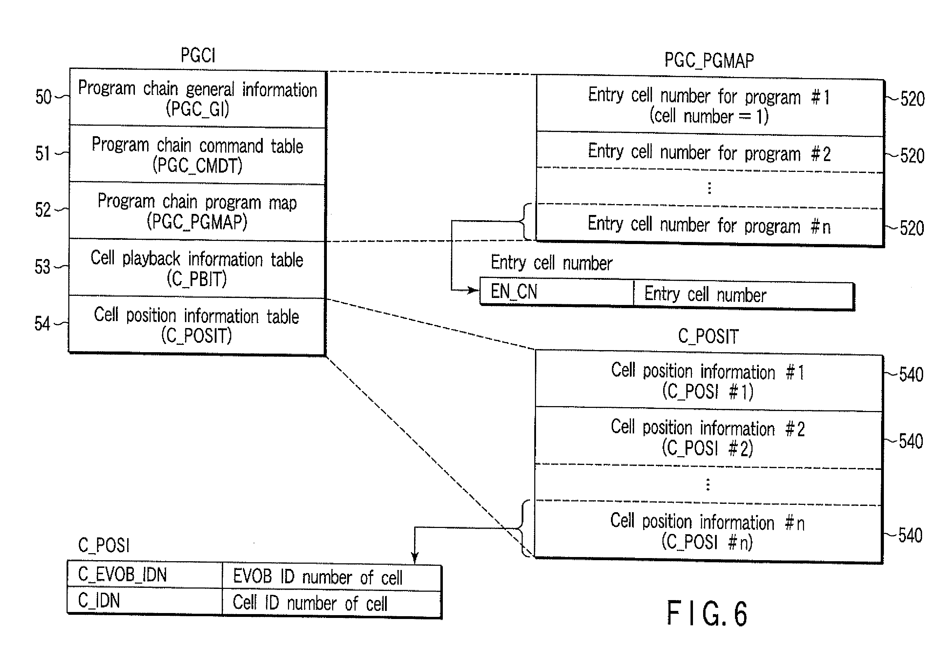

FIG. 6 shows the data structure in program chain information (Program Chain Information (PGCI)) of VMGM_PGCI (not shown) stored in the video manager menu PGCI unit table (VMGM_PGCI_UT) information 312 shown in FIG. 3 or the VTS_PGCI 4123 (FIG. 5) stored in the vide title set program chain information table (VTS_PGCIT) 412 shown in FIG. 4. The program chain information (PGCI) includes program chain general information (PGC_GI) 50, a program chain command table (PGC_CMDT) 51, a program chain program map (PGC_PGMAP) 52, a cell playback information table (C_PBIT) 53, and a cell position information table (C_POSIT) 54.

In the program chain program map 52, a plurality of pieces of program entry cell number 520 information that record entry cell numbers (EN_CN) indicating the cell numbers corresponding to entries are allocated in correspondence with the number of entries. The cell position information table (C_POSIT) 54 has a structure in which a plurality of pieces of cell position information (C_POSI) 540 each formed of a pair of a cell EVOB_ID number (C_EVOB_IDN) and cell ID number (C_IDN) are allocated in turn.

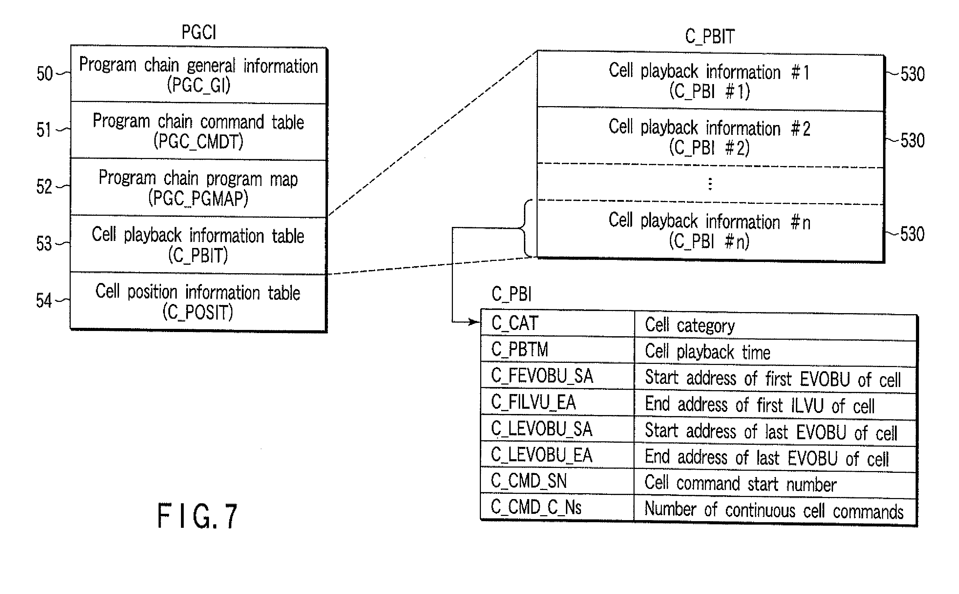

FIG. 7 shows a sequel to the data structure in the program chain information (PGCI) shown in FIG. 6. The cell playback information table (C_PBIT) 53 in PGCI as management information of a corresponding PGC, which records management information associated with each individual cell that forms the PGC, includes one or more pieces of cell playback information (C_PBI) 530. This cell playback information (C_FBI) 530 records a cell category (C_CAT), a cell playback time (C_PBTM) indicating a playback time required to fully play back the corresponding cell, start address position information (C_FEVOBU_SA) of the first EVOBU of a cell, end address position information (C_FILVU_EA) of the first interleaved unit ILVU of a cell, start address position information (C_LEVOBU_SA) of the last EVOBU of a cell, and end address position information (C_LEVOBU_EA) of the last EVOBU of the cell.

Note that the cell category (C_CAT) indicates whether the cell of interest forms an interleaved block corresponding to multi-angle playback or a part of general continuous block, and indicates whether the cell corresponds to the start or last cell of the interleaved block when that cell forms an interleaved block corresponding to multi-angle playback.

The cell playback information (C_PBI) 530 further records information such as cell command start number information (C_CMD_SN) as information associated with the first cell command number from which a sequential process of a plurality of cell commands that can be designated for each cell starts, cell command continuous number information (C_CMD_C_Ns) indicating the number of commands, the command processes of which are to be continuously executed as well as the cell command designated by the cell command start number information (C_CMD_SN), and the like.

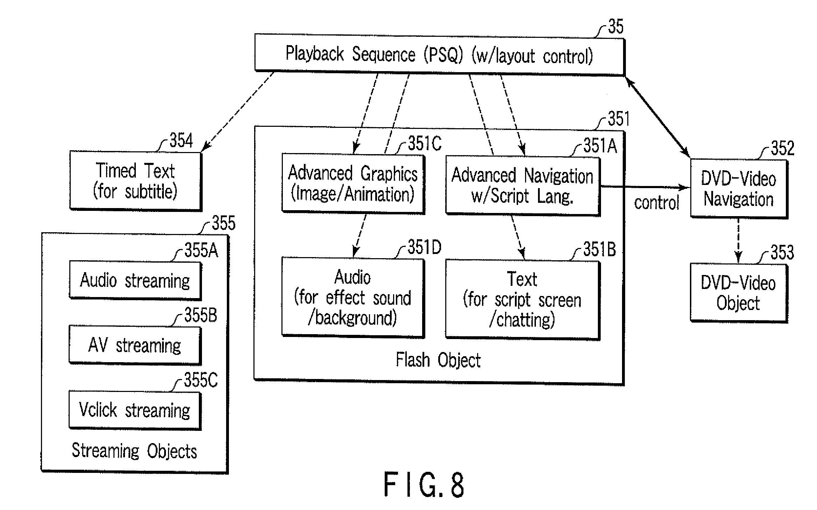

FIG. 8 shows the relationship (basic configuration of PSQ information) among data recorded on the information recording medium (DVD disk) 1 according to the embodiment of the present invention. DVD-Video navigation information 352 is required to manage playback of a DVD-Video object 353 (information having functions corresponding to 31 and 41 in FIG. 1). The DVD-Video object 353 includes video information, audio information, subtitle information, and the like (corresponding to 32 and 42 in FIG. 1). The playback sequence (PSQ) 35 describes information such as playback start time information and playback end time information for synchronization with playback of DVD, display position information on the screen, and the like.

In the embodiment shown in FIG. 8, as other objects which form the playback sequence (PSQ) 35, an advanced navigation object 351A that controls the DVD-Video navigation, a text object 351B for script screen (script, plot) and chat, an advanced graphics object 351C for still picture, moving picture, and animation data, and an audio object 351D for background audio and sound effects are prepared.

The advanced navigation object 351A can be formed using a Script language such as European computer manufacturers association (ECMA) script, JavaScript, action script, or the like. The text object 351B can be formed using a markup language such as hypertext markup language (HTML), extensible hypertext markup language (XHTML), synchronized multimedia integration language (SMIL), or the like. The advanced graphics object 351C can include still picture data such as JPEG, GIF, PNG, bitmap, or the like, moving picture data such as MPEG-4, MPEG-2, or the like, or animation data such as animation GIF, MNG, scalable vector graphics (SVG), or the like. The audio object 351D can include audio data such as MPEG, AC-3, DTS, MP3, or the like.

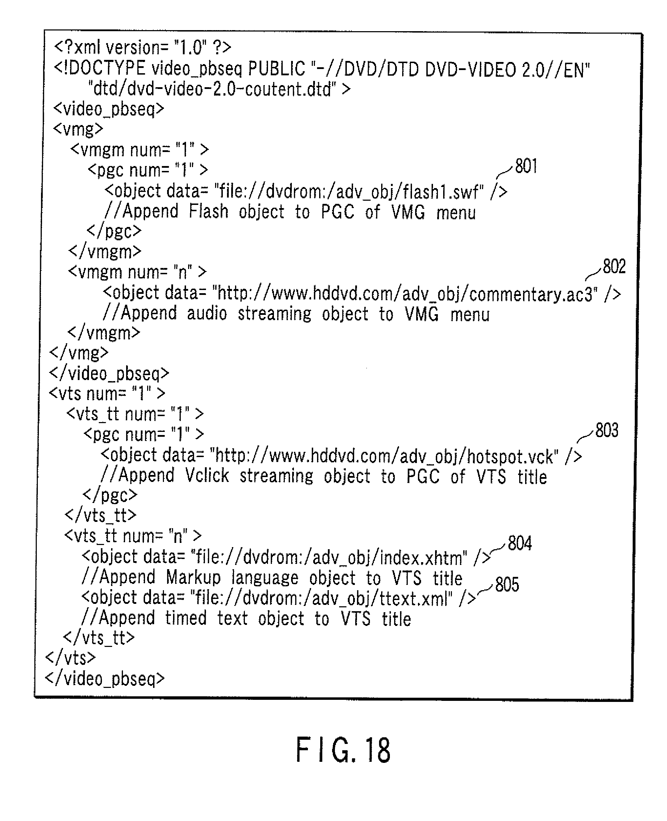

Furthermore, all these objects (advanced navigation object 351A, text object 351B, advanced graphics object 351C, and audio object 351D can be formed using the aforementioned Macromedia Flash(R) (corresponding to advanced function graphics objects 34 and 44 in FIG. 1). Note that the advanced navigation object 351A can control the playback timings and the like of the DVD-Video navigation information 352, and can change attributes (see a description of FIG. 18) of other objects.

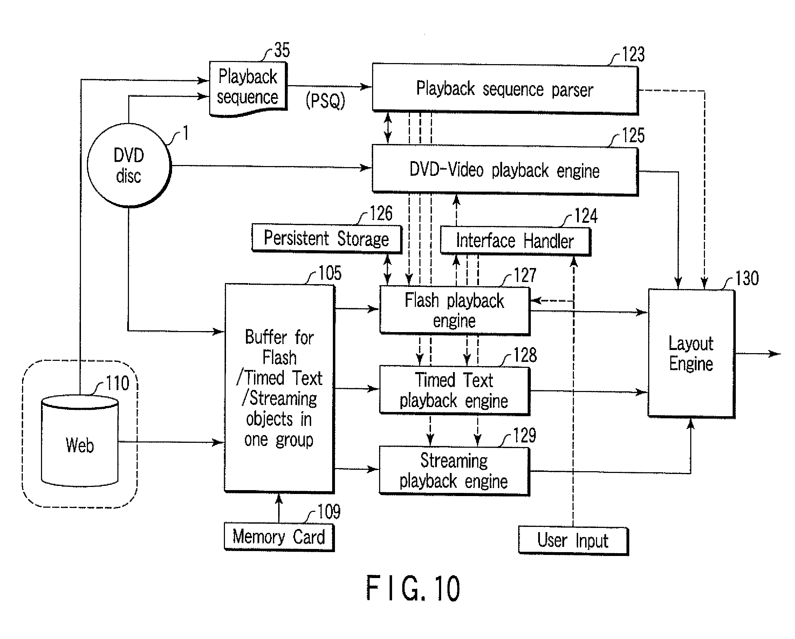

That is, using the objects shown in FIG. 8, a menu formed by this object can be displayed during playback of DVD-Video and a menu with advanced functions compared to that formed by DVD-Video can be displayed. These objects can record required information on a user information storage area (e.g., which is assured on a nonvolatile memory or hard disk drive, and corresponds to a storage 126 in FIG. 10) in the playback apparatus.

A timed text object 354 includes text data and font data (corresponding to the high-definition text object 45 in FIG. 1). The conventional DVD-Video uses sub-picture data to display a subtitle. The timed text object 354 can provide a high-definition subtitle with advanced functions with a smaller data size compared to the sub-picture data formed of compressed bitmap data. For example, text data of the timed text object 354 describes, using XML, information such as "display start time, display end time" indicating the display period of that data, "display position" required to lay out data on the screen, "font name, font size, font color" required to display data, "pre-display effect, display effect, post-display effect" indicating effects upon displaying data, and the like.

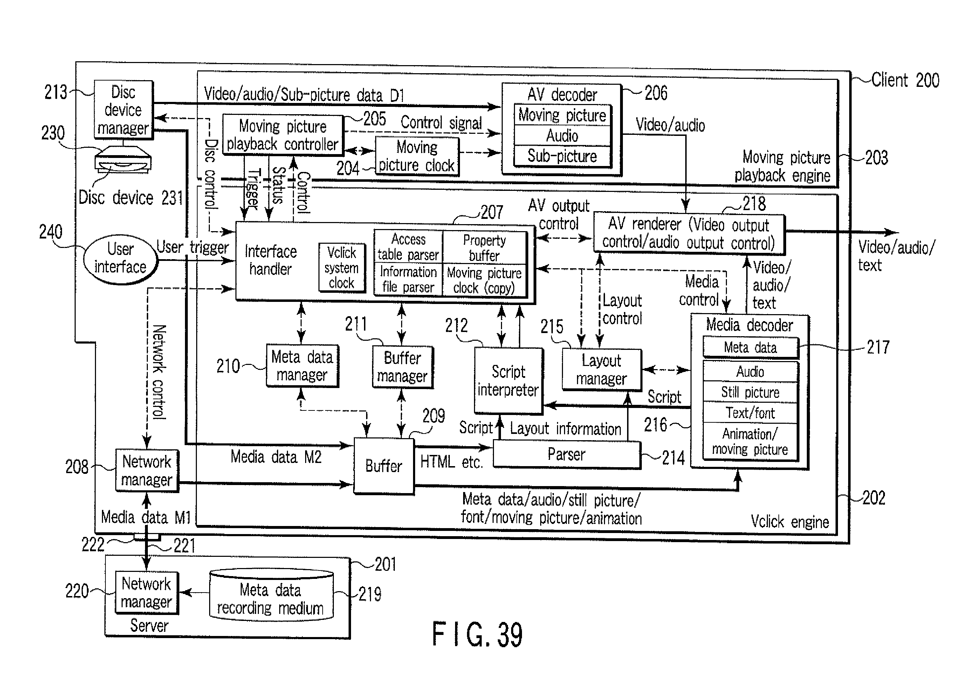

As font data, vector font data, such as Open Type font data, True Type font data, or the like is used. The text data is rendered using this vector font data in accordance with its additional information. The playback apparatus can store the aforementioned font data in advance (e.g., in a media decoder 216 in FIG. 39 to be described later).

Assume that the aforementioned data are recorded in advance on the information recording medium 1. However, for example, when these data are to be changed according to the intention of the content provider (content producer), changed data may be stored in an external server. In this way, the latest data can be provided to the playback apparatus.

In addition, in the embodiment of the present invention, objects such as an audio streaming object, AV streaming object, Vclick streaming object, and the like can be played back. Since these data have a large data size, they are recorded on an external server (in, e.g., a server 201 in FIG. 39 to be described later), and the playback apparatus downloads such data for a necessary size at a necessary timing, and deletes unnecessary data. However, these objects can also be recorded on the information recording medium 1.

An audio streaming object 355A in FIG. 8 can be used to play back an audio commentary that outputs commentary audio of a movie given by a director, actor, or the like together with DVD-Video audio, or to play back an audio language other than those of the DVD-Video recorded on the information recording medium 1. The audio stream object 355A can include audio data such as MPEG, AC-3(R), DTS(R), MP3, and the like. The audio stream object 355A can use, e.g., HTTP streaming. partially retrieves data on a server using a partial GET request of the HTTP protocol with respect to data on the server.

The playback apparatus sends position information or time information of data to be retrieved to the server, and the server sends a part of corresponding data to the playback apparatus. When the time information is sent, the server must convert the time information into position information. In order to synchronize the audio streaming object 355A with audio of the DVD-Video, meta data included in the audio streaming object 355A or that (e.g., mixing coefficients, priority information, and the like) defined by the playback sequence PSQ can be used.

An AV streaming object 355B can be used in the same manner as the aforementioned audio streaming object 355A. That is, the AV streaming object 355B can be used to output commentary audio given by a director or actor of a movie together with his (her) video picture in synchronism with the video and audio data of the DVD-Video, and to distribute video data different from that of the DVD-Video. The AV streaming object 355B can include AV data such as MPEG-4, MPEG-2, WindowsMedia(R), and the like.

A Vclick streaming object 355C can include information used to display fields that can be clicked by the user, comment information for such clickable fields, information of actions to be taken after the user clicks that field, and the like.

The aforementioned embodiment can be summarized as follows.

<Playback Control>

- The playback order is based on the program chains (VTS_PGCI) 4123 shown in FIG. 5 as logical units of the playback sequence, and playback-controls expanded video objects (EVOB).
- The playback sequence (PSQ) can control the playback timings of respective objects using some triggers (e.g., a time or event defined as an application interface API). The playback sequence (PSQ) has a scaling function (which can designate an arbitrary position, size, and the like).
- In addition, the playback conditions (timings, positions, sizes, and the like) of the advanced function graphics object (AGOB) and high-definition text object (ATOB), which can be played back together with the expanded video object (EVOB), can be defined in advance as the playback sequence (PSQ) that can perform playback control using XML. Also, these objects can be mixed by $\alpha$ blend.

<Playback Object>

- Three different playback objects, i.e., the expanded video object (EVOB), advanced function graphics object (AGOB), and high-definition text object (ATOB), are defined.
- The expanded video object (EVOB) is formed by multiplexing a plurality of streams to an MPEG program stream as in the conventional DVD-Video playback object, and that stream is expanded to support high-definition data and the like.
- The advanced function graphics object (AGOB) can be mixed to the expanded video object (EVOB) by $\alpha$ blend that mixes RGB data with transparency $\alpha$. This mixing can lay out buttons on the mixing screen, and can highlight buttons. Furthermore, this mixing can playback back a small animation with background audio (this advanced function graphics object can be formed using the aforementioned technique such as Macromedia Flash or the like).
- The high-definition text object (ATOB) is multiplexed into the expanded video object (EVOB) and can be defined in addition to a sub-picture stream (low resolution: bitmap format) which is used in subtitle application. The high-definition text object can play back a high-definition subtitle (vector format) in place of the sub-picture stream in playback.
- The audio streaming object (ASOB), still picture image object (SIOB), expanded text object (ETOB), and other objects (AV streaming object and the like) are defined.
- The audio streaming object (ASOB) is played back in the full title of the DVD-Video while being mixed to audio data of the main title for the purpose of, e.g., audio commentary that a director or the like gives about his or her work. Also, audio data to be played back can be switched like only audio data of the main title, only audio commentary, or both audio data.
- The still picture image object (SIOB) can use photos taken by the user, still picture data distributed via the Internet, and the like. Such still picture image objects can be simply played back like a slide show. As the image format of this still picture image object, JPEG, PNG, and the like can be used.
- The expanded text object (ETOB) can be used to display text, messages, and the like on the script screen.

<Network Connection Function>

- Internet connection can be made.
- The expanded video object and other objects acquired via the Internet connection can be synchronously played back.
- The Internet connection timing is determined by the user or by the timing (disk playback time, position, and the like) the content provider of the disk intended.
- A chat function that allows exchange of views on a work such as a movie or the like recorded on the disk with a director is provided.
- A function that allows download of contents and information associated with a work recorded on the disk via the Internet connection is provided.
- A function that allows playback of contents hidden on the disk via the Internet connection is provided.
- A function that allows purchase of goods associated with a work recorded on the disk via the Internet connection is provided.

<Other Functions>

- The expanded video object (EVOB) and other objects supplied from an external device such as a memory card or the like can be synchronously played back using a playback sequence (PSQ) supplied at the same time.

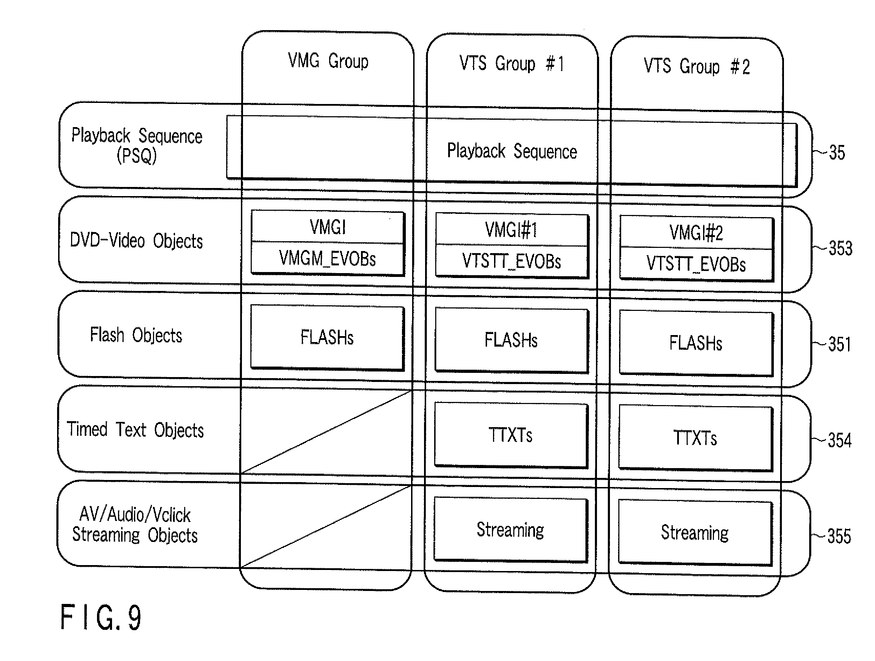

FIG. 9 shows a display example of the contents image of an expanded profile in the form of a matrix. As shown in FIG. 9, the ordinate plots the playback sequence (PSQ) 35 and the types of objects to be supported, and the abscissa plots the groups that form the contents, thus forming the overall matrix.

The objects to be supported includes the DVD-Video expanded video objects (EVOB) 353; Flash objects (FLASH) 351; timed text objects (TTXT) 354; and streaming objects 355 such as AV streaming objects, audio stream objects, and Vclick streaming objects. As a unit that plays back these objects, zero or one VMG group and one or more VTS groups are defined on the information recording medium 1.

The VMG group is used to form various menus, and is an area that records data used to form menus such as a root menu, title menu, audio language menu, subtitle language menu, angle menu, and the like. Each VTS group is an area that records data used to form a title. One playback sequence (PSQ) 35 is included in the information recording medium 1, and defines the times and positions of the objects to be played back across the VMG group and VTS group.

In the VMG group, zero or more VMGM_EVOBs are set as DVD-Video objects (EVOB) for a menu, and the video manager information (VMGI) which stores program chain (PGC) information that controls playback of objects is set as its DVD navigation (management information). Furthermore, zero or more Flash objects are set in the VMG group.

In each VTS group, one or more VTSTT_EVOBs are set as DVD-Video objects (EVOB), and video title set information (VTSI) which stores program chain (PGC) information that controls playback of this object is set as DVD navigation (management information). Furthermore, zero or more Flash objects, zero or more timed text objects, and zero or more streaming objects are set in each VTS group.

In the example of FIG. 9, the groups have been explained while being divided into two groups, i.e., VMG and VTS groups. However, only one group may be set, and need not be distinguished for VMG and VTS. Also, in the example of FIG. 9, only the DVD-Video objects 353 and Flash objects 351 are played back in the VMG group. However, timed streaming objects and streaming objects may be played back as needed even in the VMG group.

FIG. 10 shows the system block arrangement according to the embodiment of the present invention. The playback sequence (PSQ) 35 read out from the information recording medium (DVD disk) 1 or a designated external server 110 is input to a playback sequence parser 123. The parser 123 parses "playback conditions (playback timings, display positions, display sizes, and the like) of objects other than the expanded video objects of the DVD-Video" described in the playback sequence (PSQ) 35, thus making the playback control according to the playback conditions.

In contrast, DVD-Video navigation information read out from the information recording medium 1 is parsed by a DVD-Video playback engine 125. In the DVD-Video playback engine 125, an MPEG stream formed by multiplexing DVD-Video objects is demultiplexed, and demultiplexed video (main picture), audio (audio), and sub-picture streams are processed by corresponding decoders (not shown). The processed data are sent to a layout engine 130. Since playback time information of the DVD-Video objects is also required upon playing back objects other than the DVD-Video objects, it is sequentially sent to the playback sequence parser 12 and is used in playback control of respective objects.

Furthermore, Flash objects, timed text objects, and the like read out from the information recording medium 1 or designated external server 110 are temporarily stored in a buffer 105 for each group. The Flash objects buffered by the buffer 105 are sent to a Flash playback engine 127, and the timed text objects are sent to a timed text playback engine 128. Data of these objects can be accessed without disturbing playback of the DVD-Video by storing them in the buffer 105, i.e., by avoiding access to the information recording medium 1. In this manner, synchronous playback of the DVD-Video objects and these objects (Flash objects, timed text objects, and the like) can be implemented. Note that the object data are stored in the buffer 105 for each group. Alternatively, the object data may be stored for a plurality of groups or for an information recording medium in accordance with the size of the buffer 105.

The Flash objects are parsed and decoded by the Flash playback engine 127. Note that the Flash playback engine 127 parses a user input. Then, the engine 127 sends a command to an interface handler 124 as an action corresponding to "that user input" set in each Flash object in advance. As this command, a command for controlling playback of the DVD-Video, a command for controlling playback of the timed text objects and streaming objects, and a command for changing the attributes of the timed text objects and streaming objects are available.

The interface handler 124 transfers commands sent from the Flash playback engine 127 to respective engines 125, 128, 129. The Flash playback engine 127 can write and read information to or from a user information storage area (persistent storage) (which is assured on, e.g., a nonvolatile memory, hard disk drive, or the like) 126 in the playback apparatus. The user information includes the user's personal information, access history, game score, and the like.

The timed text objects are parsed and decoded by the timed text playback engine 128. Each timed text objects describes information such as text information to be displayed, a font name (font data name) used in display, a font size to be displayed, a font color to be displayed, display effects, and the like, and is rendered using corresponding font data according to these pieces of information. Also, streaming objects are parsed and decoded by a streaming playback engine 129.

The layout engine 130 scales (enlarges/reduces in scale) decoded object data sent from the respective engines 125, 127 to 129 in accordance with the designation of the playback sequence parser 123. Furthermore, the layout engine 130 forms a screen layout based on a layout designated from the playback sequence parser 123, and applies RGB mixing with transparency $\alpha$ to respective objects in accordance with an $\alpha$ value (a value indicating % of the transparency or contrast) designated by the playback sequence parser 123 to composite pictures, thus generating an output picture.

Note that the Flash objects and timed text objects may be downloaded from an external server (e.g., 201 in FIG. 39 to be described later) via another medium other than the information recording medium 1, e.g., via a memory card 109, or Internet (Web) connection 110 into the buffer 105 when they are used.

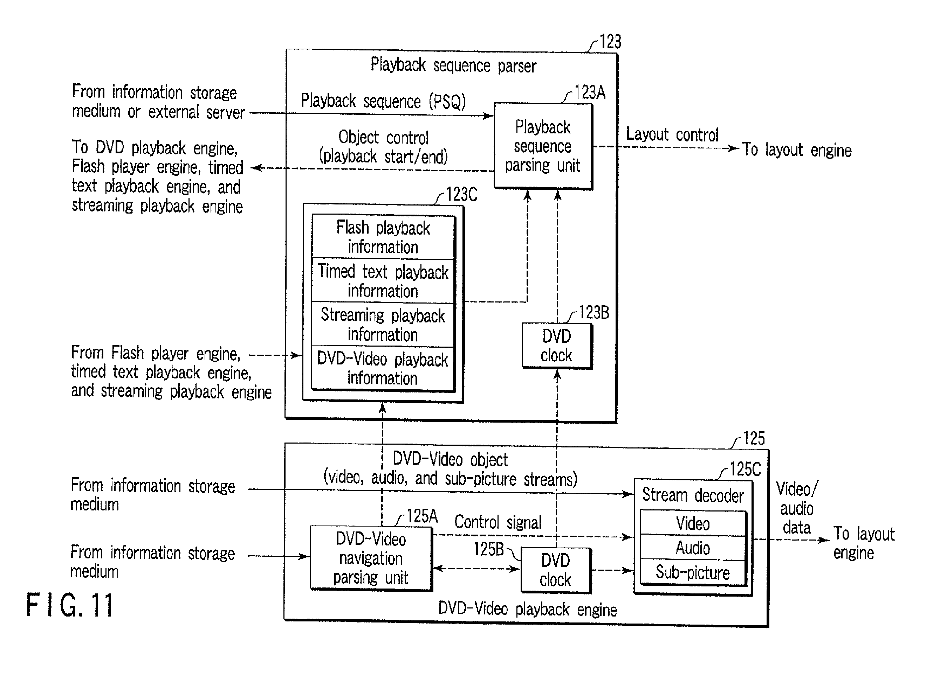

FIG. 11 shows an example of the internal arrangement of the playback sequence parser 123 and DVD-Video playback engine 125 in the system block diagram shown in FIG. 10. The DVD-Video playback engine 125 is a block that plays back DVD-Video data including DVD-Video navigation information and DVD-Video objects, and comprises a DVD-Video navigation parsing unit 125A, DVD clock 125B, and stream decoder 125C. The DVD-Video navigation parsing unit 125A parses DVD-Video navigation data loaded from the information recording medium 1, and controls DVD-Video playback. The stream decoder 125C includes a video stream decoder, audio stream decoder, and sub-picture stream decoder. The stream decoder 125C demultiplexes DVD-Video object data in the MPEG-2 format which is loaded from the information recording medium 1 into video (main picture), audio, and sub-picture streams, decodes the streams using the corresponding decoders (in 125C), and outputs them as video/audio data to the layout engine 130. The DVD-Video object data is decoded under the control of the DVD-Video navigation parsing unit 125A. The DVD clock 125B generates clocks used to synchronously output independently decoded video, audio, and sub-picture streams.

The playback sequence parser 123 is a block for parsing playback sequence data and controlling respective object playback blocks, and includes a playback sequence parsing unit 123A, DVD clock 123B, and playback information processor 123C. The playback information processor 123C includes processing units of Flash playback information, timed text playback information, stream playback information, and DVD-Video playback information.

The playback sequence parsing unit 123A parses the playback sequence acquired from the information recording medium 1 or an external server (110 in FIG. 10 or 201 in FIG. 39). The playback sequence parsing unit 123A performs control of playback start, playback end, and the like of designated objects for respective playback engines (DVD-Video playback engine 125, Flash playback engine 127, timed text playback engine 128, streaming playback engine 129) at timings designated by the playback sequence PSQ with reference to the DVD clocks, DVD-Video playback information, and the like. The playback sequence parsing unit 123A transfers information to the layout engine 130 on the basis of layout information designated by the playback sequence PSQ.

The DVD clock 123B sequentially receives the same values as those of the DVD clocks in the DVD-Video playback engine 125. The DVD-Video playback information processing unit in the playback information processor 123C sequentially receives playback information (e.g., VMG space or VTS space, title number, PGC number, cell number, audio stream number, sub-picture stream number, angle number, and the like) of the DVD-Video playback engine 125. The Flash playback information processing unit in the playback information processor 123C sequentially receives playback information (e.g., object file name, playback time information, and the like) of the Flash playback engine 127. The timed text playback information processing unit in the playback information processor 123C sequentially receives playback information (e.g., object file name, font name, font size, font color, effects, and the like) of the timed text playback engine 128. Likewise, the streaming playback information processing unit in the playback information processor 123C sequentially receives playback information of the streaming playback engine 129.

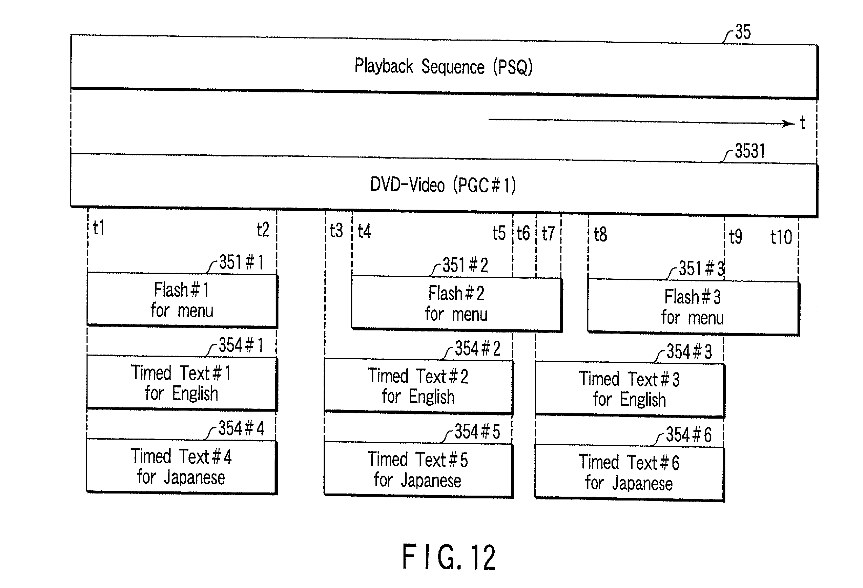

FIGS. 12 to 15 show examples of playback images to be played back by the playback apparatus according to the embodiment of the present invention. FIG. 12 shows a case wherein the playback start/playback end timings of a plurality of Flash objects and a plurality of timed text objects are defined as relative times (relative Presentation Time Stamp (PTS)) from the head of one program chain (PGC). Also, these times can be freely set, as shown in FIG. 12.

As shown in FIG. 12, a start time t1 and end time t2 are respectively set for Flash #1 351#1 for a menu, timed text #1 354#1 for an English subtitle, and timed text #4 354#4 for a Japanese subtitle with respect to a PGC#1 3531 of the DVD-Video. By setting the same start time/end time, these pieces of information (351#1, 354#1, 354#4) can be synchronously played back. A start time t4 and end time t7 are set for Flash #2 351#2 for a playback menu, and a start time t3 and end time t5 are set for timed text #2 354#2 for an English subtitle and timed text #5 354#5 for a Japanese subtitle. In this way, by setting different start times/end times for corresponding information (351#2, and 354#2 and 354#5), synchronous playback (synchronous playback with different playback time; asynchronous playback depending on the perspective) at different timings can be designated.

A start time t8 and end time t10 are set for MM Flash #3 351#3 for a playback menu, and a start time t6 and end time t9 are set for timed text #3 354#3 for an English subtitle and timed text #6 354#6 for a Japanese subtitle. In this way, information (354#3) of timed text #3 and that (354#6) of timed text #6 can be designated to partially overlap the playback period of Flash #2 351#2 (t6 to t7).

Note that "MM Flash" of "MM Flash #3 351#3" is an elaborate object for a menu, which uses a graphical user interface (GUI) during moving picture playback, and menu expression of the existing DVD-Video, and has contents which can include animation data and/or still picture data.

Although not shown, for example, timed text #1 354#1 can be set to have a playback period t1 to t5, and timed text #4 354#4 can be set to have a playback period t1 to t10. In this case, the start time of timed text #1 and timed text #4 matches that of Flash #1 (start synchronous) but the end times of timed text #1 and timed text #4 do not match that of Flash #1 (end asynchronous). In this case, an irregular setting is available: the end time of timed text #4 is matched with that of another Flash #3. Such synchronous/asynchronous settings of "start time" and/or "end time" can be freely set by description contents of "start_ptm= " "" and/or "end_ptm= " "" in the following PSQ description example.

A description example of the playback sequence PSQ in the above example (FIG. 12) is as follows:

```
<pgc num="1">
<object data="dvd://hvdvd_ts/hvi00001.ifo" />
<object data="file://dvdrom:/adv_obj/flash1.swf
start_ptm="t1" end_ptm="t2"/> ... (Description example
of Flash#1 from t1 to t2)
<object data="file://dvdrom:/adv_obj/ttext1.xml


start_ptm="t1" end_ptm="t2"/> ... (Description example
of timed text#1 from t1 to t2)
<object data="file://dvdrom:/adv_obj/ttext4.xml
start_ptm="t1" end_ptm="t2"/> ... (Description example
of timed text#4 from t1 to t2)
<object data="file://dvdrom:/adv_obj/flash2.swf
start_ptm="t4" end_ptm="t7"/> ... (Description example
of Flash#2 from t4 to t7)
<object data="file://dvdrom:/adv_obj/ttext2.xml
start_ptm="t3" end_ptm="t5"/> ... (Description example
of timed text#2 from t3 to t5)
<object data="file://dvdrom:/adv_obj/ttext5.xml
start_ptm="t3" end_ptm="t5"/> ... (Description example
of timed text#5 from t3 to t5)
<object data="file://dvdrom:/adv_obj/flash3.swf
start_ptm="t8" end_ptm="t10"/> ... (Description example
of Flash#3 from t8 to t10)
<object data="file://dvdrom:/adv_obj/ttext3.xml
start_ptm="t6" end_ptm="t9"/> ... (Description example
of timed text#3 from t6 to t9)
<object data="file://dvdrom:/adv_obj/ttext6.xml
start_ptm="t6" end_ptm="t9"/> ... (Description example
of timed text#6 from t6 to t9)
</pgc>
```

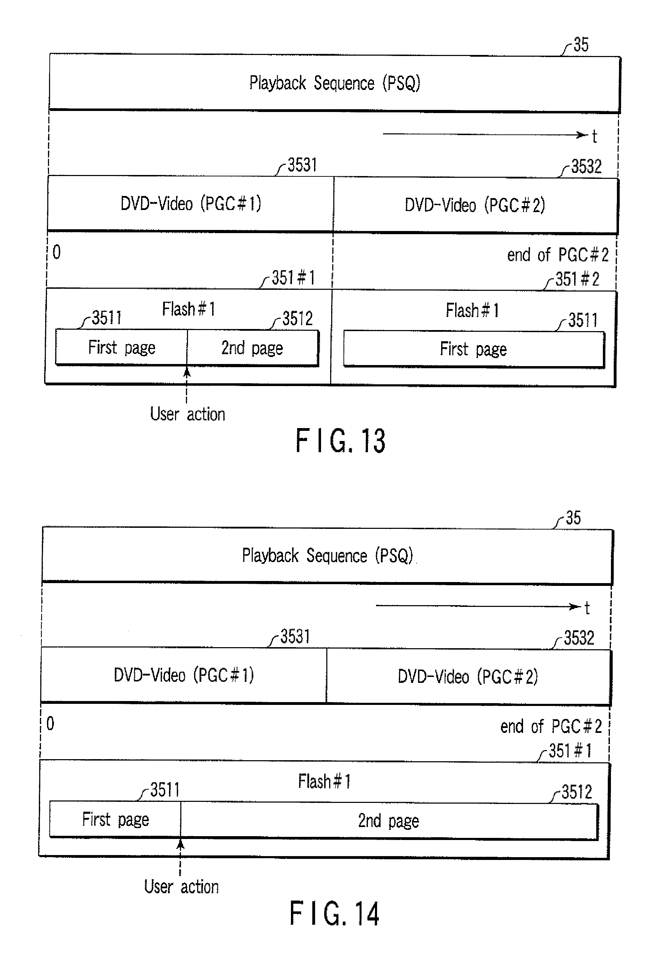

FIG. 13 exemplifies a case wherein Flash objects to be displayed are switched in response to a switch request from the user. This example is defined so that Flash #1 351#1 begins to be played back from the head of the program chain (PGC#1) and automatically ends at the end of that program chain for PGC#1 3531 of the DVD-Video, and the same Flash #1 351#1 begins to be played back from the head of the program chain (PGC#2) and automatically ends at the end of that program chain for PGC#2 3532 of the DVD-Video.

In the example of FIG. 13, no user's switch request is generated in PGC#2, and a first page 3511 of Flash #1 is kept played back from the beginning to the end of playback of PGC#2. In the example of FIG. 13, a user's switch request (User action) is generated during playback of PGC#1. When the user's switch request is generated, the page of Flash #1 which is played back so far is switched to a new page (e.g., a second page 3512 of Flash #1), and the new page is kept played back until the end of playback of PGC#2.

In the example of FIG. 13, PGC#1 and PGC#2 refer to the same Flash object. In this example, it is defined that a clock (timer) of the Flash object is temporarily reset upon switching PGC#1 to PGC#2. That is, the first page of Flash #1 is switched to the second page in PGC#1, but display starts from the first page as a default state of Flash #1 (since the clock is reset) in PGC#2.

A description example of the playback sequence PSQ in the above example (FIG. 13) is as follows:

```
<pgc num="1">
<object data="dvd://hvdvd_ts/hvi00001.ifo" />
<object data="file://dvdrom:/adv_obj/flash1.swf />
(Although not described in this example, the page of
Flash #1 is switched in response to the User action in
FIG. 13.)
</pgc>
<pgc num="2">
<object data="dvd://hvdvd_ts/hvi00001.ifo" />
<object data="file://dvdrom:/adv_obj/flash1.swf />
</pgc>
```

FIG. 14 exemplifies a case wherein an identical Flash object can be played back across a plurality of program chains (PGC#1 and PGC#2). This example is set to synchronously play back identical Flash #1 351#1 with respect to PGC#1 3531 and PGC#2 3532 of the DVD-Video. In this case, it is defined that Flash #1 begins to be played back from the head of the first program chain (PGC#1), and automatically ends at the end of the second program chain (PGC#2). When the example of FIG. 14 is compared with FIG. 13, a user's switch request is generated during playback of PGC#1, display is switched from the first page to the second page of Flash #1, and the second page is kept played back without resetting the clock (timer) of Flash #1 even after completion of PGC#1 in the example of FIG. 14. For this reason, the second page of Flash #1 is displayed from PGC#1 to PGC#2.

A description example of the playback sequence PSQ in the above example (FIG. 14) is as follows:

```
<pgc num="1">
<object data="dvd://hvdvd_ts/hvi00001.ifo" />
<object data="file://dvdrom:/adv_obj/flash1.swf />
(Although not described in this example, the page of
Flash #1 is switched in response to the User action in
FIG. 14.)
</pgc>
<pgc num="2">
<object data="dvd://hvdvd_ts/hvi00001.ifo" />
<object data="file://dvdrom:/adv_obj/flash1.swf
cont="yes" />
</pgc>
```

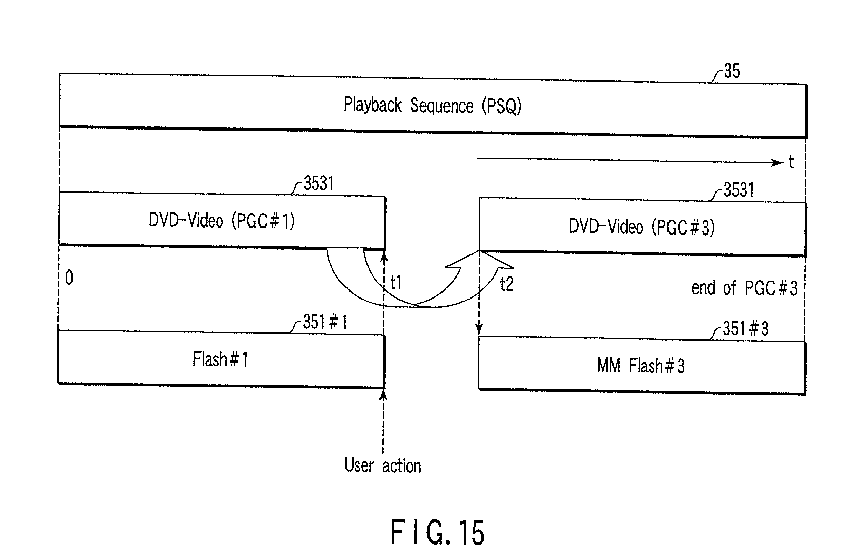

FIG. 15 exemplifies a case wherein playback of Flash objects is automatically changed in response to a change in playback of PGCs. This example is defined so that Flash #1 351#1 begins to be played back from the beginning of PGC#1 and automatically ends at the end of PGC#1 with respect to PGC#1 3531 of the DVD-Video. Also, it is defined that Flash #3 351#3 begins to be played back from the beginning of PGC#3 and automatically ends at the end of PGC#3 with respect to PGC#3 3533 of the DVD-Video.

Assume that the user issues a jump instruction to given time t2 in PGC#3 at time t1 during playback of PGC#1 of the DVD-Video. At this time, the Flash object interrupt playback of Flash #1, which is being played back, and starts playback from time t3 of Flash #3 corresponding to PGC#3. In this manner, even when a discontinuous action such as jump or the like is interposed during playback, the DVD-Video and Flash objects can be synchronously played back.

A description example of the playback sequence PSQ in the above example (FIG. 15) is as follows:

```
<pgc num="1">
<object data="dvd://hvdvd_ts/hvi00001.ifo" />
<object data="file://dvdrom:/adv_obj/flash1.swf />
</pgc>
```

(Although not described in this example, Flash #1 is switched to Flash #3 corresponding to PGC#3 as a jump destination in response to the User action in FIG. 15.)

```
<pgc num="3">
<object data="dvd://hvdvd_ts/hvi00001.ifo" />
<object data="file://dvdrom:/adv_obj/flash3.swf" />
</pgc>
```

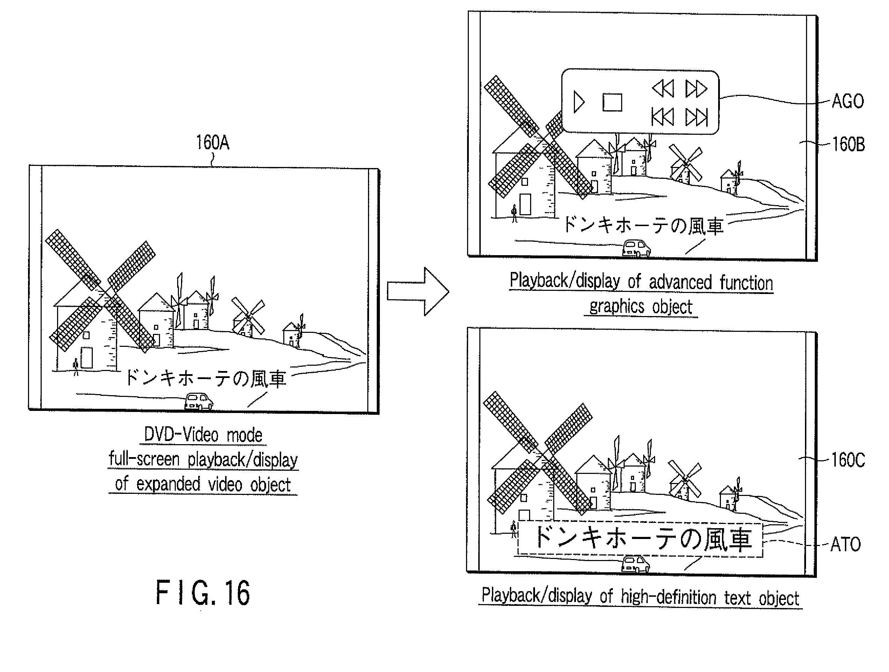

FIG. 16 shows an example of the screen configuration according to the embodiment of the present invention. A screen 160A in FIG. 16 shows a case wherein an expanded video object (EVOB) is played back and displayed in a DVD-Video mode (full-screen display) as the conventional display screen. A screen 160B shows an example wherein a Flash object having playback control buttons is superimposed as a playback control menu by $\alpha$ blend on the expanded video object (EVOB) in the DVD-Video mode on the screen 160A. A screen 160C shows an example wherein a timed text object such as outline font, vector font, or the like is superimposed by $\alpha$ blend in place of a sub-picture subtitle in the DVD-Video mode on the screen 160A.

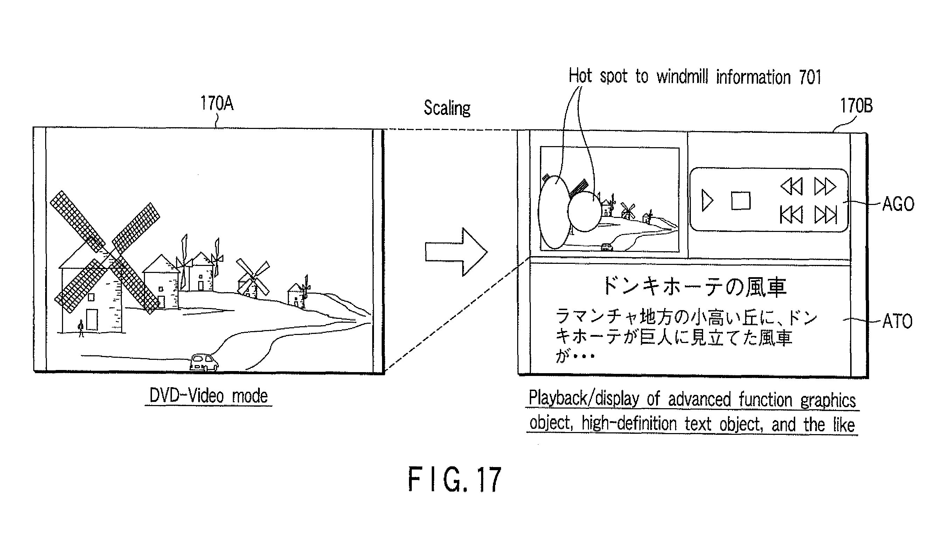

FIG. 17 shows an example of the screen configuration according to the embodiment of the present invention.

As in FIG. 16, a screen 170A in FIG. 17 shows a case wherein an expanded video object (EVOB) is played back and displayed in a DVD-Video mode (full-screen display) as the conventional display screen. A screen 170B in FIG. 17 shows an example wherein a display area is divided into some areas, and object sizes are changed and displayed on the respective areas.

In this example, the screen size of the expanded video object (EVOB) in the DVD-Video mode on the screen 170A is reduced by the scaling function and is laid out on the upper left area. A Flash object is embedded on the upper right area. A timed text object is displayed on the lower half area of the screen together with a comment of the screen. Furthermore, hot spots (fields on the screen where some process is executed upon clicking a mouse button; to be also referred to as "Vclick" hereinafter as needed) 701 to windmill information are superimposed on the expanded video object (EVOB) on the upper left area. When the user clicks the hot spot, display jumps to (windmill) related information (not shown), thus playing back that related information.

The file configuration and screen display examples based on that configuration of the playback sequence (PSQ) that defines the playback conditions of Flash objects, timed text objects, and the like will be described in detail below. FIG. 18 shows an example of the configuration of a playback sequence (PSQ) file. The playback sequence (PSQ) file is described using XML, use of "XML" is declared first, and a playback sequence (PSQ) file described in XML is then declared. Furthermore, the contents of the playback sequence (PSQ) file are described using a <video_pbseq> tag.

The <video_pbseq> field includes zero or one <vmg> tag, zero or one or more <vts> tags, and zero or one <idle> tag. The <vmg> field represents the VMG space in the DVD-Video. That is, the <vmg> field indicates that additional objects such as a Flash object (to be referred to as a graphics object hereinafter), timed text object (to be referred to as a text object hereinafter), audio streaming object, AV streaming object, and Vclick streaming object described in the <vmg> field are appended to DVD-Video data on the VMG space.

The <vts> field represents the VTS space in the DVD-Video. That is, the <vts> field designates the VTS space number by appending a num attribute in the <vts> tag, and indicates that additional objects such as a Flash object (to be referred to as a graphics object hereinafter), timed text object (to be referred to as a text object hereinafter), audio streaming object, AV streaming object, and Vclick streaming object described in the <vts> field are appended to DVD-Video data on the VTS space. For example, <vts num="n"> represents the n-th VTS space. That is, <vts num="n"> indicates that the aforementioned additional objects described in the <vts num="n"> field are appended to DVD-Video data that forms the n-th VTS space.

The <vmg> field includes zero or one or more <vmgm> tags, and zero or one or more <fp> tags. The <vmgm> field represents a VMG menu domain on the VMG space, and designates the VMG menu domain number by appending a num attribute in the <vmgm> tag. For example, <vmgm num="n"> represents the n-th VMG menu domain. <vmgm num="n"> indicates that the aforementioned additional objects described in the <vmgm num="n"> field are appended to DVD-Video data that forms the n-th VMG menu domain. Note that the VMG space includes language blocks. That is, one VMG menu domain corresponds to one language unit. Therefore, the VMG menu domains can be managed using language codes in place of the numbers. In this case, each VMG menu domain can be expressed by <vmgm lang="xx"> (xx is a language code specified by ISO639) using a lang attribute in place of the num attribute. For example, <vmgm lang="jp"> indicates a VMG menu domain in Japanese, and <vmgm lang="en"> indicates a VMG menu domain in English.

Furthermore, the <vmgm> field includes zero or one or more <pgc> tags. The <pgc> field represents a Program Chain (PGC) in the VMG menu domain, and designates the PGC number by appending a num attribute in the <pgc> tag. For example, <pgc num="n"> represents the n-th PGC. <pgc num="n"> indicates that the aforementioned objects described in the <pgc num="n"> field are appended to DVD-Video data that forms the n-th PGC.

Although not shown, the <fp> field represents a first play domain on the VMG space, and includes zero or one or more <pgc> tags. This <pgc> field indicates a PGC (Program Chain) to be executed by the playback apparatus first.

The <vts> field includes one or more <vts_tt> tags, and zero or one or more <vtsm> tags. The <vts_tt> field represents a title domain on the VTS space, and designates the title domain number by appending a num attribute in the <vts_tt> tag. For example, <vts_tt num="n"> indicates the n-th title domain. <vts_tt num="n"> indicates that the aforementioned additional objects described in the <vts_tt num="n"> field are appended to DVD-Video data that forms the n-th title domain.

The <vtsm> field represents a VTS menu domain on the VTS space, and designates the VTS menu domain number by appending a num attribute in the <vtsm> tag. For example, <vtsm num="n"> indicates the n-th VTS menu domain. <vtsm num="n"> indicates that the aforementioned additional objects described in the <vtsm num="n"> field are appended to DVD-Video data that forms the n-th VTS menu domain.

Since the VTS space includes language blocks, i.e., since one VTS menu domain corresponds to one language unit, the VTS menu domains can be managed using language codes in place of the numbers. In this case, each VTS menu domain can be expressed by <vtsm lang="xx"> (xx is a language code specified by ISO639) using a lang attribute in place of the num attribute. For example, <vtsm lang="jp"> indicates a VTS menu domain in Japanese, and <vtsm lang="en"> indicates a VTS menu domain in English.

Furthermore, the <vts_tt> or <vtsm> field includes zero or one or more <pgc> tags. The <pgc> field represents a PGC (Program Chain) in the title domain or VTS menu domain, and designates the PGC number by appending a num attribute in the <pgc> tag. For example, <pgc num="n"> represents the n-th PGC. <pgc num="n"> indicates that the aforementioned objects described in the <pgc num="n"> field are appended to DVD-Video data that forms the n-th PGC.

Finally, although not shown, the <idle> tag represents a state which is not synchronized with playback of the DVD-Video. That is, in the state defined by the <idle> tag, no DVD-Video objects are played back, and this state includes only additional objects such as a Flash object (to be referred to as a graphics object hereinafter), timed text object (to be referred to as a text object hereinafter), audio streaming object, AV streaming object, and Vclick streaming object. The <idle> tag includes zero or one or more <pgc> tags. This <pgc> tag represents a Program Chain (PGC). However, the PGC represented by this tag has no DVD-Video time information, and the playback start time and playback end time cannot be designated.

In the example shown in FIG. 18, four additional objects are appended to the DVD-Video contents. For example, the first graphics object is designated using an <object> tag in <pgc num="1"> in <vmgm num="1"> in <vmg>. This indicates that the additional object designated by the <object> tag is appended to the first PGC in the first VMG menu domain on the VMG space.

The <object> tag indicates the location of the additional object using a "data" attribute. In this example, the location of the graphics object is designated by "file://dvdrom:/adv_obj/flash.swf" (see 801 in FIG. 18). Note that "file://dvdrom:/" indicates that the graphics object is present in the information recording medium (disk). Furthermore, "adv_obj/" indicates that the object is present under the "ADV_OBJ" directory, and "flash.swf" indicates the file name of the graphics object.

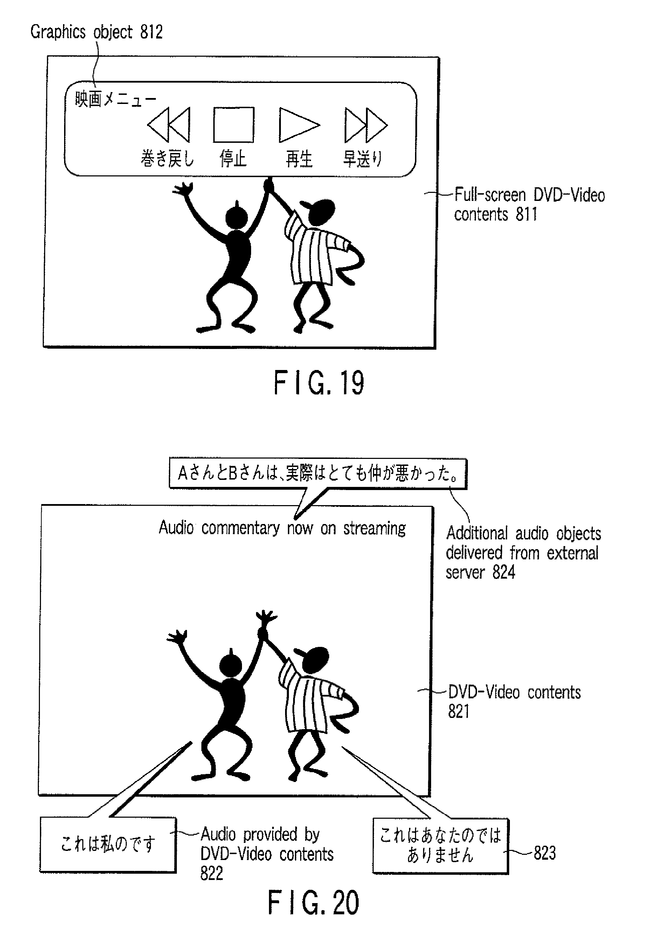

With this description, a graphics object 812 can be appended to designated DVD-Video contents 811, as shown in FIG. 19. Especially, the graphics object 812 can process operations from the user. By assigning commands for controlling the DVD-Video contents 811 in response to operations from the user in the graphics object 812, the graphics object 812 can be used as a menu for controlling the DVD-Video contents 811.

The next additional object is designated using an <object> tag in <vmgm num="n"> in <vmg>. This indicates that the additional object designated by the <object> tag is appended to the entire first VMG menu domain on the VMG space. The <object> tag indicates the location of the additional object using a "data" attribute. In this example, the location of an audio streaming object is designated by "http://www.hddvd.com/adv_obj/commentary.ac3" (see 802 in FIG. 18). Note that "http://www.hddvd.com/adv_obj/" indicates that the audio streaming object is present in an external server, and "commentary.ac3" indicates the file name of the audio streaming object.

With this description, as shown in FIG. 20, the audio streaming object can be appended to the designated DVD-Video contents. For example, an audio commentary 824 of a director or actor, which is delivered from the external server (or is recorded in advance on the disk) can be appended to audio data 822 and 823 of DVD-Video contents 821.

The third additional object is designated using an <object> tag in <pgc num="1"> in <vts_tt num="1"> in <vts num="1">. This indicates that the additional object designated by the <object> tag is appended to the first PGC in the first title domain on the first VTS space. The <object> tag indicates the location of the additional object using a "data" attribute. In this example, the location of a Vclick streaming object is designated by "http://www.hddvd.com/adv_obj/hotspot.vck" (see 803 in FIG. 18). Note that "http://www.hddvd.com/adv_obj/" indicates that the Vclick streaming object is present in the external server, and "hotspot.vck" indicates the file name of the Vclick streaming object.

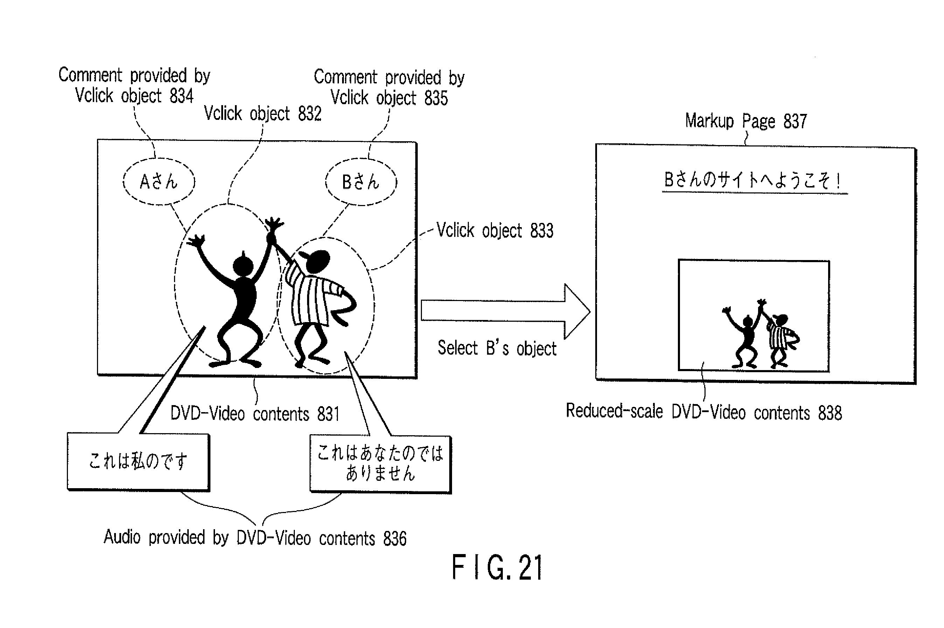

With this description, as shown in FIG. 21, Vclick objects 832 and 833 can be appended to designated DVD-Video contents 831. Note that the Vclick object is an object which indicates a clickable field on the DVD-Video contents, and can describe an action after clicking. More specifically, the Vclick objects 832 and 833 are appended to two persons by the DVD-Video contents 831 in FIG. 21. Furthermore, text messages 834 and 835 that give explanations of these objects 832 and 833 can be displayed for the objects 832 and 833. Note that reference numeral 836 denotes audio data provided by the DVD-Video contents 831.

For example, when the user selects (clicks) the Vclick object 833 on the right side of the screen, an action corresponding to this clicking is described in the Vclick object 833, and the playback apparatus operates according to this description. In this example, the object 833 describes playback of a markup page 837, and also a reduction instruction of the DVD-Video contents in response to the user's clicking (reference numeral 838 denotes DVD-Video contents reduced in scale).

The fourth Vclick stream is designated using an <object> tag in <vts_tt num="n"> in <vts num="1">. This indicates that the additional object designated by the <object> tag is appended to the n-th title domain on the first VTS space.

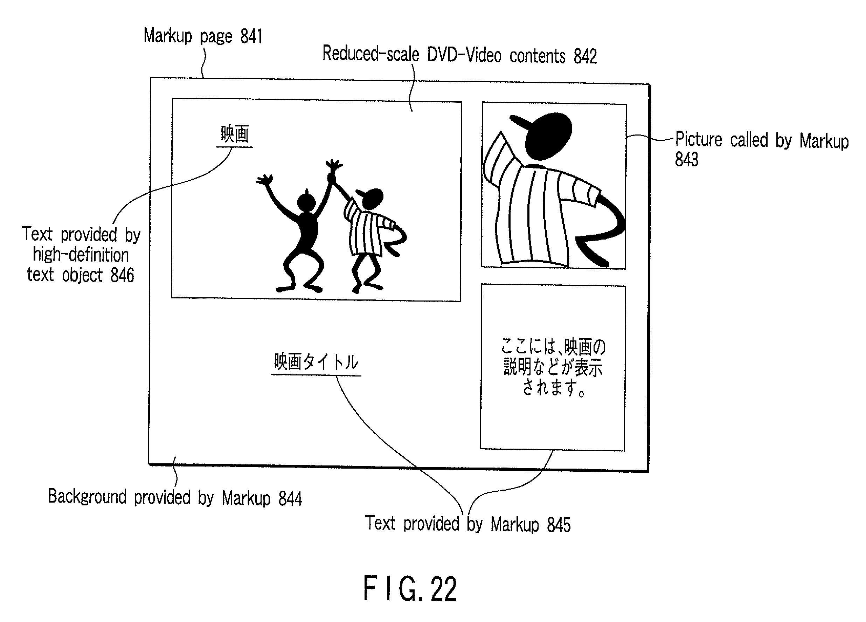

The <object> tag indicates the location of the additional object using a "data" attribute. In this example, the location of a markup language object is designated by "file://dvdrom:/adv_obj/index.xhtm" (see 804 in FIG. 18). Note that "file://dvdrom:/adv_obj/" indicates that the markup language object is present under the "ADV_OBJ" directory in the disk, and "index.xhtm" indicates the file name of the markup language object. With this description, as will be described using FIG. 22, the markup language object (see 843 to 845 in FIG. 22) can be appended to designated DVD-Video contents (see 842 in FIG. 22).

Furthermore, the fifth Vclick stream is also designated using an <object> tag in <vts_tt num="n"> in <vts num="1">. This indicates that the additional object designated by the <object> tag is appended to the n-th title domain on the first VTS space. That is, the two additional objects are appended to the n-th title domain on the first VTS space.

The <object> tag indicates the location of the additional object using a "data" attribute. In this example, the location of a text object is designated by "file://dvdrom:/adv_obj/ttext.xml" (see 805 in FIG. 18). Note that "file://dvdrom: /adv_obj/" indicates that the text object is present under the "ADV_OBJ" directory in the disk, and "ttext.xml" indicates the file name of the text object. With this description, as will be described using FIG. 22, the timed text object (see 846 in FIG. 22) can be appended to the designated DVD-Video contents (see 842 in FIG. 22).

FIG. 22 shows an example of a screen formed of a markup object that forms a background, text, and picture, reduced-scaled DVD-Video contents, and a timed text object laid out on the DVD-Video contents. In FIG. 22, reference numeral 841 denotes a markup page; 842, reduced-scaled DVD-Video contents; 843, a picture called by the markup object; 844, a background provided by the markup object; 845, text provided by the markup object; and 846, text provided by the timed text object superimposed on the reduced-scale DVD-Video contents 842.

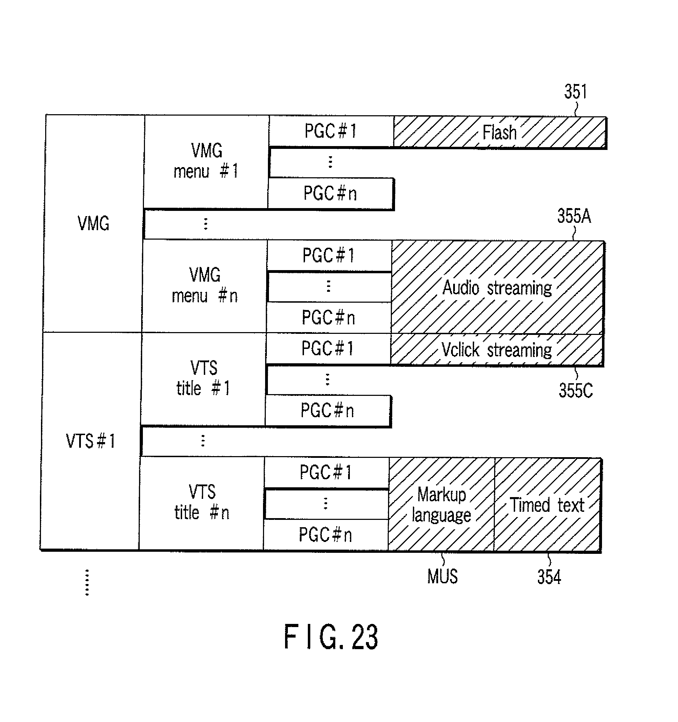

FIG. 23 exemplifies the relationship between the additional objects described in the aforementioned description example of the playback sequence (PSQ). In this example, a Flash object 351 is set in PGC#1 of VMG menu #1 in video manager VMG, and an audio streaming object 355A is set in PGC#1 to PGC#n of VMG menu #n in that video manager. Also, a Vclick stream 355C is set in PCG#1 of VTS title #1 in video title set VTS#1, and a markup language object MUS and timed text object 354 are set in PGC#1 to PGC#n of VTS title #n in that video title set.

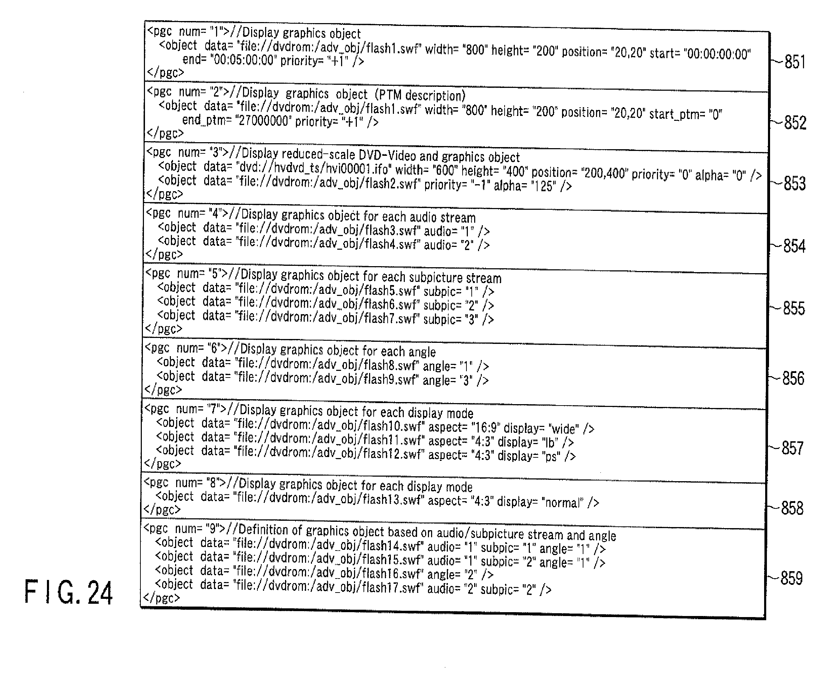

FIG. 24 shows other description examples (a total of nine examples) of the playback sequence (PSQ) file. In the first example (see 851 in FIG. 24), one graphics object (graphics object #1) recorded on the disk is appended to one PGC (PGC#1). Note that "width", "height", "position", "start", "end", and "priority" attributes are described in an <object> tag.

The "width" attribute indicates the length (unit: pixels) in the horizontal direction upon displaying the additional object. The "height" attribute indicates the length (unit: pixels) in the vertical direction upon displaying the additional object. When the length designated by "width/height" is smaller than the original length of the additional object, the additional object is reduced; when it is larger than the original length of the additional object, the additional object is enlarged. The "position" attribute indicates the coordinate position (unit: pixels) upon displaying the additional object. Note that the coordinate position can be expressed by "(x, y)" of a system which has the upper left point as an origin "(0, 0)", the abscissa as the x-axis, and the ordinate as the y-axis.

Note that the "width", "height", and "position" attributes can be expressed using a "style" attribute as follows:

    <OBJECT style="position:fixed;top:Xlpx;left:Ylpx;width:X2px;hei ght:Y2px" data="dvd://hvdvd ts/hvi00001.ifo"/>

Note that "top:X1px" indicates the X-coordinate (X1 is a pixel value) of the layout position of an object (DVD-Video contents in the following example) from the upper left corner of the screen. "left:Y1px" indicates the Y-coordinate (Y1 is a pixel value) of the layout position of an object (DVD-Video contents in the following example) from the upper left corner of the screen. These pieces of information are equivalent to those designated by the aforementioned "position" attribute. Also, "width:X2px" indicates the length of an object to be laid out in the horizontal direction (X2 is a pixel value). This information is equivalent to that designated by the aforementioned "width" attribute. Furthermore, "height:Y2px" indicates the length of an object to be laid out in the vertical direction (Y2 is a pixel value). This information is equivalent to that designated by the aforementioned "height" attribute. Also, "position:fixed;" indicates that the layout method designates an absolute position and fixed position.

The "start" attribute expresses a relative value of the display start time of the additional object on the precision of 'HH : MM : SS : FF' (time : minute : second : frame) format. The "end" attribute expresses a relative value of the display end time of the additional object on the precision of 'HH : MM : SS : FF' (time : minute : second : frame) format. Note that the "start" and "end" attributes represent relative times from the PGC start position when the additional object is appended to the PGC as in this example. If the additional object is appended to a title domain ("<vts_tt>"), these attributes represent the relative times from the start position of the title domain.

The "priority" attribute indicates the relationship between the additional object and DVD-Video contents. The "priority" attribute of the DVD-Video contents normally indicates "0" as a default value. If the "priority" attribute assumes a positive value, the additional object is laid out on the front side of the DVD-Video contents; if the "priority" attribute assumes a negative value, the additional object is laid out behind the DVD-Video contents. If there are a plurality of objects, they are laid out in turn on the front side as they have larger values.

FIG. 19 above shows the configuration example of the screen based on PGC#1. On this screen, the DVD-Video contents 811 is full-screen displayed, and the graphics object 812 is displayed at the designated position to have the designated size. Since the "priority" attribute of the graphics object 812 is larger than that of the DVD-Video contents 811, the graphics object 812 is displayed on the front side, and processes user's operations first. Furthermore, the display period of the graphics object 812 is five minutes immediately after the beginning of PGC#1.

Note that priority upon receiving processes of user's operations can be designated using the "priority" attribute (or another new attribute). For example, assume that a menu screen formed by the DVD-Video contents and that formed by the graphics object are simultaneously displayed. In this case, the "priority" attribute of the DVD-Video contents normally indicates "0" as a default value. If the "priority" attribute of the graphics object assumes a positive value, the graphics object processes user's operations prior to the DVD-Video contents. If the "priority" attribute of the graphics object assumes a negative value, the DVD-Video contents process user's operations prior to the graphics object. If there are a plurality of objects, they have higher priority as they have larger values.

In the second example (see 852 in FIG. 24), one graphics object (graphics object #1) recorded on the disk is appended to one PGC (PGC#2). Note that "width", "height", "position", "start_ptm", "end_ptm", and "priority" attributes are described in an <object> tag. The "start_ptm" attribute represents a relative value of the display start time of the additional object on the precision of Presentation Time (PTM), a counter using 90-kHz clocks). The "end_ptm" attribute represents a relative value of the display end time of the additional object on the precision of PTM. In this case, the "start_ptm" and "end_ptm" attribute represent the relative times from the PGC start position when the additional object is appended to the PGC like in this example. If the additional object is appended to a title domain ("<vts_tt>"), these attributes represent the relative times from the title domain start position.

In the third example (see 853 in FIG. 24), one graphics object (graphics object #1) recorded on the disk is appended to one PGC (PGC#3). Unlike in the above two examples, this example reduces the DVD-Video contents in scale. When the value of a "data" attribute in an <object> tag is "dvd://hvdvd_ts/hvi00001.ifo", this means to display the DVD-Video contents. In the above examples, a description using the <object> tag is omitted since the DVD-Video contents are full-screen displayed. In this example, since values are described in the <object> tag required to display the DVD-Video contents using "width", "height", and "position" attributes, the DVD-Video contents can be displayed in a reduced-scale.

Note that an "alpha" attribute represents an alpha value, i.e., transparency $\alpha$. The alpha value can designate from "0" to "255": 0 indicates transparency, and "255", opacity. Also, the alpha value can be expressed in percentage figures, i.e., from "0%" to "100%". At this time, "0%" indicates transparency, and "100%", opacity. The next <object> tag is used to display the graphics object, and "width", "height", and "position" attributes are omitted since the graphics object is to be full-screen displayed.

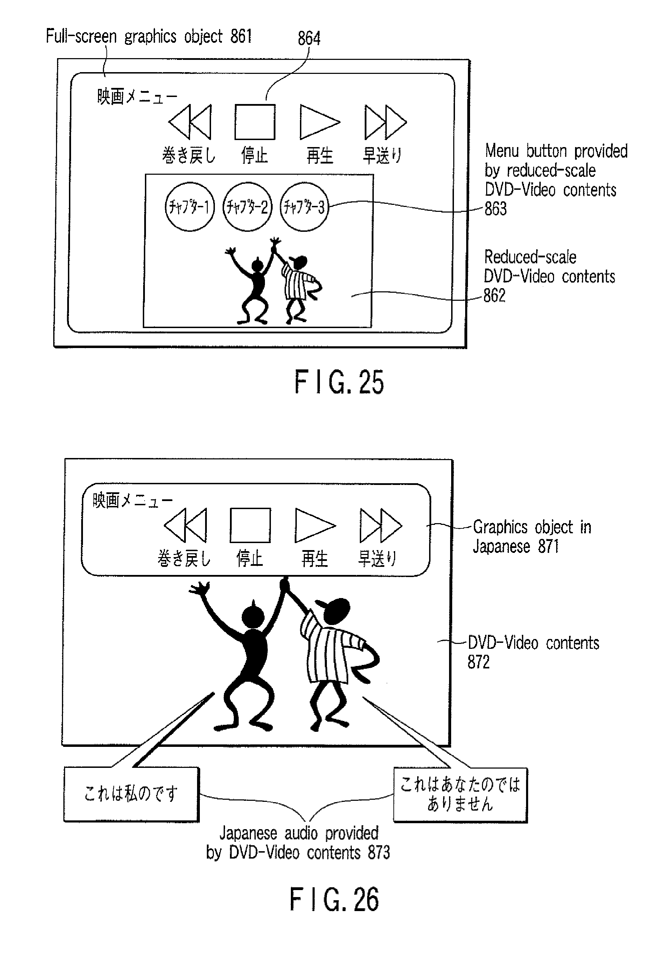

FIG. 25 shows a configuration example of the screen based on PGC#3. In this example, a graphics object 861 is full-screen displayed, and DVD-Video contents are displayed at a designated position to have a designated size. Since the "priority" attribute of the graphics object 861 is smaller than that of the DVD-Video contents 862, the reduced-scale DVD-Video contents 862 is displayed on the front side, and processes user's operations first. This example includes menu buttons 863 which are provided by the DVD-Video contents 862 and are used for chapter playback, and playback menu buttons 864 provided by the graphics object. Since the DVD-Video contents 862 have higher priority, it is checked first if the DVD-Video contents 862 have settings for user's operations. If such settings are found, the DVD-Video contents 862 process user's operations; otherwise, the graphics objects 861 processes user's operations.

In the fourth example (see 854 in FIG. 24), two graphics objects (Flash #3, Flash #4) recorded on the disk are appended to one PGC (PGC#4). Note that an "audio" attribute in an <object> tag corresponds to the audio stream number. In this example, when audio stream #1 of the DVD-Video contents is played back, Flash #3 (flash3.swf) is synchronously played back; when audio stream #2 is played back, Flash #4 (flash4.swf) is synchronously played back.

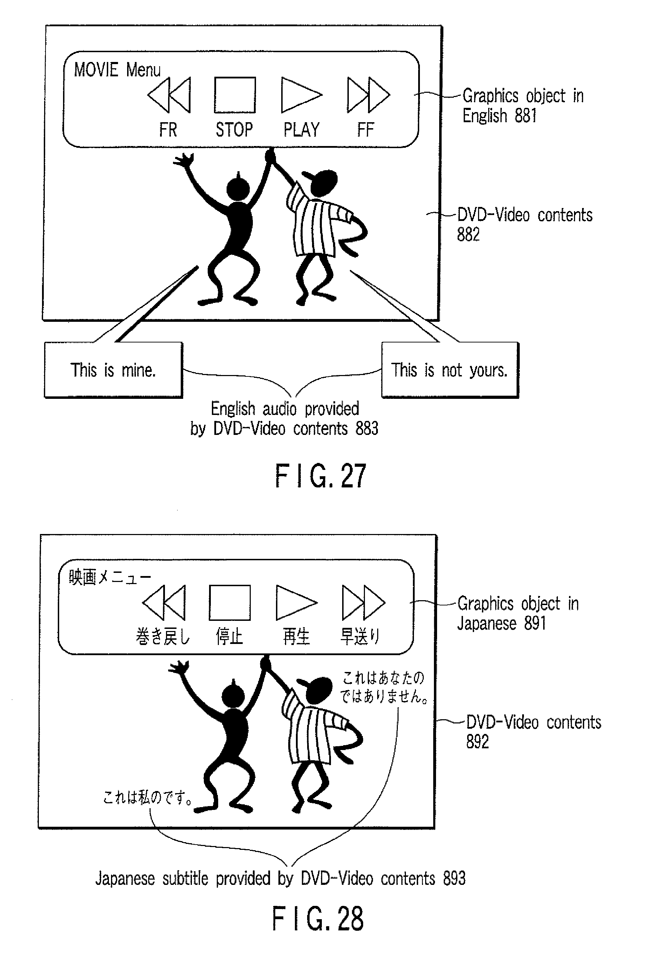

For example, when audio stream #1 of the DVD-Video contents corresponds to a Japanese language, and audio stream #2 corresponds to an English language, Flash #3 (see 871) is configured using Japanese (that is, display of the graphics object is described in Japanese or the access destination of the graphics object is contents described in Japanese), as shown in FIG. 26. Also, Flash #4 (881) is configured using English (that is, display of the graphics object is described in English or the access destination of the graphics object is contents described in English), as shown in FIG. 27. In this way, the audio language (883 in FIG. 27 or 893 in FIG. 28) of the DVD-Video contents (882 in FIG. 27 or 892 in FIG. 28) can be matched with that of the graphics object (881 in FIG. 27 or 891 in FIG. 28).

In practice, the playback apparatus searches this playback sequence (PSQ) file for the corresponding graphics object with reference to a system parameter indicating the audio stream number in the playback apparatus, and plays it back. For example, when audio stream #1 is played back, and corresponding Flash #3 is displayed, if the user changes audio to be played back to audio stream #2 using a remote controller or the like, Flash #4 corresponding to the changed audio stream is displayed as the graphics object to be displayed according to the playback sequence file.

In this example, audio streams are managed using the stream numbers, but they may be managed using language codes in place of the stream numbers. In this case, each audio stream can be expressed by audio_lang="xx" (xx is a language code specified by ISO639) using an audio_lang attribute in place of the audio attribute. For example, audio_lang="jp" indicates an audio stream in Japanese, and audio_lang="en" indicates an audio stream in English.

In the fifth example (see 855 in FIG. 24), three graphics objects (Flash #5, Flash #6, Flash #7) recorded on the disk are appended to one PGC (PGC#5). Note that a "subpic" attribute in an <object> tag corresponds to the sub-picture stream number (sub-picture number). In this example, when sub-picture stream #1 of the DVD-Video contents is played back, Flash #5 (flash5.swf) is synchronously played back. When sub-picture stream #2 is played back, Flash #6 (flash6.swf) is synchronously played back. Also, when sub-picture stream #3 is played back, Flash #7 (flash7.swf) is synchronously played back.

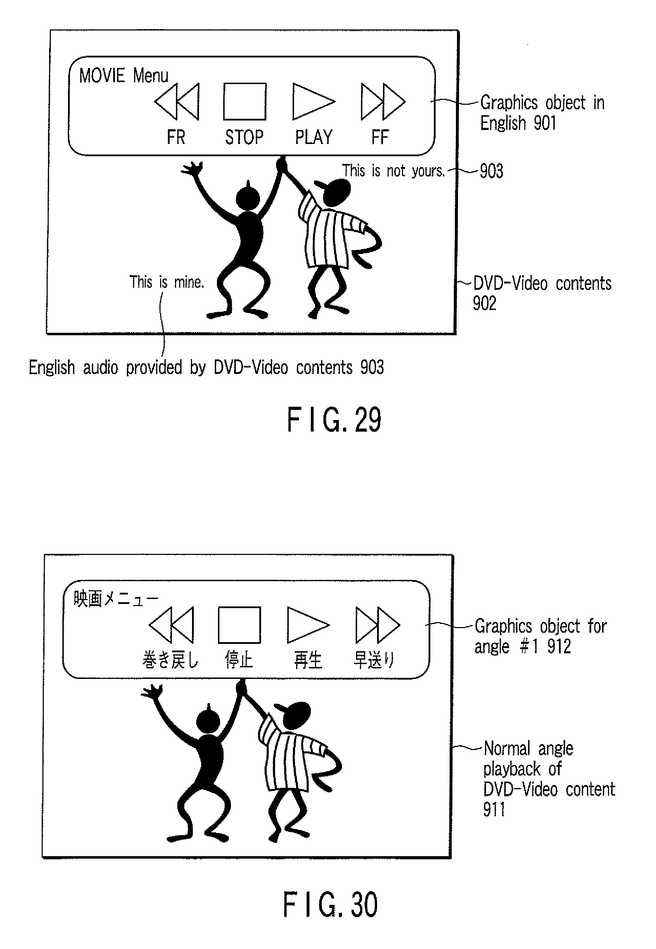

For example, when sub-picture stream #1 of the DVD-Video contents corresponds to a Japanese subtitle, and sub-picture stream #3 corresponds to an English subtitle, Flash #5 (see 891 in FIG. 28) is configured using Japanese (that is, display of the graphics object is described in Japanese or the access destination of the graphics object is contents described in Japanese), as shown in FIG. 28. Also, Flash #7 (see 901 in FIG. 29) is configured using English (that is, display of the graphics object is described in English or the access destination of the graphics object is contents described in English), as shown in FIG. 29. Hence, the subtitle language (893 in FIG. 28 or 903 in FIG. 29) of the DVD-Video contents (892 in FIG. 28 or 902 in FIG. 29) can be matched with that of the graphics object (891 in FIG. 28 or 901 in FIG. 29).

In practice, the playback apparatus searches this playback sequence (PSQ) file for the corresponding graphics object with reference to a system parameter indicating the sub-picture stream number in the playback apparatus, and plays it back. For example, when sub-picture stream #1 is played back, and corresponding Flash #5 is displayed, if the user changes a subtitle (sub-picture) to be played back to sub-picture stream #3 using a remote controller or the like, Flash #7 corresponding to the changed sub-picture stream is displayed as the graphics object to be displayed according to the playback sequence file.

In this example, sub-picture streams are managed using the stream numbers, but they may be managed using language codes in place of the stream numbers. In this case, each sub-picture stream can be expressed by subpic_lang="xx" (xx is a language code specified by ISO639) using a subpic_lang attribute in place of the subpic attribute. For example, subpic_lang="jp" indicates a sub-picture stream in Japanese, and subpic_lang="en" indicates a sub-picture stream in English.

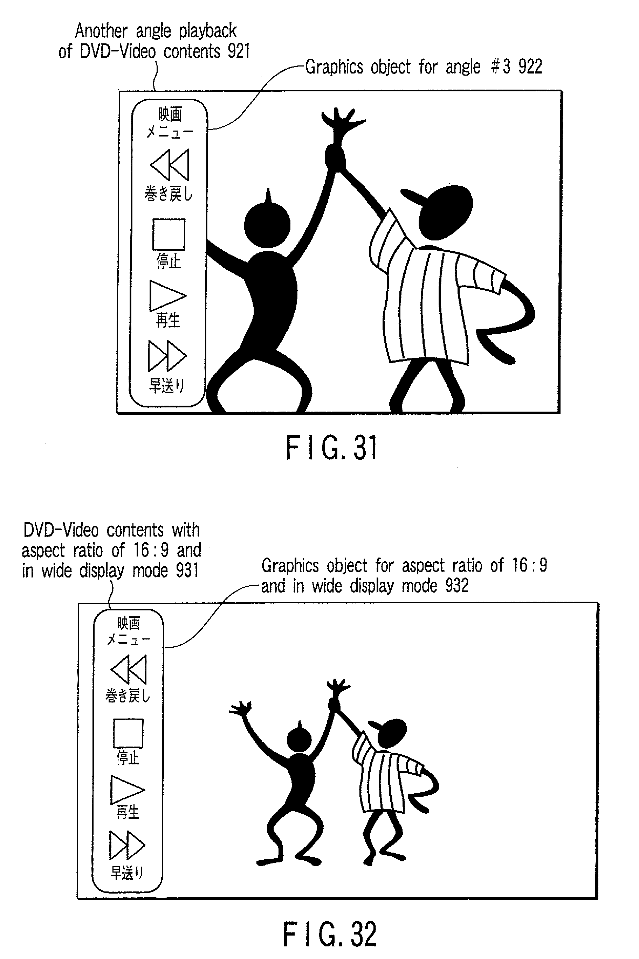

In the sixth example (see 856 in FIG. 24), two graphics objects (Flash #8, Flash #9) recorded on the disk are appended to one PGC (PGC#6). Note that an "angle" attribute in an <object> tag corresponds to the angle number. In this example, when angle #1 of the DVD-Video contents is played back (see 911 in FIG. 30), Flash #8 (flash8.swf) is synchronously played back (see 912 in FIG. 30. When angle #3 is played back (see 921 in FIG. 31), Flash #9 (flash9.swf) is synchronously played back (see 922 in FIG. 31). Also, when angle #2 is played back, no graphics object is played back.

Normally, in case of different angles, since the layouts of persons, buildings, and the like differ, the sizes and positions of graphics objects are preferably independently set for respective angles. (Respective graphics object data may be multiplexed to one graphics object.) In practice, the playback apparatus searches this playback sequence (PSQ) file for the corresponding graphics object with reference to a system parameter indicating the angle number in the playback apparatus, and plays it back.

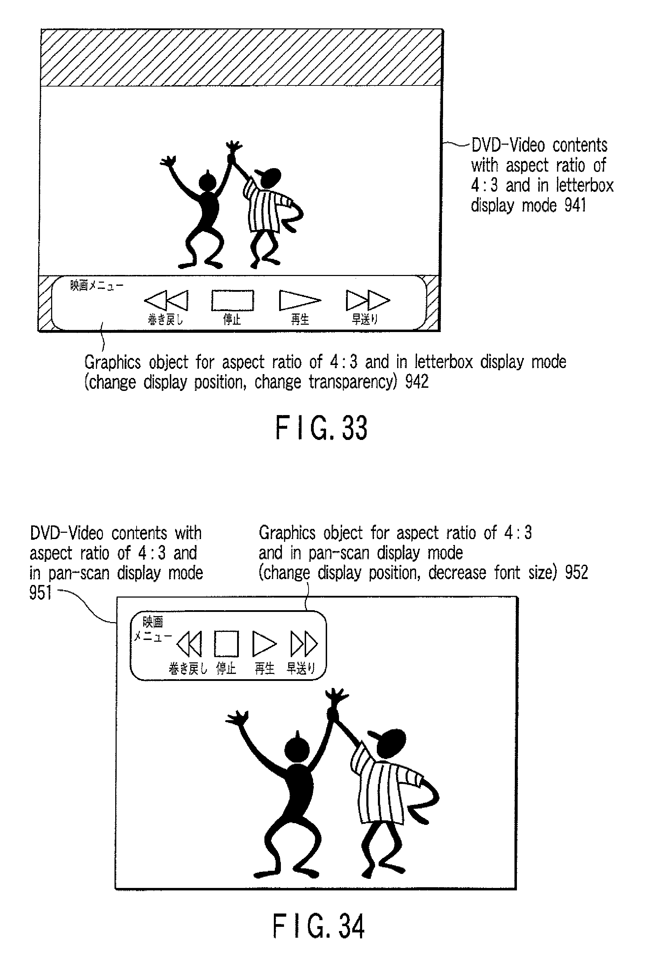

In the seventh example (see 857 in FIG. 24), three graphics objects (Flash #10, Flash #11, Flash #12) recorded on the disk are appended to one PGC (PGC#7). Note that an "aspect" attribute in an <object> tag corresponds to a (default) display aspect ratio, and a "display" attribute in the <object> tag corresponds to a (current) display mode. In this example, the DVD-Video contents themselves have an aspect ratio "16 : 9". That is, in this example, "wide" output (see 931 in FIG. 32) is permitted for a TV monitor having an aspect ratio "16 : 9", and a "letterbox (lb)" output (see 941 in FIG. 33) or "pan-scan (ps)" output (see 951 in FIG. 34) is permitted for a TV monitor having an aspect ratio "4 : 3".

Based on such settings, when the (default) display aspect ratio is "16 : 9" and the (current) display mode is "wide", Flash #10 is synchronously played back as a graphics object (see 932 in FIG. 32). When the (default) display aspect ratio is "4 : 3" and the (current) display mode is "1b", Flash #11 is synchronously played back (see 942 in FIG. 33). When the (default) display aspect ratio is "4 : 3" and the (current) display mode is "ps", Flash #12 is synchronously played back (see 952 in FIG. 34).

For example, a graphics object which is displayed right beside a person at the aspect ratio "16 : 9" is displayed on the upper or lower (black) portion of the screen when the aspect ratio is "4 : 3" in the "letterbox" display mode. At the aspect ratio "4 : 3" in the "pan-scan" display mode, the right and left portions of the screen are cut, but a graphics object is changed to a displayable position. According to the screen configuration, the size of a graphics object can be reduced or enlarged, or the text size in the graphics object can be reduced or enlarged. As a result, a graphics object can be displayed in correspondence with the display state of the DVD-Video contents. In practice, the playback apparatus searches this playback sequence (PSQ) file for the corresponding graphics object with reference to system parameter indicating "default display aspect ratio" and "current display mode" in the playback apparatus, and plays it back.

In the eighth example (see 858 in FIG. 24), one graphics object (Flash #13) recorded on the disk is appended to one PGC (PGC#8). As in the above example, an "aspect" attribute in an <object> tag corresponds to a (default) display aspect ratio, and a "display" attribute in the <object> tag corresponds to a (current) display mode. In this example, the DVD-Video contents itself have an aspect ratio "4 : 3", and this sequence is applied to a TV monitor having an aspect ratio "4 : 3" upon outputting in a "normal" mode.

Finally, a case will be exemplified below wherein the aforementioned functions can be used in combination. That is, in the ninth example (see 859 in FIG. 24), four graphics objects (Flash #13, Flash #14, Flash #15, Flash #16) recorded on the disk are appended to one PGC (PGC#9). In this example, when audio stream #1 of the DVD-Video contents is played back, sub-picture stream #1 is played back, and angle #1 is played back, Flash #13 ("flash13.swf") is synchronously played back. When audio stream #1 is played back, sub-picture stream #2 is played back, and angle #1 is played back, Flash #14 ("flash14.swf") is synchronously played back. When angle #2 is played back, Flash #15 ("flash15.swf") is synchronously played back. When audio stream #2 is played back and sub-picture stream #2 is played back, Flash #16 ("flash16.swf") is synchronously played back.

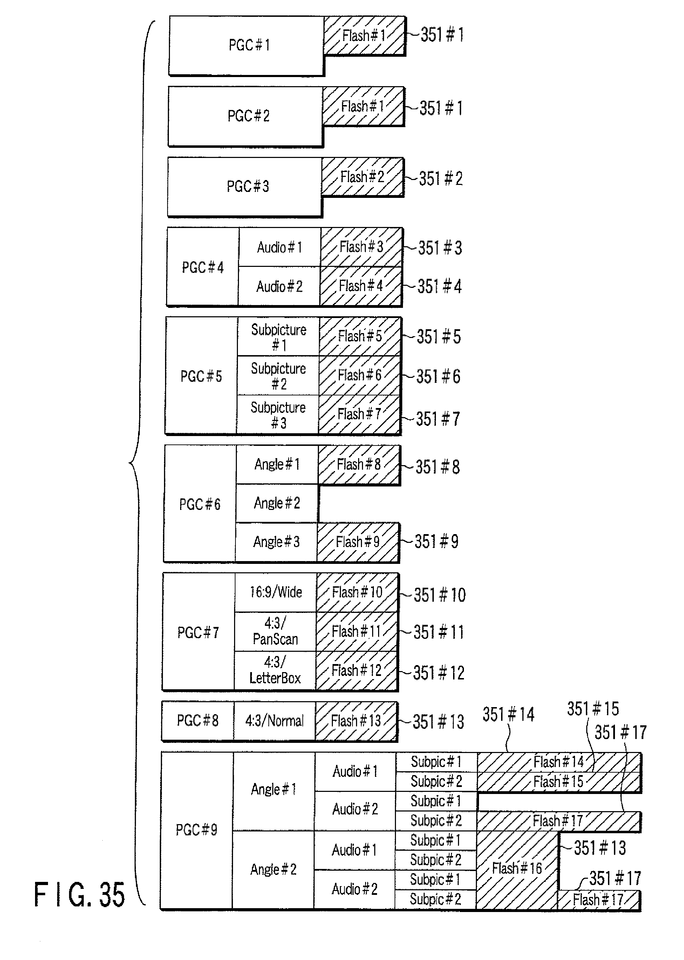

FIG. 35 shows an example of the correspondence between PGCs of the DVD-Video contents, and Flash objects appended to their attributes in association with the above nine examples.

The playback apparatus of this embodiment loads the playback sequence (PSQ) file in advance or refers to it as needed prior to playback of the DVD-Video contents, thus changing, in real time, additional objects such as a Flash object, timed text object, audio streaming object, markup language object, and Vclick streaming object, which are to be appended sequentially, in accordance with the playback state of the DVD-Video contents. In this way, even when the user has changed the playback state, an additional object suited to the changed playback state can be played back.

The number of files (the number of objects) of one additional object is increased to reduce the file size, thereby decreasing an area (buffer) used to store additional objects required for the playback apparatus. Although the file size becomes large, the number of files is decreased (i.e., one object includes a plurality of additional objects). In this way, when the playback state of the DVD-Video contents has changed, additional objects can be smoothly switched. Hence, a high degree of freedom in authoring can be assured upon forming additional objects.

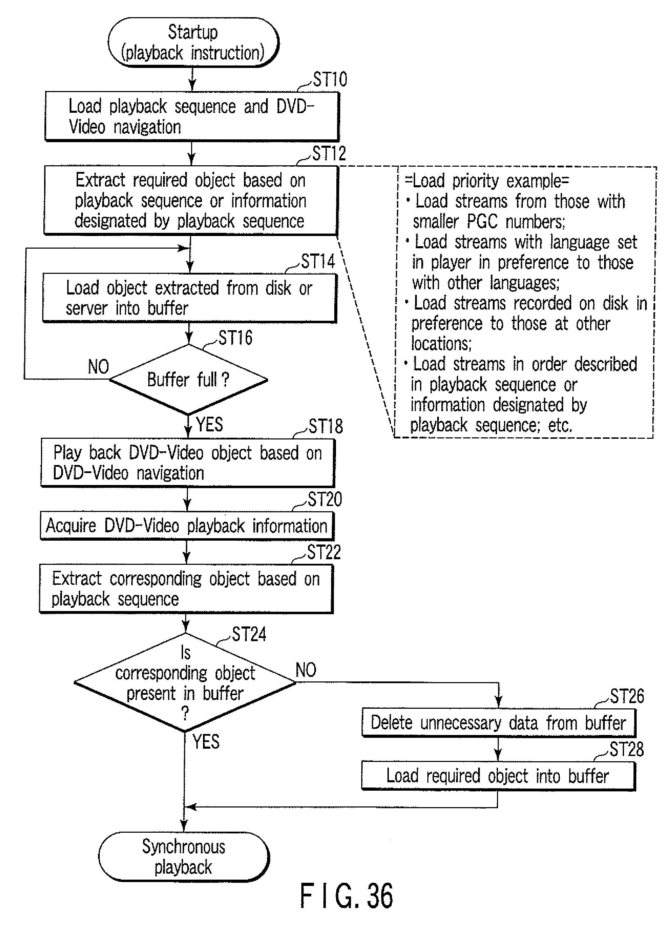

FIG. 36 is a flowchart for explaining the startup processing sequence according to the embodiment of the present invention. The playback apparatus loads the playback sequence (PSQ) and DVD-Video navigation information from the information recording medium, and stores them in its memory (work memory or buffer; e.g., 105 in FIG. 10 or 209 in FIG. 39) (step ST10). Note that these pieces of information can be loaded from an external server on the basis of version information included in the information itself. From this playback sequence, information such as the locations of objects to be played back, their file names, and the like can be acquired. Based on the acquired information, required objects are extracted (step ST12). Information of each object to be extracted may be recorded on the information recording medium or external server as, e.g., loading information, and may be referred to from the playback sequence.

The extracted object data are stored in the buffer (step ST14). Upon storing the object data in the buffer, some methods of determining the order of buffering of objects (methods of setting priority of loading into the buffer) are available.

In the first example of that method, objects are loaded in turn from those with smaller PGC numbers of the DVD-Video contents corresponding to respective streams. For example, when object #1 is appended to PGC#1, object #2 is appended to PGC#2, and streams to be loaded are objects #1 and #2, object #1 is loaded first into the buffer, and object #2 is then loaded into the buffer.

In the second example, the priority of loading is determined in accordance with a language pre-set in a player (a client 200 in FIG. 39 or the like). For example, assume that Japanese is set in the player as the first language (or default language), and English is set as the second language. In this case, when an English attribute (e.g., English is designated by a "language" attribute) is assigned to object #1, and a Japanese attribute (e.g., Japanese is designated by a "language" attribute), object #2 is loaded first into the buffer, and object #1 is then loaded into the buffer.

In the third example, streams to be loaded, which are recorded on the disk, are given priority over those recorded on the external server. For example, when object #2 is recorded on the external server, and objects #1 and #3 are recorded on the disk, objects #1 and #3 are loaded into the buffer in the order of their numbers, and object #2 is then loaded into the buffer upon loading objects #1 to #3.

In the fourth example, objects are loaded into the buffer in the order of objects described in the playback sequence (PSQ) or in the order of objects described in information of objects to be extracted (corresponding to the aforementioned loading information) designated by the playback sequence. In this case, the content provider can determine the priority of objects, and the playback sequence or loading information must be created accordingly.

After objects are stored up to a size assigned to the buffer (for example, this size is designated by the playback sequence) (YES in step ST16), playback of the DVD-Video contents starts. Alternatively, if the size of objects stored in the buffer has reached a predetermined playback size (for example, this size is designated by the playback sequence), playback of the DVD-Video contents may start.

After playback of the DVD-Video contents has started (step ST18), its playback information (title, PGC number, audio stream number, sub-picture stream number, angle number, aspect ratio information, playback time information, and the like) is acquired (step ST20), and the playback sequence is searched for the corresponding object on the basis of at least some pieces of information (e.g., PGC number) of the acquired information (step ST22). If data of the object to be played back is currently stored in the buffer (YES in step ST24), playback of that object immediately starts in synchronism with the current DVD playback.

If data of the object is not currently stored in the buffer (NO in step ST24), data of the retrieved object is loaded into the buffer (step ST28) by deleting unnecessary data from the buffer (step ST26), or by overwriting the buffer area of unnecessary data. If the data size to be loaded into the buffer has reached a minimum playback size, playback of the buffered object starts in synchronism with the current DVD playback.

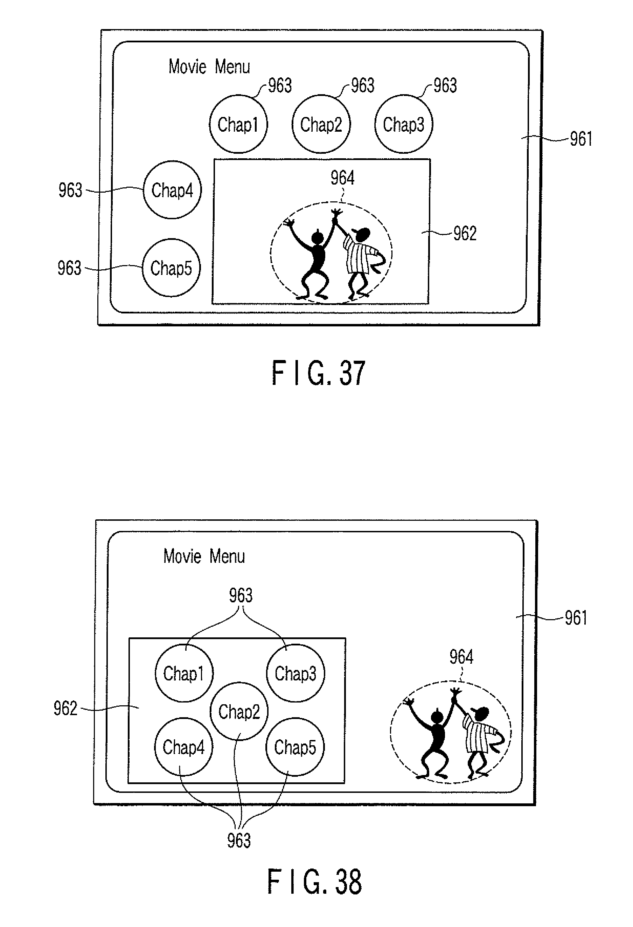

As a result of this synchronous playback, a layout shown in, e.g., FIG. 37 or 38 can be played back. In the example of FIG. 37, a picture 964 of the DVD-Video contents is displayed within a DVD-Video display area 962, and buttons 963 indicating chapters 1 to 5 of the DVD-Video are displayed with $\alpha = 100\%$ within a display area (movie menu) 961 of an advanced graphics object (corresponding to 351C in FIG. 8). In the example of FIG. 38, the picture 964 of the DVD-Video contents is displayed within the display area 961, and the buttons 963 indicating chapters 1 to 5 are displayed within the display area 962. The display methods shown in FIGS. 37 and 38 can be arbitrarily switched by a user's instruction (or a description of the markup language or the like).

FIG. 39 is a schematic block diagram showing the arrangement of a streaming apparatus (network compatible disc player) according to the embodiment of the present invention. The functions of respective building components will be described below using FIG. 39.

Reference numeral 200 denotes a client; 201, a server; and 221, a network that connects the server and client. Client 200 comprises moving picture playback engine 203, Vclick engine 202, disc device 230, user interface 240, network manager 208, and disc device manager 213. Reference numerals 204 to 206 denote devices included in the moving picture playback engine; 207, 209 to 212, and 214 to 218, devices included in the Vclick engine; and 219 and 220, devices included in the server. Client 200 can play back moving picture data, and can display a document described in a markup language (e.g., HTML or the like), which are stored in disc device 230. Also, client 200 can display a document (e.g., HTML) on the network.

When meta data associated with moving picture data stored in client 200 is stored in server 201, client 200 can execute a playback process using this meta data and the moving picture data in disc device 230. Server 201 sends media data M1 to client 200 via network 221 in response to a request from client 200. Client 200 processes the received media data in synchronism with playback of a moving picture to implement additional functions of hypermedia and the like (note that "synchronization" is not limited to a physically perfect match of timings but some timing error is allowed).

Moving picture playback engine 203 is used to play back moving picture data stored in disc device 230, and has devices 204, 205, and 206. Reference numeral 231 denotes a moving picture data recording medium (more specifically, a DVD, video CD, video tape, hard disc, semiconductor memory, or the like). Moving picture data recording medium 231 records digital and/or analog moving picture data. Meta data associated with moving picture data may be recorded on moving picture data recording medium 231 together with the moving picture data. Reference numeral 205 denotes a moving picture playback controller, which can control playback of video/audio/sub-picture data D1 from moving picture data recording medium 231 in accordance with a "control signal" output from interface handler 207 of Vclick engine 202.

More specifically, moving picture playback controller 205 can output a "trigger" signal indicating the playback status of video/audio/sub-picture data D1 to interface handler 207 in accordance with a "control" signal which is generated upon generation of an arbitrary event (e.g., a menu call or title jump based on a user instruction) from interface handler 207 in a moving picture playback mode. In this case (at a timing simultaneously with output of the trigger signal or an appropriate timing before or after that timing), moving picture playback controller 205 can output a "status" signal indicating property information (e.g., an audio language, sub-picture caption language, playback operation, playback position, various kinds of time information, disc contents, and the like set in the player) to interface handler 207. By exchanging these signals, a moving picture read process can be started or stopped, and access to a desired location in moving picture data can be made.

AV decoder 206 has a function of decoding video data, audio data, and sub-picture data recorded on moving picture data recording medium 231, and outputting decoded video data (mixed data of the aforementioned video and sub-picture data) and audio data. Moving picture playback engine 203 can have the same functions as those of a playback engine of a normal DVD video player which is manufactured on the basis of the existing DVD video standard. That is, client 200 in FIG. 39 can play back video data, audio data, and the like with the MPEG2 program stream structure in the same manner as a normal DVD video player, thus allowing playback of existing DVD video discs (discs complying with the conventional DVD video standard) (to assure playback compatibility with existing DVD software).

Interface handler 207 makes interface control among modules such as moving picture playback engine 203, disc device manager 213, network manager 208, meta data manager 210, buffer manager 211, script interpreter 212, media decoder 216 (including meta data decoder 217), layout manager 215, AV renderer 218, and the like. Also, interface handler 207 receives an input event by a user operation (operation to an input device such as a mouse, touch panel, keyboard, or the like) and transmits an event to an appropriate module.

Interface handler 207 has an access table parser that parses a Vclick access table, an information file parser that parses a Vclick information file, a property buffer that records property information managed by the Vclick engine, a system clock of the Vclick engine, a moving picture clock as a copy of moving picture clock 204 in the moving picture playback engine, and the like.

Network manager 208 has a function of acquiring a document (e.g., HTML), still picture data, audio data, and the like onto buffer 209 via the network, and controls the operation of Internet connection unit 222. When network manager 208 receives a connection/disconnection instruction to/from the network from interface handler 207 that has received a user operation or a request from meta data manager 210, it switches connection/disconnection of Internet connection unit 222. Upon establishing connection between server 201 and Internet connection unit 222 via the network, network manager 208 exchanges control data and media data (object meta data).

Data to be transmitted from client 200 to server 201 include a session open request, session close request, media data (object meta data) transmission request, status information (OK, error, etc.), and the like. Also, status information of the client may be exchanged. On the other hand, data to be transmitted from the server to the client include media data (object meta data) and status information (OK, error, etc.)

Disc device manager 213 has a function of acquiring a document (e.g., HTML), still picture data, audio data, and the like onto buffer 209, and a function of transmitting video/audio/sub-picture data D1 to moving picture playback engine 203. Disc device manager 213 executes a data transmission process in accordance with an instruction from meta data manager 210.

Buffer 209 temporarily stores media data M1 which is sent from server 201 via the network (via the network manager). Moving picture data recording medium 231 records media data M2 in some cases. In such case, media data M2 is stored in buffer 209 via the disc device manager. Note that media data includes Vclick data (object meta data), a document (e.g., HTML), and still picture data, moving picture data, and the like attached to the document.

When media data M2 is recorded on moving picture data recording medium 231, it may be read out from moving picture data recording medium 231 and stored in buffer 209 in advance prior to the start of playback of video/audio/sub-picture data D1. This is for the following reason: since media data M2 and video/audio/sub-picture data D1 have different data recording locations on moving picture data recording medium 231, if normal playback is made, a disc seek or the like occurs and seamless playback cannot be guaranteed. The above process can avoid such problem.

As described above, when media data M1 downloaded from server 201 is stored in buffer 209 as in media data M2 recorded on moving picture data recording medium 231, video/audio/sub-picture data D1 and media data can be simultaneously read out and played back.

Note that the storage capacity of buffer 209 is limited. That is, the data size of media data M1 or M2 that can be stored in buffer 209 is limited. For this reason, unnecessary data may be erased under the control (buffer control) of metal data manager 210 and/or buffer manager 211.

Meta data manager 210 manages meta data stored in buffer 209, and transfers meta data having a corresponding time stamp to media decoder 216 upon reception of an appropriate timing ("moving picture clock" signal) synchronized with playback of a moving picture from interface handler 207.

When meta data having a corresponding time stamp is not present in buffer 209, it need not be transferred to media decoder 216. Meta data manager 210 controls to load data for a size of the meta data output from buffer 209 or for an arbitrary size from server 201 or disc device 230 onto buffer 209. As a practical process, meta data manager 210 issues a meta data acquisition request for a designated size to network manager 208 or disc device manager 213 via interface handler 207. Network manager 208 or disc device manager 213 loads meta data for the designated size onto buffer 209, and sends a meta data acquisition completion response to meta data manager 210 via interface handler 207.

Buffer manager 211 manages data (a document (e.g., HTML), still picture data and moving picture data appended to the document, and the like) other than meta data stored in buffer 209, and sends data other than meta data stored in buffer 209 to parser 214 and media decoder 216 upon reception of an appropriate timing ("moving picture clock" signal) synchronized with playback of a moving picture from interface handler 207. Buffer manager 211 may delete data that becomes unnecessary from buffer 209.

Parser 214 parses a document written in a markup language (e.g., HTML), and sends a script to script interpreter 212 and information associated with a layout to layout manager 215.

Script interpreter 212 interprets and executes a script input from parser 214. Upon executing the script, information of an event and property input from interface handler 207 can be used. When an object in a moving picture is designated by the user, a script is input from meta data decoder 217 to script interpreter 212.

AV renderer 218 has a function of controlling video/audio/text outputs. More specifically, AV renderer 218 controls, e.g., the video/text display positions and display sizes (often also including the display timing and display time together with them) and the level of audio (often also including the output timing and output time together with it) in accordance with a "layout control" signal output from layout manager 215, and executes pixel conversion of a video in accordance with the type of a designated monitor and/or the type of a video to be displayed. The video/audio/text outputs to be controlled are those from moving picture playback engine 203 and media decoder 216. Furthermore, AV renderer 218 has a function of controlling mixing or switching of video/audio data input from moving picture playback engine 203 and video/audio/text data input from the media decoder in accordance with an "AV output control" signal output from interface handler 207.

Layout manager 215 outputs a "layout control" signal to AV renderer 218. The "layout control" signal includes information associated with the sizes and positions of moving picture/still picture/text data to be output (often also including information associated with the display times such as display start/end timings and duration), and is used to designate AV renderer 218 about a layout used to display data. Layout manager 215 checks input information such as user's clicking or the like input from interface handler 207 to determine a designated object, and instructs meta data decoder 217 to extract an action command such as display of associated information which is defined for the designated object. The extracted action command is sent to and executed by script interpreter 212.

Media decoder 216 (including meta data decoder) decodes moving picture/still picture/text data. These decoded video data and text image data are transmitted from media decoder 216 to AV renderer 218. These data to be decoded are decoded in accordance with an instruction of a "media control" signal from interface handler 207 and in synchronism with a "timing" signal from interface handler 207.

Reference numeral 219 denotes a meta data recording medium of the server such as a hard disc, semiconductor memory, magnetic tape, or the like, which records meta data to be transmitted to client 200. This meta data is associated with moving picture data recorded on moving picture data recording medium 231. This meta data includes object meta data. Reference numeral 220 denotes a network manager of the server, which exchanges data with client 200 via network 221. (Overview of Data Structure and Access Table)

A Vclick stream includes data associated with a region of an object (e.g., a person, article, or the like) that appears in the moving picture recorded on moving picture data recording medium 1, a display method of the object in client 200, and data of an action to be taken by the client when the user designates that object. An overview of the structure of Vclick data and its elements will be explained below. Object region data as data associated with a region of an object (e.g., a person, article, or the like) that appears in the moving picture will be explained first.

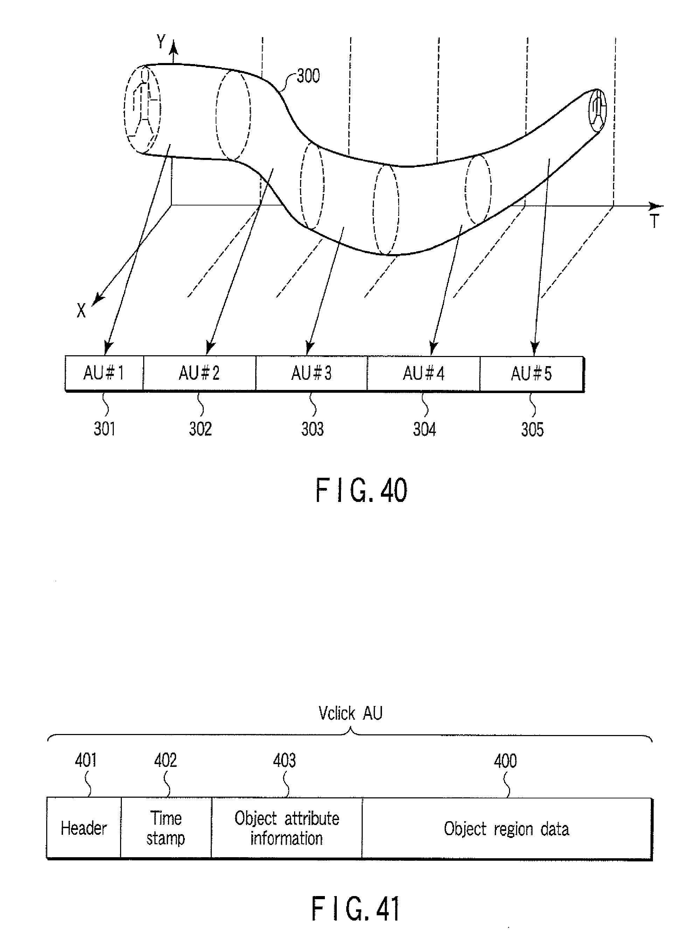

FIG. 40 is a view for explaining the structure of object region data. Reference numeral 300 denotes a locus, which is formed by a region of one object, and is expressed on a three-dimensional (3D) coordinate system of X (the horizontal coordinate value of a video picture), Y (the vertical coordinate value of the video picture), and Z (the time of the video picture). An object region is converted into object region data for each predetermined time range (e.g., between 0.5 sec to 1.0 sec, between 2 sec to 5 sec, or the like). In FIG. 40, one object region 300 is converted into five object region data 301 to 305, which are stored in independent Vclick access units (AU: to be described later). As a conversion method at this time, for example, MPEG-4 shape encoding, an MPEG-7 spatio-temporal locator, or the like can be used. Since the MPEG-4 shape encoding and MPEG-7 spatio-temporal locator are schemes for reducing the data size by exploiting temporal correlation among object regions, they suffer problems: data cannot be decoded halfway, and if data at a given time is omitted, data at neighboring times cannot be decoded. Since the region of the object that continuously appears in the moving picture for a long period of time, as shown in FIG. 40, is converted into data by dividing it in the time direction, easy random access is allowed, and the influence of omission of partial data can be reduced. Each Vclick_AU is effective in only a specific time interval in a moving picture. The effective time interval of Vclick_AU is called a lifetime of Vclick_AU.

FIG. 41 shows the structure of one unit (Vclick_AU), which can be accessed independently, in a Vclick stream used in the embodiment of the present invention. Reference numeral 400 denotes object region data. As has been explained using FIG. 40, the locus of one object region in a given time interval is converted into data. The time interval in which the object region is described is called an active time of that Vclick_AU. Normally, the active time of Vclick_AU is equal to the lifetime of that Vclick_AU. However, the active time of Vclick_AU can be set as a part of the lifetime of that Vclick_AU.

Reference numeral 401 denotes a header of Vclick_AU. The header 401 includes an ID used to identify Vclick_AU, and data used to specify the data size of that AU. Reference numeral 402 denotes a time stamp which indicates that of the start of the lifetime of this Vclick_AU. Since the active time and lifetime of Vclick_AU are normally equal to each other, the time stamp also indicates a time of the moving picture corresponding to the object region described in the object region data. As shown in FIG. 40, since the object region covers a certain time range, the time stamp 402 normally describes the time of the head of the object region. Of course, the time stamp may describe the time interval or the time of the end of the object region described in the object region data. Reference numeral 403 denotes object attribute information, which includes, e.g., the name of an object, an action description upon designation of the object, a display attribute of the object, and the like. These data in Vclick_AU will be described in detail later. The server (e.g., numeral 201 in FIG. 39) preferably records Vclick_AUs in the order of time stamps so as to facilitate transmission.

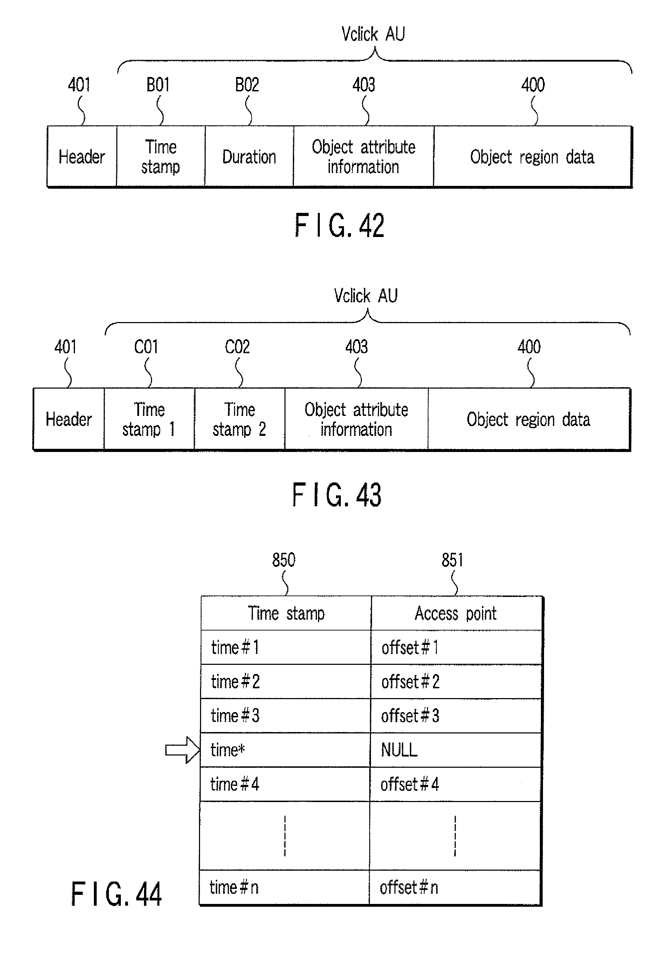

FIG. 42 is a view for explaining an example of the data structure of an access unit of object meta data according to another embodiment of the present invention. FIG. 42 shows an example of the data structure of Vclick_AU, which is different from FIG. 41. The difference from FIG. 41 is that data used to specify the lifetime of Vclick_AU is a combination of time stamp B01 and endurance or duration B02 in place of the time stamp alone. Time stamp B01 is the start time of the lifetime of Vclick_AU, and duration B02 is a duration from the start time to the end time of the lifetime of Vclick_AU. Specifically, "time_type" and "duration" are provided as the configuration of the duration time. Note that time_type is an ID used to specify that data means a duration, and duration is a duration. The duration indicates a duration using a predetermined unit (e.g., 1 msec, 0.1 sec, or the like).

An advantage offered when the duration is also described as data used to specify Vclick_AU lies in that the duration of Vclick_AU can be detected by checking only Vclick_AU to be processed. When valid Vclick_AUs with a given time stamp are to be found, it is checked without checking other Vclick_AU data if the Vclick_AU of interest is to be found. However, the data size increases by duration B02 compared to FIG. 41.

FIG. 43 is a view for explaining an example of the data structure of an access unit of object meta data according to still another embodiment of the present invention. FIG. 43 shows an example of the data structure of Vclick_AU, which is different from FIG. 42. In this example, as data for specifying the lifetime of Vclick_AU, time stamp C01 that specifies the start time of the lifetime of Vclick_AU and time stamp C02 that specifies the end time are used. The advantage offered upon using this data structure is the same as that upon using the data structure of FIG. 42.

FIG. 44 shows an example of the Vclick access table VCA. This table is prepared in advance, and is recorded in server 201. This table can also be stored in the Vclick information file. Reference numeral 850 denotes a time stamp sequence, which lists time stamps of the moving picture. Reference numeral 851 denotes an access point sequence, which lists offset values from the head of a Vclick stream in correspondence with the time stamps of the moving picture. If a value corresponding to the time stamp of the random access destination of the moving image is not stored in the Vclick access table VCA, an access point of a time stamp with a value close to that time stamp is referred to, and a transmission start location is sought while referring to time stamps in the Vclick stream VCS near that access point. Alternatively, the Vclick access table VCA is searched for a time stamp of a time before that of the random access destination of the moving image, and the Vclick stream VCS is transmitted from an access point corresponding to the time stamp.

The server 201 stores the Vclick access table VCA and uses it for convenience to search for Vclick data to be transmitted in response to random access from the client. However, the Vclick access table VCA stored in the server 201 may be downloaded to the client 200, which may search for a Vclick stream. Especially, when Vclick streams VCS are simultaneously downloaded from the server 210 to the client 200, Vclick access tables VCA are also simultaneously downloaded from the server 210 to the client 200.

On the other hand, a moving picture recording medium such as a DVD or the like which records Vclick streams VCS may be provided. In this case as well, it is effective for the client 200 to use the Vclick access table VCA so as to search for data to be used in response to random access of playback contents. In such case, the Vclick access tables VCA are recorded on the moving picture recording medium as in Vclick streams VCS, and the client 200 reads out and uses the Vclick access table VCA of interest from the moving picture recording medium onto its internal main memory or the like. Random playback of Vclick streams VCS, which is produced upon random playback of a moving picture or the like, is processed by meta data decoder 217.

In the Vclick access table VCA shown in FIG. 44, time stamp time is time information which has a time stamp format of a moving picture recorded on the moving picture recording medium. For example, when the moving picture is compressed by MPEG-2 upon recording, time has an MPEG-2 presentation time stamp (PTS) format. Furthermore, when the moving picture has a navigation structure of titles, program chains, and the like as in DVD, parameters (title number "TTN", video title set title number "VTS_TTN", title program chain number "TT_PGCN", part of title number "PTTN", and the like) that express them are included in the format of time.

Assume that some natural totally ordered relationship is defined for a set of time stamp values. For example, as for PTS, a natural ordered relationship as a time can be introduced. As for time stamps including DVD parameters, the ordered relationship can be introduced according to a natural playback order of the DVD. Each Vclick stream satisfies the following conditions:

i) Vclick_AUs in the Vclick stream VCS are arranged in ascending order of time stamp. At this time, the lifetime of each Vclick_AU is determined as follows: Let t be the time stamp value of a given AU. Time stamp values u of AUs after the given AU satisfy u >= t. Let t' be a minimum one of such "u"s, which satisfies u # t. A period which has time t as the start time and t' as the end time is defined as the lifetime of the given AU. If there is no AU which has time stamp value u that satisfies u > t after the given AU, the end time of the lifetime of the given AU matches the end time of the moving picture.

ii) The active time of each Vclick_AU corresponds to the time range of the object region described in the object region data included in that Vclick_AU.

Note that the following constraint associated with the active time for a Vclick stream VCS: The active time of Vclick_AU is included in the lifetime of that AU.

A Vclick stream which satisfies the above constraints i) and ii) has the following good properties: First, high-speed random access of the Vclick stream VCS can be made, as will be described later. Second, a buffer process upon playing back the Vclick stream VCS can be simplified. The buffer stores the Vclick stream VCS for respective Vclick_AUs, and erases AUs from those which have larger time stamps. If there are no two assumptions above, a large buffer and complicated buffer management are required so as to hold effective AUs on the buffer. The following description will be given under the assumption that the Vclick stream VCS satisfies the above two conditions i) and ii).

In the Vclick access table VCA shown in FIG. 44, access point offset indicates a position on a Vclick stream VCS. For example, the Vclick stream is a file, and offset indicates a file pointer value of that file. The relationship of access point offset, which forms a pair with time stamp time, is as follows:

i) A position indicated by offset is the head position of given Vclick_AU.
ii) A time stamp value of that AU is equal to or smaller than the value of time.
iii) A time stamp value of AU immediately before that AU is truly smaller than time.

In the Vclick access table VCA, "time"s may be arranged at arbitrary intervals but need not be arranged at equal intervals. However, they may be arranged at equal intervals in consideration of convenience for a search process and the like.

In the example of FIG. 44, a case wherein when a time stamp 850 is time*, a corresponding access point 851 is "NULL" is added. That is, FIG. 44 exemplifies the Vclick access point table VCA when the Null Pointer (one of file pointers fp) indicating "NULL" is used.

"NULL" in the access point 851 in FIG. 44 is a flag which means that "the active time of an AU in the Vclick stream VCS of interest has no intersection (or no relation) to a time range equal to or larger than time* and less than time#4". Assume that the moving image clock T supplied from the interface handler 207 to the meta data manager 210 in FIG. 39 satisfies:

$$\text{time*} <= T < \text{time\#4}$$

At this time, the meta data manager 210 searches the Vclick access table VCA in FIG. 44 for the "NULL" flag. When the "NULL" flag is obtained, the meta data manager 210 ends its operation or starts the next operation without loading any Vclick stream VCS.

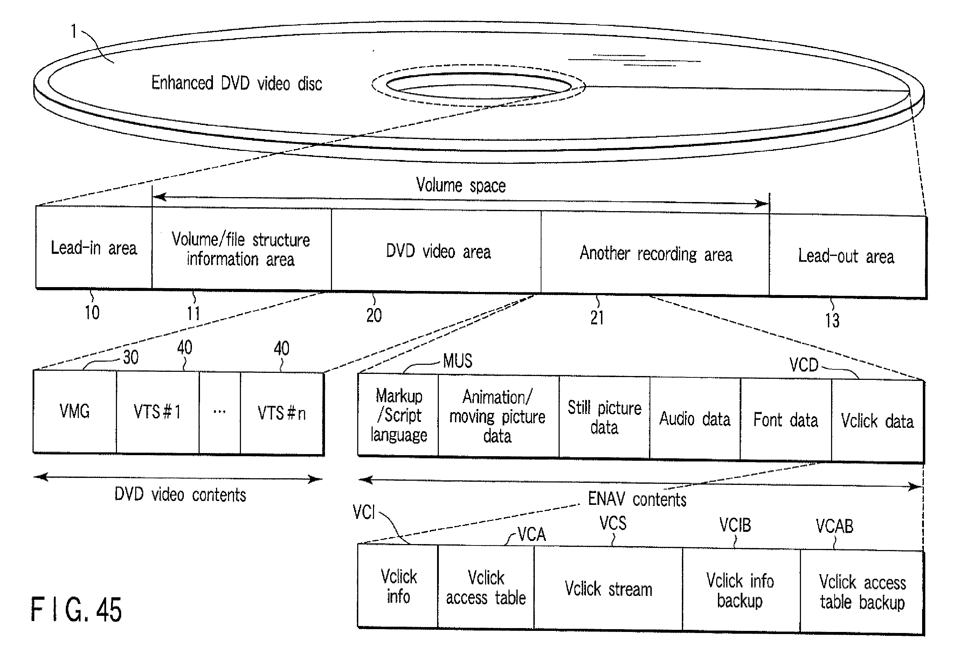

FIG. 45 is a view for explaining an example of the structure of an enhanced DVD video disc according to an embodiment of the present invention. FIG. 45 shows an example of the data structure when an enhanced DVD video disc is used as moving picture data recording medium 1. A DVD video area of the enhanced DVD video disc stores DVD video contents (having the MPEG2 program stream structure) having the same data structure as the DVD video standard. Furthermore, another recording area of the enhanced DVD video disc stores enhanced navigation (to be abbreviated as ENAV) contents which allow various playback processes of video contents. Note that said another recording area is also recognized by the DVD video standard.

A basic data structure of the DVD video disc will be described below. The recording area of the DVD video disc includes a lead-in area, volume space, and lead-out area in turn from its inner periphery. The volume space includes a volume/file structure information area and DVD video area (DVD-Video zone), and can also have another recording area (DVD other zone) as an option.

Volume/file structure information area 2 is assigned for the UDF (Universal Disk Format) bridge structure. The volume of the UDF bridge format is recognized according to ISO/IEC13346 Part 2. A space that recognizes this volume includes successive sectors, and starts from the first logical sector of the volume space in FIG. 45. First 16 logical sectors are reserved for system use specified by ISO9660. In order to assure compatibility to the conventional DVD video standard, the volume/file structure information area with such contents is required.

The DVD video area records management information called video manager VMG and one or more video contents called video title sets VTS (VTS#1 to VTS#n). The VMG is management information for all VTSs present in the DVD video area, and includes control data VMGI, VMG menu data VMGM_VOBS (option), and VMG backup data. Each VTS includes control data VTSI of that VTS, VTS menu data VTSM_VOBS (option), data VTSTT_VOBS of the contents (movie or the like) of that VTS (title), and VTSI backup data. To assure compatibility to the conventional DVD video standard, the DVD video area with such contents is also required.

A playback select menu or the like of each title (VTS#1 to VTS#n) is given in advance by a provider (the producer of a DVD video disc) using the VMG, and a playback chapter select menu, the playback order of recorded contents (cells), and the like in a specific title (e.g., VTS#1) are given in advance by the provider using the VTSI. Therefore, the viewer of the disc (the user of the DVD video player) can enjoy the recorded contents of that disc in accordance with menus of the VMG/VTSI prepared in advance by the provider and playback control information (program chain information PGCI) in the VTSI. However, with the DVD video standard, the viewer (user) cannot play back the contents (movie or music) of each VTS by a method different from the VMG/VTSI prepared by the provider.

The enhanced DVD video disc shown in FIG. 45 is prepared for a scheme that allows the user to play back the contents (movie or music) of each VTS by a method different from the VMG/VTSI prepared by the provider, and to play back while adding contents different from the VMG/VTSI prepared by the provider. ENAV contents included in this disc cannot be accessed by a DVD video player which is manufactured on the basis of the conventional DVD video standard (even if the ENAV contents can be accessed, their contents cannot be used). However, a DVD video player (e.g., a client 200 equipped with the Vclick engine 202 in FIG. 39) according to an embodiment of the present invention can access the ENAV contents, and can use their playback contents.

The ENAV contents include data such as audio data, still picture data, font/text data, moving picture data, animation data, Vclick data, and the like, and also an ENAV document (described in a Markup/Script language) as information for controlling playback of these data. This playback control information describes, using a Markup language or Script language, playback methods (display method, playback order, playback switch sequence, selection of data to be played back, and the like) of the ENAV contents (including audio, still picture, font/text, moving picture, animation, Vclick, and the like) and/or the DVD video contents. For example, Markup languages such as HTML (Hyper Text Markup Language)/XHTML (extensible Hyper Text Markup Language), SMIL (Synchronized Multimedia Integration Language), and the like, Script languages such as an ECMA (European Computer Manufacturers Association) script, JavaScript, and the like, and so forth, may be used in combination.

Since the contents of the enhanced DVD video disc in FIG. 45 except for the other recording area comply with the DVD video standard, video contents recorded on the DVD video area can be played back using an already prevalent DVD video player (i.e., this disc is compatible to the conventional DVD video disc). The ENAV contents recorded on the other recording area cannot be played back (or used) by the conventional DVD video player but can be played back and used by a DVD video player according to an embodiment of the present invention. Therefore, when the ENAV contents are played back using the DVD video player according to the embodiment of the present invention, the user can enjoy not only the contents of the VMG/VTSI prepared in advance by the provider but also a variety of video playback features.

Especially, as shown in FIG. 45, the ENAV contents include Vclick data VCD, which includes a Vclick information file (Vclick Info) VCI, Vclick access table VCA, Vclick stream VCS, Vclick information file backup (Vclick Info backup) VCIB, and Vclick access table backup VCAB.

The Vclick information file VCI is data indicating a portion of DVD video contents where a Vclick stream VCS is appended (e.g., to the entire title, the entire chapter, a part thereof, or the like of the DVD video contents). The Vclick access table VCA is assured for each Vclick stream VCS, and is used to access the Vclick stream. The Vclick stream VCS includes data such as location information of an object in a moving picture, an action description to be made upon clicking the object, and the like. The Vclick information file backup VCIB is a backup of the aforementioned Vclick information file VCI, and always has the same contents as the Vclick information file VCA.

In the example of FIG. 45, the Vclick data VCD is recorded on the enhanced DVD-Video disc. However, as described above, the Vclick data VCD is stored in the server 201 on the network in some cases. That is, the Vclick data VCD can be prepared inside/outside the disc. When the Vclick data VCD is prepared outside the disc, playback using the Vclick data VCD can be made even in contents playback of an old type disc (a video disc sold in the past or the like) that does not record any Vclick data VCD or in playback of contents that record TV broadcasting (when the Vclick data VCD are created in correspondence with these contents).

Furthermore, when the user creates an original disc using a video recordable medium (e.g., a DVD-R disc, DVD-RW disc, DVD-RAM disc, hard disc or the like) and a video recorder (e.g., a DVD-VR recorder, DVD-SR recorder, HD-DVD recorder, HDD recorder, or the like), if he or she records ENAV contents including the Vclick data VCD on this disc or prepares the Vclick data VCD on a data storage of a personal computer other than this disc and connects this personal computer and recorder, he or she can enjoy meta data playback in the same manner as in the DVD-ROM video + the ENAV player in FIG. 39.

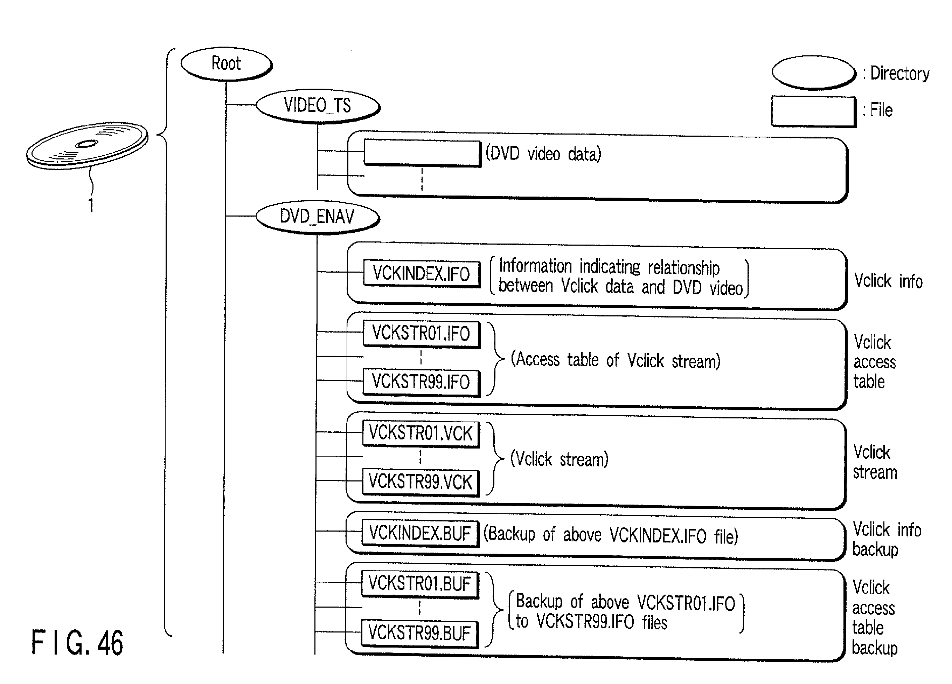

FIG. 46 is a view for explaining an example of the directory structure in the enhanced DVD video disc according to an embodiment of the present invention. Under a root directory, sub directories "HVDVD_TS" and "ADV_OBJ" are arranged. FIG. 46 shows an example of files which form the aforementioned Vclick information file VCI, Vclick access table VCA, Vclick stream VCS, Vclick information file backup VCIB, and Vclick access table backup VCAB. A file (VCKINDEX.IFO) that forms the Vclick information file is described in XML (extensible Markup Language), and describes a Vclick stream VCS and the location information (VTS number, title number, PGC number, or the like) of the DVD video contents where the Vclick stream VCS is appended. The Vclick access table VCA is made up of one or more files (VCKSTR01.IFO to VCKSTR99.IFO or arbitrary file names), and one access table file corresponds to one Vclick stream.

A Vclick stream file describes the relationship between location information (a relative byte size from the head of the file) of each Vclick stream VCS and time information (a time stamp of a corresponding moving picture or relative time information from the head of the file), and allows to search for a playback start position corresponding to a given time.

The Vclick stream VCS includes one or more files (VCKSTR01.VCK to VCKSTR99.VCK or arbitrary file names), and can be played back together with the appended DVD video contents with reference to the description of the aforementioned Vclick information file VCI. If there are a plurality of attributes (e.g., Japanese Vclick data VCD, English Vclick data VCD, and the like), different Vclick streams VCS, i.e., different files may be formed in correspondence with different attributes, or respective attributes may be multiplexed to form one Vclick stream VCS, i.e., one file.

In case of the former configuration (a plurality of Vclick streams VCS are formed in correspondence with different attributes), the buffer (numeral 209 in the example of FIG. 39) occupied size upon temporarily storing Vclick data in the playback apparatus (player) can be reduced. In case of the latter configuration (one Vclick stream VCS is formed to include different attributes), one file can be kept played back without switching files upon switching attributes, thus assuring high switching speed.

Note that each Vclick stream VCS and Vclick access table VCA can be associated using, e.g., their file names. In the aforementioned example, one Vclick access table VCA (VCKSTRXX.IFO; XX = 01 to 99) is assigned to one Vclick stream VCS (VCKSTRXX.VCK; XX = 01 to 99). Hence, by adopting the same file name except for extensions, association between the Vclick stream VCS and Vclick access table VCA can be identified.

In addition, the Vclick information file describes association between each Vclick stream VCS and Vclick access table VCA (describes them parallelly), thereby identifying association between the Vclick stream VCS and Vclick access table VCA.

The Vclick information file backup VCIB is formed of a VCKINDEX.BUP file, and has the same contents as the aforementioned Vclick information file VCI (VCKINDEX.IFO). If VCKINDEX.IFO cannot be loaded for some reason (due to scratches, stains, and the like on the disc), desired procedures can be made by loading this VCKINDEX.BUP instead. The Vclick access table backup VCAB is formed of VCKSTR01.BUP to VCKSTR99.BUP files, which have the same contents as the aforementioned Vclick access table VCA (VCKSTR01.IFO to VCKSTR99.IFO). One Vclick access table backup VCAB (VCKSTRXX.BUP; XX = 01 to 99) is assigned to one Vclick access table (VCKSTRXX.IFO; XX = 01 to 99), and the same file name is adopted except for extensions, thus identifying association between the Vclick access table VCA and Vclick access table backup VCAB. If VCKSTRXX.IFO cannot be loaded for some reason (due to scratches, stains, and the like on the disc), desired procedures can be made by loading this VCKSTRXX.BUP instead.

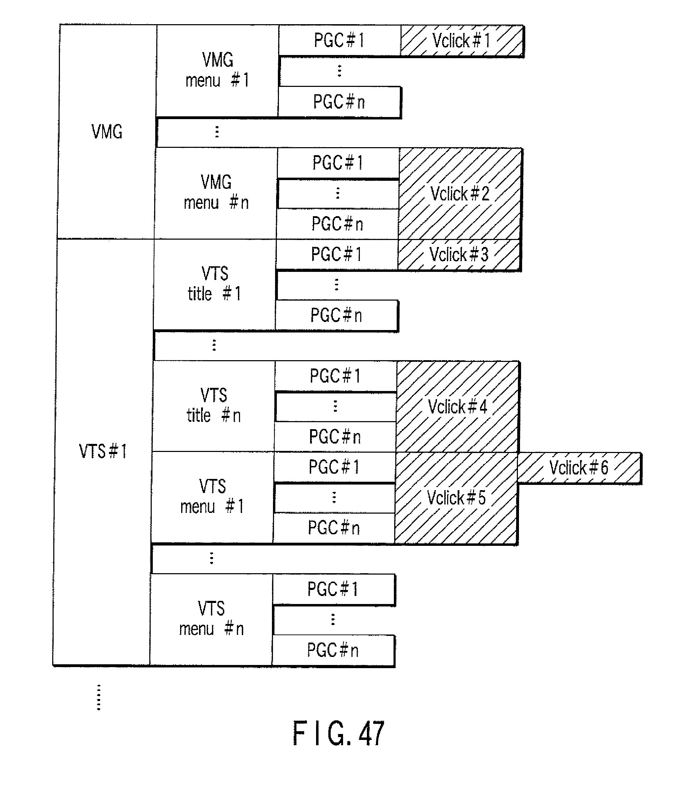

FIG. 47 shows the relationship between the Vclick streams VCS described in the above Vclick Info description example, and the DVD video contents. As can be seen from FIG. 47, the aforementioned fifth and sixth Vclick streams VCS (Vclick#5 and Vclick #6) are appended to the first PGC (PGC#1) in the first VTS menu domain (VTS menu #1) in the first VTS space (VTS#1). This represents that two Vclick streams VCS (Vclick#5 and Vclick #6) are appended to the DVD video contents, and can be switched by, e.g., the user or contents provider (contents author).

When the user switches these streams, a "Vclick switch button" used to switch the Vclick streams VCS is provided to a remote controller (not shown). With this button, the user can freely change two or more Vclick streams. This remote controller has a Vclick changeover button other than a remote controller key of a general DVD video player, and if this button is depressed, the player comes in a Vclick changeover mode. By clicking the Vclick changeover button or operating up/down/left/right cursor keys, it is possible to change the designations for the streams numbers of the Vclick streams in order. Alternatively, in this mode, it also possible to adopt the method of directly designating the stream numbers of the Vclick streams VCS by operating a numeric pad of a remote controller (not shown).

On the other hand, when the contents provider changes these streams, a Vclick switching command ("changeVclick()") is described in a Markup language, and this command is issued at a timing designated by the contents provider in the Markup language, thus freely changing two or more Vclick streams.

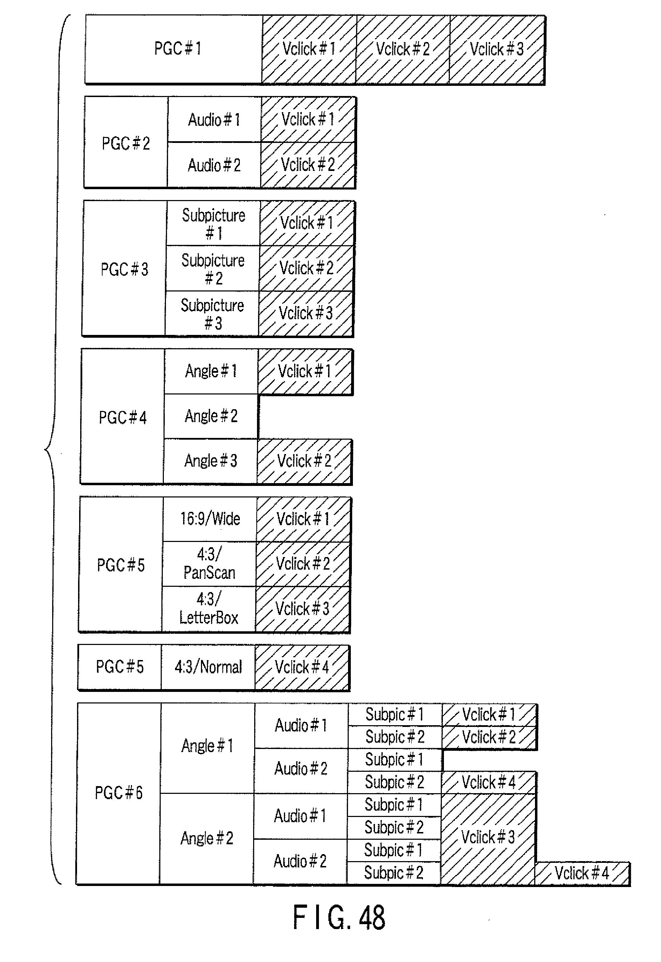

FIG. 48 is a view for explaining another configuration example of Vclick information according to an embodiment of the present invention. FIG. 48 shows the relationship between the PGC data of the DVD video contents and Vclick streams VCS to be appended to their attributes in association with the seven examples.

More specifically, streams Vclick#1 to Vclick#3 are assigned to whole PGC#1. This example can be configured as follows. That is, stream Vclick#1 is, e.g., an English page, stream Vclick#2 is, e.g., a Japanese page, and stream Vclick#3 is, e.g., a Chinese page, so that these streams can be appropriately switched and selected (the configuration that selects a stream of meta data in accordance with the PGC playback period of the video contents).

In PGC#2 of FIG. 48, stream Vclick#1 is assigned to its audio #1, and stream Vclick#2 is assigned to its audio #2. In PGC#3, stream Vclick#1 is assigned to its sub-picture #1 (sub-picture such as a caption or the like), stream Vclick#2 is assigned to its sub-picture #2, and stream Vclick#3 is assigned to its sub-picture #3. In PGC#4, stream Vclick#1 is assigned to its angle #1, no Vclick stream is assigned to angle #2 and stream Vclick#2 is assigned to its angle #3. In PGC#5, stream Vclick#1 is assigned in case of "wide" at the display aspect ratio 16 : 9, stream Vclick#2 is assigned in case of "pan scan" at the display aspect ratio 4 : 3, and stream Vclick#3 is assigned in case of "letter box" at the display aspect ratio 4 : 3. In PGC#6, stream Vclick#4 is assigned when the display aspect ratio is 4 : 3 as normal one.

In PGC#7 in FIG. 48, stream Vclick#1 (e.g., English page) is assigned to sub-picture #1 (e.g., English caption) which links to audio #1 (e.g., English audio) of angle #1, and stream Vclick#2 (e.g., Japanese page) is assigned to sub-picture #2 (e.g., Japanese caption) which links to audio #1 (e.g., English audio) of angle #1. Also, no Vclick stream is assigned to sub-picture #1 (English caption) that links to audio #2 (e.g., Japanese audio) of angle #1, and stream Vclick#4 (e.g., another Japanese page) is assigned to sub-picture #2 (Japanese caption) which links to audio #2 (Japanese audio) of angle #1. Furthermore, stream Vclick#3 (e.g., Chinese page) is assigned to sub-picture #1 (English caption) and sub-picture #2 (Japanese caption) which link to audio #1 (English audio) of angle #2, and stream Vclick#3 (e.g., Chinese page) is assigned to sub-picture #1 (English caption) and sub-picture #2 (Japanese caption) which link to audio #2 (Japanese audio) of angle #2. Of these streams, stream Vclick#4 (another Japanese page) is further assigned to sub-picture #2 (Japanese caption) which links to audio #2 (Japanese audio) of angle #2, in addition to stream Vclick#3 (Chinese page). For sub-picture #2 (Japanese caption) which links to audio #2 (Japanese audio) of angle #2, stream Vclick#3 (Chinese page) or Vclick#4 (another Japanese page) can be switched and selected.

When an object to be synchronously played back with Vclick streams is DVD-Video contents, Vclick streams can be switched for respective titles (VTS) of DVD-Video as a largest unit, and can be switched for respective parts-of-title (chapters) as a smaller unit. Also, Vclick streams can be switched for respective program chains (PGC) as a still smaller unit, for respective programs (PG) as a yet smaller unit, or for respective cells as a smallest unit.

When Vclick streams according to the embodiment of the present invention are applied to a recording/playback system such as a DVD-VR recorder, DVD-SR recorder, HD-DVD recorder, or the like, Vclick streams may be switched for respective user-defined PGC data (playlists) or respective entry points marked locally in programs that form PGC data.

The playback apparatus (enhanced DVD player) according to the embodiment of the present invention can sequentially change Vclick stream files to be appended in correspondence with the playback state of the DVD-Video contents by loading the Vclick information file VCI in advance or referring to that file as needed, prior to playback of the DVD-Video contents. In this manner, a high degree of freedom can be assured upon forming Vclick streams, and the load on authoring can be reduced.

By increasing the number of files (the number of streams) of unitary Vclick contents, and decreasing each file size, an area (the buffer 209 in the apparatus of FIG. 39) required for the playback apparatus to store Vclick streams VCS can be reduced.

By decreasing the number of files (i.e., forming one stream to include a plurality of Vclick data) although the file size increases, Vclick data can be switched smoothly when the playback state of the DVD-Video contents has changed (since the information size of buffered Vclick data is large).

Note that the configuration of FIG. 48 is not exclusive with respect to the configuration of FIG. 35. These configurations may be selectively combined.

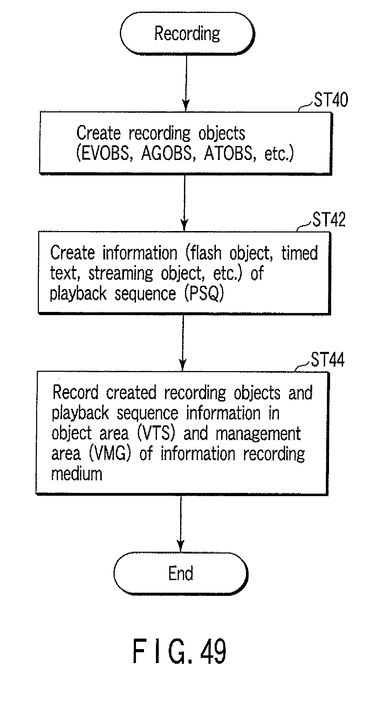

FIG. 49 is a flowchart illustrating an example of an information recording method using the information recording medium 1 shown in FIG. 1. First, an expanded video object (VTSTT_EVOBS) and an advanced object (VTSTT_AGOBS/VTSTT_ATOBS) are created as recording objects by a content provider or the like (step ST40). Then, information (flash object 351, timed text 354, streaming objects 355, etc.) as shown in FIG. 8 is created as information of playback sequence (PSQ) (step S42). After that, the created recording objects are recorded in the object area (video title set recording area 40), and the created playback sequence information is recorded in a management area (video manager recording area 30) (step ST44).

FIG. 50 shows a list of tags usable in the playback sequence (PSQ) according to the embodiment of the present invention. In this list, the left column indicates the names of the tags and the right column does the meanings thereof as follows.

<Name of Tag: Meaning of Tag>

Video_pbseq: Start of descriptions of playback sequence data.

vmg: VMG space of DVD video.

vmgm: VMG menu domain of DVD video.

fp: First play domain of DVD video.

vts: VTS space of DVD video.

vtsm: VTS menu domain of DVD video.

vts_tt: VTS title domain of DVD video.

idle: Used for displaying not a DVD video object but another object.

pgc: PGC of DVD video (except in the case of idle).

object: Used for invoking (playing back) object data such as a DVD video object.

version: Version number of playback sequence data.

update: URI information of alternate playback sequence data (Normally, alternate data is recorded in an external server, and it becomes effective when its number is lower than the version number of playback sequence data recorded in a disk).

region: Region code of disk (Normally, the playback sequence recorded in the external server has this tag, and the overwrite of the region code set in the disk in itself can be changed).

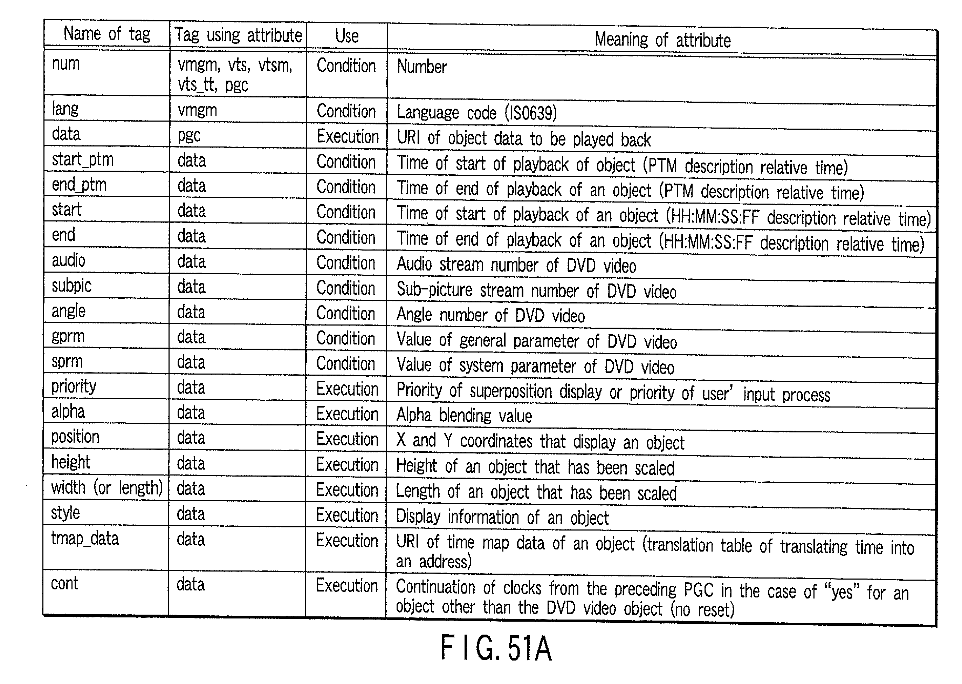

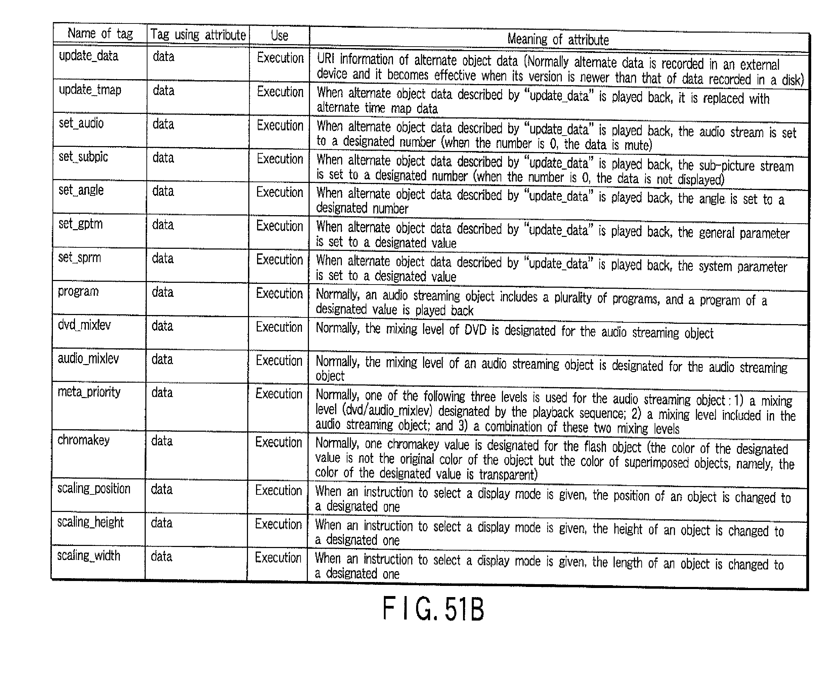

FIGS. 51A and 51B are lists of attributes usable in the playback sequence (PSQ) according to the embodiment of the present invention. In this list, the names of the attributes, the names of tags using the attributes, the use of the attributes, and the meanings of the attributes are described in sequence from the leftmost column. In particular, the use is classified into "condition" and "execution." When the attribute of the "condition" is satisfied, that of "execution" is played back. For example, the attributes of "condition" are "audio" and "angle" and those of "execution" are "data" and "set_subpic" in the following description.

<object data = "file://avdrom/adv_obj/flash.swf"audio = "1"angle = "2"set_subpic = "0"/>.

This description indicates that when the audio stream number is 1 and the angle number is 2, an object described by data is played back and the sub-picture stream number is set to 0 (or the object is not displayed). The following are specific examples of the list of attributes described above.

<Name of Attribute: Tag using Attribute: Use: Meaning of Attribute>

num: vmgm, vts, vtsm, vts_tt, pgc: Condition: Number

**[0249]** lang: vmgm: condition: Language code (ISO639)

data: pgc: execution: URI of object data to be played back

start_ptm: data: condition: Time of start of playback of object (PTM description relative time)

end_ptm data; condition: Time of end of playback of an object (PTM description relative time)

start: data: condition: Time of start of playback of an object (HH:MM:SS:FF description relative time)

end: data: condition: Time of end of playback of an object (HH:MM:SS:FF description relative time)

audio: data: condition: Audio stream number of DVD video

subpic: data: condition: Sub-picture stream number of DVD video

angle: data: condition: Angle number of DVD video gprm: data: condition: Value of general parameter of DVD video

sprm: data: condition: Value of system parameter of DVD video

priority: data: execution: Priority of superposition display or priority of user' input process

alpha: data: execution: Alpha blending value

position: data: execution: X and Y coordinates that display an object

height: data: execution: Height of an object that has been scaled

width (or length): data: execution: Length of an object that has been scaled

style: data: execution: Display information of an object

tmap_data: data: execution: URI of time map data of an object (translation table of translating time into an address)

cont: data: execution: Continuation of clocks from the preceding PGC in the case of "yes" for an object other than the DVD video object (no reset)

update_data: data: execution: URI information of alternate object data (Normally alternate data is recorded in an external device and it becomes effective when its version is newer than that of data recorded in a disk)

update_tmap: data: execution: When alternate object data described by "update_data" is played back, it is replaced with alternate time map data.

set_audio: data: execution: When alternate object data described by "update_data" is played back, the audio stream is set to a designated number (when the number is 0, the data is mute).

set_subpic: data: execution: When alternate object data described by "update_data" is played back, the sub-picture stream is set to a designated number (when the number is 0, the data is not displayed).

0 set_angle: data: execution: When alternate object data described by "update_data" is played back, the angle is set to a designated number.

set_gprm: data: execution: When alternate object data described by "update_data" is played back, the general parameter is set to a designated value.

set_sprm: data: execution: When alternate object data described by "update_data" is played back, the system parameter is set to a designated value.

program: data: execution: Normally, an audio streaming object includes a plurality of programs, and a program of a designated value is played back.

dvd_mixlev: data: execution: Normally, the mixing level of DVD is designated for the audio streaming object.

audio_mixlev: data: execution: Normally, the mixing level of an audio streaming object is designated for the audio streaming object.

meta_priority: data: execution: Normally, one of the following three levels is used for the audio streaming object: 1) a mixing level (dvd/audio_mixlev) designated by the playback sequence; 2) a mixing level included in the audio streaming object; and 3) a combination of these two mixing levels.

chromakey: data: execution: Normally, one chromakey value is designated for the flash object (the color of the designated value is not the original color of the object but the color of superimposed objects, namely, the color of the designated value is transparent).

scaling_position: data: execution: When an instruction to select a display mode is given, the position of an object is changed to a designated one.

scaling_height: data: execution: When an instruction to select a display mode is given, the height of an object is changed to a designated one.

scaling_width: data: execution: When an instruction to select a display mode is given, the length of an object is changed to a designated one.

As described above, according to various embodiments of the present invention, since a Flash object, which can display buttons with a still picture image, background audio, or small animation and allows highlight display at arbitrary positions to have arbitrary sizes on the screen, and a timed text object can be set in addition to the conventional video contents, the degree of freedom of the content provider can be improved, thus providing more colorful contents to the user.

Points of the embodiment of the present invention will be summarized below.

(1) Of objects stored in the disk, only minimum required objects (video, audio, and sub-picture in case of DVD ROM Video) are multiplexed using an MPEG program stream. Objects which can be superimposed later are recorded and stored on the disk as independent objects. Each independent object is superimposed as needed on an object obtained from the MPEG program stream by α blend (that provides transparency α (contrast corresponding to α%) to RGB mixing).

(2) With the concept of (1), a high-definition subtitle is implemented by a timed text object in addition to a (conventional, low-resolution) subtitle using a sub-picture object stored on the disk.

(3) With the concept of (1), colorful graphics such as a menu and the like can be implemented by a Flash object which can superimpose and highlight buttons on a video object stored in the disk by α blend.

(4) In addition to the concept of (1), a common application interface (API) that can control a program chain (PGC) is introduced to implement playback control of all objects stored in the disk.

(5) The playback sequence (PSQ) explained with reference to FIG. 8 and the like is present independently of DVD-Video. This PSQ has contents that can manage the playback timings of all objects other than DVD-Video, and can specify display layouts of all these objects. Since one PSQ can manage one or more VTSs, this invention can be practiced as long as one disk includes at least one PSQ (one disk may include a plurality of PSQs).

Note that the present invention is not limited to the aforementioned specific embodiments, but can be embodied by variously modifying constituent elements without departing from the scope of the invention when it is practiced. For example, the present invention can be applied not only to DVD-ROM Video that is currently available worldwide but also to recordable/reproducible DVD-VR (video recorder) whose demand has been increasing in recent years. Furthermore, the present invention can be applied to a reproduction system or a recording/reproduction system of next-generation HD-DVD which will spread in the near future.

As has been described in detail above, according to the present invention, an information recording medium and its playback apparatus which can realize colorful expressions and can form attractive contents can be provided.

**Claims**

1. An information recording medium (1) for use in playback information recorded thereon, **characterized by** comprising:

a data area (12) including a management area (30) storing management information and an object area (40) storing an object managed by the management information;
a file information area (11) which stores file information corresponding to a recording content of the data area;
the object area (40) storing a first object whose playback is managed in logical units as a program chain and a second object whose playback is managed separately from the first object; and

the management area (30) storing a playback sequence defining a playback condition of the second object.

2. The medium according to claim 1, **characterized in that** the second object includes a graphics object and a text object.

3. The medium according to claim 1, **characterized in that** the file information area (11) stores a control information file for the playback sequence, and the playback sequence includes data relating to playback timing, a playback position and a playback size of the second object.

4. The medium according to claim 1, **characterized in that** the playback sequence is a programmable playback sequence defining a playback condition of each of the first object and the second object.

5. The medium according to claim 1, **characterized in that** the playback sequence includes at least one of a timed text object using one of an outline font and a vector font, a streaming object having one of video and voice-associated information, and a flash object having navigation information and graphics information.

6. The medium according to claim 1, **characterized in that** the data area (12) includes moving picture meta data that is reproducible in accordance with a playback of video contents including the first object and the second object, and stores a stream that is made up of access units corresponding to data units that are processable independently of each other.

7. An information playback method, **characterized by** comprising:

playing back a playback sequence from an information recording medium (1) having a data area (12) including a management area (30) storing management information and an object area (40) storing an object managed by the management information, and a file information area (11) which stores file information corresponding to a recording content of the data area, the object area (40) storing a first object whose playback is managed in logical units as a program chain and a second object whose playback is managed separately from the first object, and the management area (30) storing a playback sequence defining a playback condition of the second object; and
playing back at least one of the first and second objects in accordance with the playback sequence.

8. The method according to claim 7, **characterized in that** the second object includes a graphics object and a text object.

9. The method according to claim 7, **characterized in that** the file information area (11) stores a control information file for the playback sequence, and the playback sequence includes data relating to playback timing, a playback position and a playback size of the second object.

10. The method according to claim 7, **characterized in that** the playback sequence is a programmable playback sequence defining a playback condition of each of the first object and the second object.

11. The method according to claim 7, **characterized in that** the playback sequence includes at least one of a timed text object using one of an outline font and a vector font, a streaming object having one of video and voice-associated information, and a flash object having navigation information and graphics information.

12. The method according to claim 7, **characterized in that** the data area (12) includes moving picture meta data that is reproducible in accordance with a playback of video contents including the first object and the second object, and stores a stream that is made up of access units corresponding to data units that are processable independently of each other.

13. An information recording method applied to an information recording medium (1) having a data area (12) including a management area (30) storing management information and an object area (40) storing an object managed by the management information, and a file information area (11) which stores file information corresponding to a recording content of the data area, the method **characterized by** comprising:

recording on the object area (40), a first object whose playback is managed in logical units as a program chain and a second object whose playback is managed separately from the first object; and

recording on the management area (30), a playback sequence defining a playback condition of the second object.

14. The method according to claim 13, **characterized in that** the second object includes a graphics object and a text object.

15. The method according to claim 13, **characterized in that** the file information area (11) stores a control information file for the playback sequence, and the playback sequence includes data relating to playback timing, a playback position and a playback size of the second object.

16. The method according to claim 13, **characterized in that** the playback sequence is a programmable playback sequence defining a playback condition of each of the first object and the second object.

17. The method according to claim 13, **characterized in that** the playback sequence includes at least one of a timed text object using one of an outline font and a vector font, a streaming object having one of video and voice-associated information, and a flash object having navigation information and graphics information.

18. The method according to claim 13, **characterized in that** the data area (12) includes moving picture meta data that is reproducible in accordance with a playback of video contents including the first object and the second object, and stores a stream that is made up of access units corresponding to data units that are processable independently of each other.

1

a — Disk-shaped information recording medium

b →

| ╭10 Lead-in area | ╭11 Volume/file structure information area | ╭12 Data area | ╭13 Lead-out area |
|---|---|---|---|

c →

| ╭20 Video data area | ╭21 Another video data recording area | ╭22 General computer information recording area |
|---|---|---|

d →

| ╭30 Video manager recording area (VMG) | ╭40 Video title set (#1) recording area (VTS#1) | ╭40 Video title set (#2) recording area (VTS#2) | ...... | ╭40 Video title set (#n) recording area (VTS#n) |
|---|---|---|---|---|

f ↘

e →

| Video manager information area (VMGI) | ~31 |
|---|---|
| Expanded video object area for menu (VMGM_EVOBS) | ~32 |
| Video manager information backup area (VMGI_BUP) | ~33 |
| Advanced function graphics object area for menu (VMGM_AGOBS) | ~34 |
| Playback sequence area (PSQ) | ~35 |

| 41~ | Video title set information area (VTSI) |
|---|---|
| 42~ | Expanded video object area for title (VTSTT_EVOBS) |
| 43~ | Video title set information backup area (VTSI_BUP) |
| 44~ | Advanced function graphics object area for title (VTSTT_AGOBS) |
| 45~ | High-definition text object area for title (VTSTT_ATOBS) |

# FIG. 1

◯ : Directory

▭ : File

Root — HVDVD_TS

**Menu group**
- HVI00001.IFO (Information for video manager)
- HVM00001.EVO
- HVM00002.EVO } (Expanded video object set for menu)
- HVM00003.EVO
- HVI00001.BUP (Backup of information for video manager)

**Title set #1 group**
- HVI00101.IFO (Information for title set #1 group)
- HVM00101.EVO
- HVM00102.EVO } (Expanded video object set for title set #1 group)
- HVI00101.BUP (Backup of information for title set #1 group)

**Title set #2 group**
- HVI00201.IFO (Information for title set #2 group)
...

Root — AVD_OBJ
- HVI00000.PSQ (Control information for playback sequence PSQ)
- HVM00001.AGO (Advanced function graphics object for menu)
- HVT00101.AGO (Advanced function graphics object for title set #1 group)
- HVT00101.ATO (High-definition text object for title set #1 group)

Disk-shaped information recording medium — 1

**FIG. 2**

Video manager information area
(VMG)                        30

| Video manager information area (VMGI) | 31 |
| Expanded video object area for menu (VMGM_EVOBS) | 32 |
| Video manager information backup area (VMGI_BUP) | 33 |
| Advanced function graphics object area for menu (VMGM_AGOBS) | 34 |
| Playback sequence area (PSQ) | 35 |

VMGI

| Video manager information management table (VMGI_MAT) | 310 |
| Title search pointer table (TT_SRPT) | 311 |
| Video manager menu PGCI unit table (VMGM_PGCI_UT) | 312 |
| Parental management information table (PTL_MAIT) | 313 |
| Video title set attribute information table (VTS_ATRT) | 314 |
| Text data manager (TXTDT_MG) | 315 |
| Video manager menu cell address table (VMGM_C_ADT) | 316 |
| Video manager menu expanded video object unit address map (VMGM_EVOBU_ADMAP) | 317 |

# FIG.3

Video title set recording area (VTS #n) 40

41 — Video title set information area (VTSI)

42 — Expanded video object area for title (VTSTT_EVOBS)

43 — Video title set information backup area (VTSI_BUP)

44 — Advanced function graphics object area for title (VTSTT_AGOBS)

45 — High-definition text object area for title (VTSTT_ATOBS)

VTSI

Video title set information management table (VTSI_MAT) — 410

Video title set PTT search pointer table (VTS_PTT_SRPT) — 411

Video title set program chain information table (VTS_PGCIT) — 412

Video title set time map table (VTS_TMAPT) — 413

Video title set cell address table (VTS_C_ADT) — 414

Video title set expanded video object unit address map (VTS_EVOBU_ADMAP) — 415

F I G. 4

EP 1 600 972 A1

F I G. 5

Video title set PGCI information table (VTS_PGCITI)

— 4121

VTS_PGCI search pointer #1 (VTS_PGCI_SRP #1) — 4122

VTS_PGCI search pointer #n (VTS_PGCI_SRP #n) — 4122

VTS_PGCI (VTS_PGCI) — 4123

VTS_PGCI (VTS_PGCI) — 4123

VTS_PGCIT

412 ~ Video title set program chain information table (VTS_PGCIT)

VTS_PGCITI

| VTS_PGCI_SRP_Ns | Number of VTS PGCI_SRPs |
| VTS_PGCI_EA | End address of VTS_PGCIT |

VTS_PGCI_SRP

| VTS_PGC_CAT | VTS_PGC category |
| VTS_PGCI_SA | Start address of VTS_PGCI |

PGC_PGMAP

| Program chain general information (PGC_GI) | | Entry cell number for program #1 (cell number = 1) | ~520 |
| Program chain command table (PGC_CMDT) | | Entry cell number for program #2 | ~520 |
| Program chain program map (PGC_PGMAP) | | ⋮ | |
| Cell playback information table (C_PBIT) | | Entry cell number for program #n | ~520 |
| Cell position information table (C_POSIT) | | | |

50 — Program chain general information (PGC_GI)

51 — Program chain command table (PGC_CMDT)

52 — Program chain program map (PGC_PGMAP)

53 — Cell playback information table (C_PBIT)

54 — Cell position information table (C_POSIT)

Entry cell number

| EN_CN | Entry cell number |
|---|---|

C_POSIT

| Cell position information #1 (C_POSI #1) | ~540 |
| Cell position information #2 (C_POSI #2) | ~540 |
| ⋮ | |
| Cell position information #n (C_POSI #n) | ~540 |

C_POSI

| C_EVOB_IDN | EVOB ID number of cell |
|---|---|
| C_IDN | Cell ID number of cell |

F I G. 6

EP 1 600 972 A1

37

PGCI

| | |
|---|---|
| 50 | Program chain general information (PGC_GI) |
| 51 | Program chain command table (PGC_CMDT) |
| 52 | Program chain program map (PGC_PGMAP) |
| 53 | Cell playback information table (C_PBIT) |
| 54 | Cell position information table (C_POSIT) |

C_PBIT

| | |
|---|---|
| Cell playback information #1 (C_PBI #1) | ~530 |
| Cell playback information #2 (C_PBI #2) | ~530 |
| ⋮ | |
| Cell playback information #n (C_PBI #n) | ~530 |

C_PBI

| C_CAT | Cell category |
|---|---|
| C_PBTM | Cell playback time |
| C_FEVOBU_SA | Start address of first EVOBU of cell |
| C_FILVU_EA | End address of first ILVU of cell |
| C_LEVOBU_SA | Start address of last EVOBU of cell |
| C_LEVOBU_EA | End address of last EVOBU of cell |
| C_CMD_SN | Cell command start number |
| C_CMD_C_Ns | Number of continuous cell commands |

FIG. 7

EP 1 600 972 A1

FIG.8

EP 1 600 972 A1

EP 1 600 972 A1

| | VMG Group | VTS Group #1 | VTS Group #2 | |
|---|---|---|---|---|
| Playback Sequence (PSQ) | | Playback Sequence | | ~35 |
| DVD-Video Objects | VMGI / VMGM_EVOBs | VMGI#1 / VTSTT_EVOBs | VMGI#2 / VTSTT_EVOBs | ~353 |
| Flash Objects | FLASHs | FLASHs | FLASHs | ~351 |
| Timed Text Objects | | TTXTs | TTXTs | ~354 |
| AV/Audio/Vclick Streaming Objects | | Streaming | Streaming | ~355 |

FIG. 9

FIG. 10

EP 1 600 972 A1

FIG. 11

EP 1 600 972 A1

Playback Sequence (PSQ) ⌐35

t

⌐3531

DVD-Video (PGC#1)

| t1 | t2 | t3 | t4 | t5 | t6 | t7 | t8 | t9 | t10 |

⌐351#1

Flash#1
for menu

⌐354#1

Timed Text#1
for English

⌐354#4

Timed Text#4
for Japanese

⌐351#2

Flash#2
for menu

⌐354#2

Timed Text#2
for English

⌐354#5

Timed Text#5
for Japanese

⌐351#3

Flash#3
for menu

⌐354#3

Timed Text#3
for English

⌐354#6

Timed Text#6
for Japanese

FIG.12

35

| Playback Sequence (PSQ) |
|---|

→ t

3531      3532

| DVD-Video (PGC#1) | DVD-Video (PGC#2) |
|---|---|

0                end of PGC#2

351#1           351#2

| Flash#1 | | Flash#1 |
|---|---|---|
| 3511   3512 | | 3511 |
| First page | 2nd page | First page |

User action

**FIG. 13**

35

| Playback Sequence (PSQ) |
|---|

→ t

3531      3532

| DVD-Video (PGC#1) | DVD-Video (PGC#2) |
|---|---|

0                end of PGC#2

351#1

| Flash#1 | |
|---|---|
| 3511         3512 | |
| First page | 2nd page |

User action

**FIG. 14**

**FIG.15**

DVD–Video mode
full–screen playback/display
of expanded video object

Playback/display of advanced function
graphics object

Playback/display of high–definition text object

FIG.16

Hot spot to windmill information 701

170A

Scaling

170B

AGO

ドンキホーテの風車

ラマンチャ地方の小高い丘に、ドンキホーテが巨人に見立てた風車が・・・

ATO

DVD-Video mode

Playback/display of advanced function graphics object, high-definition text object, and the like

F I G. 17

EP 1 600 972 A1

```
<?xml version= "1.0" ?>
<!DOCTYPE video_pbseq PUBLIC "-//DVD/DTD DVD-VIDEO 2.0//EN"
    "dtd/dvd-video-2.0-coutent.dtd" >
<video_pbseq>
<vmg>
  <vmgm num= "1" >
    <pgc num= "1" >                                                801
      <object data= "file://dvdrom:/adv_obj/flash1.swf" />
      //Append Flash object to PGC of VMG menu
    </pgc>
  </vmgm>
  <vmgm num= "n" >                                                 802
      <object data= "http://www.hddvd.com/adv_obj/commentary.ac3" />
      //Append audio streaming object to VMG menu
  </vmgm>
</vmg>
</video_pbseq>
<vts num= "1" >
  <vts_tt num= "1" >
    <pgc num= "1" >                                                803
      <object data= "http://www.hddvd.com/adv_obj/hotspot.vck" />
      //Append Vclick streaming object to PGC of VTS title
    </pgc>
  </vts_tt>
  <vts_tt num= "n" >
      <object data= "file://dvdrom:/adv_obj/index.xhtm" />         804
      //Append Markup language object to VTS title        805
      <object data= "file://dvdrom:/adv_obj/ttext.xml" />
      //Append timed text object to VTS title
  </vts_tt>
</vts>
</video_pbseq>
```

FIG.18

Graphics object 812

Full-screen DVD-Video contents 811

F I G. 19

Additional audio objects delivered from external server 824

DVD-Video contents 821

823

Audio provided by DVD-Video contents 822

F I G. 20

Comment provided by
Vclick object 834

Comment provided by
Vclick object 835

Vclick object 832

Markup Page 837

Aさん

Bさん

Vclick object 833

Bさんのサイトへようこそ！

Select B's object

DVD-Video contents 831

Reduced-scale DVD-Video contents 838

これは私のです

これはあなたのでは
ありません

Audio provided by DVD-Video contents 836

FIG. 21

EP 1 600 972 A1

F I G. 22

EP 1 600 972 A1

351

| | | PGC#1 | Flash |
|---|---|---|---|
| VMG | VMG menu #1 | ⋮ | |
| | | PGC#n | |
| | ⋮ | | 355A |
| | VMG menu #n | PGC#1 | |
| | | ⋮ | Audio streaming |
| | | PGC#n | |
| VTS#1 | VTS title #1 | PGC#1 | Vclick streaming |
| | | ⋮ | |
| | | PGC#n | 355C |
| | ⋮ | | |
| | VTS title #n | PGC#1 | Markup language / Timed text |
| | | ⋮ | |
| | | PGC#n | |

MUS          354

⋮

# F I G. 23

**FIG. 24**

```
<pgc num= "1">//Display graphics object
   <object data= "file://dvdrom:/adv_obj/flash1.swf" width= "800" height= "200" position= "20,20" start= "00:00:00:00"
      end= "00:05:00:00" priority= "+1" />
</pgc>
```
~851

```
<pgc num= "2">//Display graphics object (PTM description)
   <object data= "file://dvdrom:/adv_obj/flash1.swf" width= "800" height= "200" position= "20,20" start_ptm= "0"
      end_ptm= "27000000" priority= "+1" />
</pgc>
```
~852

```
<pgc num= "3">//Display reduced-scale DVD-Video and graphics object
   <object data= "dvd://hvdvd_ts/hvi00001.ifo" width= "600" height= "400" position= "200,400" priority= "0" alpha= "0" />
   <object data= "file://dvdrom:/adv_obj/flash2.swf" priority= "-1" alpha= "125" />
</pgc>
```
~853

```
<pgc num= "4">//Display graphics object for each audio stream
   <object data= "file://dvdrom:/adv_obj/flash3.swf" audio= "1" />
   <object data= "file://dvdrom:/adv_obj/flash4.swf" audio= "2" />
</pgc>
```
~854

```
<pgc num= "5">//Display graphics object for each subpicture stream
   <object data= "file://dvdrom:/adv_obj/flash5.swf" subpic= "1" />
   <object data= "file://dvdrom:/adv_obj/flash6.swf" subpic= "2" />
   <object data= "file://dvdrom:/adv_obj/flash7.swf" subpic= "3" />
</pgc>
```
~855

```
<pgc num= "6">//Display graphics object for each angle
   <object data= "file://dvdrom:/adv_obj/flash8.swf" angle= "1" />
   <object data= "file://dvdrom:/adv_obj/flash9.swf" angle= "3" />
</pgc>
```
~856

```
<pgc num= "7">//Display graphics object for each display mode
   <object data= "file://dvdrom:/adv_obj/flash10.swf" aspect= "16:9" display= "wide" />
   <object data= "file://dvdrom:/adv_obj/flash11.swf" aspect= "4:3" display= "lb" />
   <object data= "file://dvdrom:/adv_obj/flash12.swf" aspect= "4:3" display= "ps" />
</pgc>
```
~857

```
<pgc num= "8">//Display graphics object for each display mode
   <object data= "file://dvdrom:/adv_obj/flash13.swf" aspect= "4:3" display= "normal" />
</pgc>
```
~858

```
<pgc num= "9">//Definition of graphics object based on audio/subpicture stream and angle
   <object data= "file://dvdrom:/adv_obj/flash14.swf" audio= "1" subpic= "1" angle= "1" />
   <object data= "file://dvdrom:/adv_obj/flash15.swf" audio= "1" subpic= "2" angle= "1" />
   <object data= "file://dvdrom:/adv_obj/flash16.swf" angle= "2" />
   <object data= "file://dvdrom:/adv_obj/flash17.swf" audio= "2" subpic= "2" />
</pgc>
```
~859

Full-screen graphics object 861

864

映画メニュー

巻き戻し　停止　再生　早送り

チャプター-1　チャプター-2　チャプター-3

Menu button provided
by reduced-scale
DVD-Video contents
863

Reduced-scale
DVD-Video contents
862

FIG. 25

映画メニュー

巻き戻し　停止　再生　早送り

Graphics object in
Japanese 871

DVD-Video contents
872

これは私のです

これはあなたのでは
ありません

Japanese audio provided
by DVD-Video contents 873

FIG. 26

MOVIE Menu

FR   STOP   PLAY   FF

Graphics object in English 881

DVD-Video contents 882

This is mine.

This is not yours.

English audio provided by DVD-Video contents 883

F I G. 27

映画メニュー

巻き戻し　停止　再生　早送り

Graphics object in Japanese 891

これはあなたの ではありません。

DVD-Video contents 892

これは私のです。

Japanese subtitle provided by DVD-Video contents 893

F I G. 28

Graphics object in English 901

903

DVD-Video contents 902

English audio provided by DVD-Video contents 903

F I G. 29

Graphics object for angle #1 912

Normal angle playback of DVD-Video content 911

F I G. 30

Another angle playback
of DVD-Video contents 921

Graphics object for angle #3 922

F I G. 31

DVD-Video contents with
aspect ratio of 16 : 9 and
in wide display mode 931

Graphics object for aspect ratio of 16 : 9
and in wide display mode 932

F I G. 32

DVD-Video contents with aspect ratio of 4:3 and in letterbox display mode 941

映画メニュー

巻き戻し　停止　再生　早送り

Graphics object for aspect ratio of 4:3 and in letterbox display mode
(change display position, change transparency) 942

F I G. 33

DVD-Video contents with aspect ratio of 4:3 and in pan-scan display mode 951

Graphics object for aspect ratio of 4:3 and in pan-scan display mode (change display position, decrease font size) 952

映画
メニュー

巻き戻し　停止　再生　早送り

F I G. 34

| PGC#1 | | | Flash#1 | ～351#1 |
|---|---|---|---|---|

| PGC#2 | | | Flash#1 | ～351#1 |
|---|---|---|---|---|

| PGC#3 | | | Flash#2 | ～351#2 |
|---|---|---|---|---|

| PGC#4 | Audio#1 | Flash#3 | ～351#3 |
|---|---|---|---|
| | Audio#2 | Flash#4 | ～351#4 |

| PGC#5 | Subpicture #1 | Flash#5 | ～351#5 |
|---|---|---|---|
| | Subpicture #2 | Flash#6 | ～351#6 |
| | Subpicture #3 | Flash#7 | ～351#7 |

| PGC#6 | Angle#1 | Flash#8 | ～351#8 |
|---|---|---|---|
| | Angle#2 | | |
| | Angle#3 | Flash#9 | ～351#9 |

| PGC#7 | 16:9/Wide | Flash#10 | ～351#10 |
|---|---|---|---|
| | 4:3/ PanScan | Flash#11 | ～351#11 |
| | 4:3/ LetterBox | Flash#12 | ～351#12 |

| PGC#8 | 4:3/Normal | Flash#13 | ～351#13 |
|---|---|---|---|

351#14   351#15   351#17

| PGC#9 | Angle#1 | Audio#1 | Subpic#1 | Flash#14 |
|---|---|---|---|---|
| | | | Subpic#2 | Flash#15 |
| | | Audio#2 | Subpic#1 | |
| | | | Subpic#2 | Flash#17 |
| | Angle#2 | Audio#1 | Subpic#1 | |
| | | | Subpic#2 | Flash#16 |
| | | Audio#2 | Subpic#1 | |
| | | | Subpic#2 | Flash#17 |

～351#13
～351#17

# FIG. 35

Startup
(playback instruction)

ST10
Load playback sequence and DVD-Video navigation

ST12
Extract required object based on playback sequence or information designated by playback sequence

ST14
Load object extracted from disk or server into buffer

ST16
NO — Buffer full ?

YES

ST18
Play back DVD-Video object based on DVD-Video navigation

ST20
Acquire DVD-Video playback information

ST22
Extract corresponding object based on playback sequence

ST24
Is corresponding object present in buffer ? — NO

YES

ST26
Delete unnecessary data from buffer

ST28
Load required object into buffer

Synchronous playback

=Load priority example=
• Load streams from those with smaller PGC numbers;
• Load streams with language set in player in preference to those with other languages;
• Load streams recorded on disk in preference to those at other locations;
• Load streams in order described in playback sequence or information designated by playback sequence; etc.

F I G. 36

Movie Menu

963 963 963

Chap1 Chap2 Chap3

961

963 Chap4

964

962

963 Chap5

FIG. 37

Movie Menu

963

Chap1 Chap3

964

962 Chap2

961

Chap4 Chap5

963

FIG. 38

EP 1 600 972 A1

**FIG. 39**

Client 200

Moving picture playback engine 203

Vclick engine 202

Video/audio/text

AV decoder 206
- Moving picture
- Audio
- Sub-picture

Media decoder 217
- Meta data
- Audio
- Still picture
- Text/font
- Animation/moving picture

Video/audio/text

AV renderer (Video output control/audio output control) 218

Media control

Video/audio

Layout manager 215

Script 216

Layout control

Script

AV output control

Script interpreter 212

Parser 214

Layout information

Property buffer
Moving picture clock (copy)

Access table parser
Information file parser

207

Script

Meta data/audio/still picture/font/moving picture/animation

Moving picture playback controller 205

Moving picture clock 204

Control signal

Vclick system clock

Buffer manager 211

209

Buffer

HTML etc.

Video/audio/Sub-picture data D1

Interface handler

Meta data manager 210

Media data M2

Control
Status
Trigger

Disc control

Disc device manager 213

User trigger

User interface 240

Network control

Network manager 208

Media data M1

Disc device 231

Disc device 230

Network manager 222

Server 220

Meta data recording medium 219

201

221

62

Y

300

X

T

| AU#1 | AU#2 | AU#3 | AU#4 | AU#5 |
|------|------|------|------|------|

301  302  303  304  305

F I G. 40

Vclick AU

401  402  403  400

| Header | Time stamp | Object attribute information | Object region data |
|--------|-----------|-----------------------------|--------------------|

F I G. 41

Vclick AU

| 401 | B01 | B02 | 403 | 400 |
|---|---|---|---|---|
| Header | Time stamp | Duration | Object attribute information | Object region data |

F I G. 42

Vclick AU

| 401 | C01 | C02 | 403 | 400 |
|---|---|---|---|---|
| Header | Time stamp 1 | Time stamp 2 | Object attribute information | Object region data |

F I G. 43

| 850 Time stamp | 851 Access point |
|---|---|
| time # 1 | offset # 1 |
| time # 2 | offset # 2 |
| time # 3 | offset # 3 |
| time* | NULL |
| time # 4 | offset # 4 |
| ⋮ | ⋮ |
| time # n | offset # n |

F I G. 44

Enhanced DVD video disc

1

Volume space

| Lead-in area | Volume/file structure information area | DVD video area | Another recording area | Lead-out area |

10   11   20   21   13

MUS   VCD

| VMG | VTS#1 | ... | VTS#n |

30   40   40

| Markup /Script language | Animation/ moving picture data | Still picture data | Audio data | Font data | Vclick data |

DVD video contents

ENAV contents

VCI   VCA   VCS   VCIB   VCAB

| Vclick info | Vclick access table | Vclick stream | Vclick info backup | Vclick access table backup |

F I G. 45

EP 1 600 972 A1

EP 1 600 972 A1

FIG. 46

Root

VIDEO_TS

(DVD video data)

DVD_ENAV

| VCKINDEX.IFO | Information indicating relationship between Vclick data and DVD video | Vclick info |

| VCKSTR01.IFO | | |
| VCKSTR99.IFO | (Access table of Vclick stream) | Vclick access table |

| VCKSTR01.VCK | | |
| VCKSTR99.VCK | (Vclick stream) | Vclick stream |

| VCKINDEX.BUF | (Backup of above VCKINDEX.IFO file) | Vclick info backup |

| VCKSTR01.BUF | | |
| VCKSTR99.BUF | Backup of above VCKSTR01.IFO to VCKSTR99.IFO files | Vclick access table backup |

: Directory

: File

FIG. 47

| PGC#1 | Vclick#1 | Vclick#2 | Vclick#3 |

| PGC#2 | Audio#1 | Vclick#1 |
| | Audio#2 | Vclick#2 |

| PGC#3 | Subpicture #1 | Vclick#1 |
| | Subpicture #2 | Vclick#2 |
| | Subpicture #3 | Vclick#3 |

| PGC#4 | Angle#1 | Vclick#1 |
| | Angle#2 | |
| | Angle#3 | Vclick#2 |

| PGC#5 | 16:9/Wide | Vclick#1 |
| | 4:3/ PanScan | Vclick#2 |
| | 4:3/ LetterBox | Vclick#3 |

| PGC#5 | 4:3/Normal | Vclick#4 |

| PGC#6 | Angle#1 | Audio#1 | Subpic#1 | Vclick#1 |
| | | | Subpic#2 | Vclick#2 |
| | | Audio#2 | Subpic#1 | |
| | | | Subpic#2 | Vclick#4 |
| | Angle#2 | Audio#1 | Subpic#1 | Vclick#3 |
| | | | Subpic#2 | |
| | | Audio#2 | Subpic#1 | |
| | | | Subpic#2 | Vclick#4 |

F I G. 48

Recording

ST40
Create recording objects
(EVOBS, AGOBS, ATOBS, etc.)

ST42
Create information (flash object, timed
text, streaming object, etc.) of
playback sequence (PSQ)

ST44
Record created recording objects and
playback sequence information in
object area (VTS) and management
area (VMG) of information recording
medium

End

F I G. 49

| Name of Tag | Meaning of Tag |
|---|---|
| video_pbseq | Start of descriptions of playback sequence data |
| vmg | VMG space of DVD video |
| vmgm | VMG menu domain of DVD video |
| fp | First play domain of DVD video |
| vts | VTS space of DVD video |
| vtsm | VTS menu domain of DVD video |
| vts_tt | VTS title domain of DVD video |
| idle | Used for displaying not a DVD video object but another object |
| pgc | PGC of DVD video (except in the case of idle) |
| object | Used for invoking (playing back) object data such as a DVD video object |
| version | Version number of playback sequence data |
| update | URI information of alternate playback sequence data (Normally, alternate data is recorded in an external server, and it becomes effective when its number is lower than the version number of playback sequence data recorded in a disk) |
| region | Region code of disk (Normally, the playback sequence recorded in the external server has this tag, and the overwrite of the region code set in the disk in itself can be changed) |

F I G. 50

| Name of tag | Tag using attribute | Use | Meaning of attribute |
|---|---|---|---|
| num | vmgm, vts, vtsm, vts_tt, pgc | Condition | Number |
| lang | vmgm | Condition | Language code (ISO639) |
| data | pgc | Execution | URI of object data to be played back |
| start_ptm | data | Condition | Time of start of playback of object (PTM description relative time) |
| end_ptm | data | Condition | Time of end of playback of an object (PTM description relative time) |
| start | data | Condition | Time of start of playback of an object (HH:MM:SS:FF description relative time) |
| end | data | Condition | Time of end of playback of an object (HH:MM:SS:FF description relative time) |
| audio | data | Condition | Audio stream number of DVD video |
| subpic | data | Condition | Sub-picture stream number of DVD video |
| angle | data | Condition | Angle number of DVD video |
| gprm | data | Condition | Value of general parameter of DVD video |
| sprm | data | Condition | Value of system parameter of DVD video |
| priority | data | Execution | Priority of superposition display or priority of user' input process |
| alpha | data | Execution | Alpha blending value |
| position | data | Execution | X and Y coordinates that display an object |
| height | data | Execution | Height of an object that has been scaled |
| width (or length) | data | Execution | Length of an object that has been scaled |
| style | data | Execution | Display information of an object |
| tmap_data | data | Execution | URI of time map data of an object (translation table of translating time into an address) |
| cont | data | Execution | Continuation of clocks from the preceding PGC in the case of "yes" for an object other than the DVD video object (no reset) |

FIG. 51A

| Name of tag | Tag using attribute | Use | Meaning of attribute |
|---|---|---|---|
| update_data | data | Execution | URI information of alternate object data (Normally alternate data is recorded in an external device and it becomes effective when its version is newer than that of data recorded in a disk) |
| update_tmap | data | Execution | When alternate object data described by "update_data" is played back, it is replaced with alternate time map data |
| set_audio | data | Execution | When alternate object data described by "update_data" is played back, the audio stream is set to a designated number (when the number is 0, the data is mute) |
| set_subpic | data | Execution | When alternate object data described by "update_data" is played back, the sub-picture stream is set to a designated number (when the number is 0, the data is not displayed) |
| set_angle | data | Execution | When alternate object data described by "update_data" is played back, the angle is set to a designated number |
| set_gptm | data | Execution | When alternate object data described by "update_data" is played back, the general parameter is set to a designated value |
| set_sprm | data | Execution | When alternate object data described by "update_data" is played back, the system parameter is set to a designated value |
| program | data | Execution | Normally, an audio streaming object includes a plurality of programs, and a program of a designated value is played back |
| dvd_mixlev | data | Execution | Normally, the mixing level of DVD is designated for the audio streaming object |
| audio_mixlev | data | Execution | Normally, the mixing level of an audio streaming object is designated for the audio streaming object |
| meta_priority | data | Execution | Normally, one of the following three levels is used for the audio streaming object : 1) a mixing level (dvd/audio_mixlev) designated by the playback sequence; 2) a mixing level included in the audio streaming object; and 3) a combination of these two mixing levels |
| chromakey | data | Execution | Normally, one chromakey value is designated for the flash object (the color of the designated value is not the original color of the object but the color of superimposed objects, namely, the color of the designated value is transparent) |
| scaling_position | data | Execution | When an instruction to select a display mode is given, the position of an object is changed to a designated one |
| scaling_height | data | Execution | When an instruction to select a display mode is given, the height of an object is changed to a designated one |
| scaling_width | data | Execution | When an instruction to select a display mode is given, the length of an object is changed to a designated one |

# FIG. 51B

**European Patent Office**

## PARTIAL EUROPEAN SEARCH REPORT

Application Number

which under Rule 45 of the European Patent Convention shall be considered, for the purposes of subsequent proceedings, as the European search report

EP 05 10 4096

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 583 099 A (KABUSHIKI KAISHA TOSHIBA) 5 October 2005 (2005-10-05) * the whole document * ----- | 1-18 | G11B27/10 |
| X | EP 1 357 749 A (KABUSHIKI KAISHA TOSHIBA) 29 October 2003 (2003-10-29) * paragraphs [0025] - [0031], [0051] * ----- | 1-18 | |

TECHNICAL FIELDS SEARCHED (Int.Cl.7)

G11B
H04N
G06F

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 6 October 2005 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

```
Claim(s) searched incompletely:
      1-18

Reason for the limitation of the search:

According to the independent claims, an essential feature of the
invention is that the recording medium contains "a first object whose
playback is managed in logical units as a program chain". A definition or
a reference to a definition of a "program chain" is lacking in the
present application. In the field of video recording, "program chains"
are known only in the context of DVD-Video. DVD-Video is defined in the
DVD Specification for Read-only Disc, Part 3: Video Specifications (see
http://www.dvdfllc.co.jp/bookcon.pdf), which presumably also defines the
concept of a "program chain". Hence, in order to carry out the invention,
the skilled person needs to know the content of the DVD Specifications.

However, this DVD Specification is not public in the sense of Art. 54(2)
EPC, because a Non-disclosure agreement has to be signed in order to
obtain a copy. A second reason why this DVD Specification is not public
is that not all interested parties have the opportunity of gaining
knowledge of its content, because at least the European Patent Office
(and possibly other interested parties), although in principle willing to
sign the Non-disclosure agreement, was not allowed a copy of the DVD
Specification.

Therefore, the invention is insufficiently disclosed, contrary to Art. 83
EPC.

Hence, it is not meaningful to carry out a complete search. According to
the description, page 1, the invention is aimed at improving DVD-Video
discs in terms of providing more colorful menus, improvement of
interactiveness, and the like. The search has been restricted to those
documents that address the same technical problem. It is noted that the
relevance of the documents cited in this Search Report for the assessment
of novelty and inventive step is limited in view of Guidelines C-IV,
7.3a, in that these documents do not provide an enabling disclosure of
such an improved DVD-Video disc, either.
```

**ANNEX TO THE EUROPEAN SEARCH REPORT
ON EUROPEAN PATENT APPLICATION NO.**

EP 05 10 4096

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2005

| Patent document cited in search report | | Publication date | Patent family member(s) | | Publication date |
|---|---|---|---|---|---|
| EP 1583099 | A | 05-10-2005 | NONE | | |
| EP 1357749 | A | 29-10-2003 | CN | 1441598 A | 10-09-2003 |
| | | | DE | 60301225 D1 | 15-09-2005 |
| | | | JP | 2003249057 A | 05-09-2003 |
| | | | US | 2003161615 A1 | 28-08-2003 |

EPO FORM P0459

For more details about this annex : see Official Journal of the European Patent Office, No. 12/82